(19) Europäisches Patentamt
European Patent Office
Office européen des brevets

(11) **EP 1 806 931 A2**

(12) **EUROPEAN PATENT APPLICATION**

(43) Date of publication:
**11.07.2007 Bulletin 2007/28**

(51) Int Cl.:
***H04N 7/26*** (2006.01)

(21) Application number: **07250017.6**

(22) Date of filing: **04.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **05.01.2006 GB 0600141**

(71) Applicant: **British Broadcasting Corporation London W1A 1AA (GB)**

(72) Inventor: **Borer, Timothy John Smallfield Surrey RH6 9RA (GB)**

(74) Representative: **Sackin, Robert Reddie & Grose 16 Theobalds Road London WC1X 8PL (GB)**

(54) **Scalable video coding**

(57) An encoder (500) for encoding a signal carrying a representation of an image, the encoder (500) comprising a first encoder (504) for encoding a signal carrying a representation of an image at a first quality level; and a second encoder (506) for encoding a signal carrying a representation of the image at a second quality level at greater quality than the first quality level. The encoder (500) also comprises a mixer (346) for mixing a factor of a signal carrying a representation of a prediction of the image at the first quality level and a factor of a signal carrying a representation of a prediction of the image at the second quality level to produce a mixed signal. The encoder (500) is arranged such that: the second encoder (506) encodes the signal carrying a representation of the image at a second quality level based on the mixed signal; and the factors are selected based on a measure of noise introduced by the first encoder (504) and the second encoder (506) when producing the predictions.

A corresponding decoder and methods of decoding and encoding are also described.

FIGURE 3

EP 1 806 931 A2

**Description**

**BACKGROUND OF THE INVENTION**

The present invention relates to an encoder, a decoder, a method of encoding and a method of decoding.

Scalable video coding is, potentially, a core technology for delivering new broadcast services. Hitherto it has proved difficult to implement effectively. We have appreciated that the use of wavelets (wavelet transforms) has the potential to overcome the problems that have previously dogged scalable video coding and lead to its widespread adoption.

An effective form of scalable video coding could benefit, amongst other things, the delivery of HDTV (high definition television), delivery by the Internet (IPTV), distribution of video over home wireless links, the delivery of TV to mobile platforms, the development of new more rugged and efficient broadcasting systems and video production.

This specification assumes basic familiarity with video compression, wavelets and scalable coding. There are numerous tutorials available on the world wide web on all these subjects, for example:

[1] P.N. Tudor. 1995. MPEG-2 Video Compression, IEE Electronics & Communications Engineering Journal, December 1995, pp. 257-264. Also available at http://www.bbc.co.uk/rd/pubs/papers/paper_14/paper_14.shtml

[2] Dirac Video Compression: http://dirac.sourceforge.net, BBC R&D Tech Notes Numbers 2073, 2193, 2242, 2260, 2307, 2341, 2407, 2498, 2512, 2639, 2644, 2681, 2682, 2736, 2737, 2738 & White Paper 112, http://www.ebu.ch/en/technical/trev/trev_303-borer.pdf

[3] MPEG Press Release, January 2005. ISO/IEC JTC 1/SC 29/WG 11 N6874. http://isotc.iso.org/livelink/livelink/fetch/2000/2489/186491/187238/3165287/S C29WG11 PressRelease21.pdf?nodeid=3791913&vernum=0

[4] Introduction to SVC Extension of Advanced Video Coding, July 2005. ISO/IEC JTC1/SC29/WG11 N7315. http://www.chiariglione.org/mpeg/technologies/mp04-svc/

[5] MPEG SVC: Why a new video coding standard? Edouard Francois, Jerome Vieron, Guillaume, Broadband Europe, Brugge Belgium 10-12 December 2004. https://medicongress.be/UploadBroad/ Session%2010/Paper%2010-02.pdf (paper) & https://medicongress.be/UploadBroad/Session%2010/Presentation%2010-02.pdf (Slides)

[6] MCTF And Scalability Extension Of H.264/AVC, Heiko Schwarz, Detlev Marpe, and Thomas Wiegand. Picture Coding Symposium 2004, 15-17 December 2004, San Francisco, CA, USA. http://www.ece.ucdavis.edu/PCS2004/pdf/ss_email57_paper3_of_spec_ses sion_III.pdf

These references are all incorporated herein by reference.

On the subject of MPEG 2 (a standard developed by MPEG, Moving Picture Experts Group) and scalable video coding, particularly recommended is P. N. Tudor's paper reference [1]. Reference is made to the Dirac video codec (reference [2]) as an example of a practical wavelet based codec. MPEG/ITU -4 are working on standardisation activity focused on scalable video coding (SVC). Their work is introduced in references [3, 4, 5 and 6].

Scalable video coding splits a compressed video signal into two parts, a "base" layer and an "enhancement" layer. The base layer can be decoded on its own to produce a basic picture. If the enhancement layer is decoded as well it can be added to the basic picture to produce an improved picture. There are different sorts of scalability including spatial, temporal and SNR (signal to noise ratio) scalability. Spatial scalability is where the enhanced picture has higher resolution. Temporal scalability is where the enhanced picture has a higher frame rate to give improved motion rendition. SNR scalability is where the enhanced picture has an improved SNR. This specification deals primarily with spatial scalability and a little on SNR scalability.

The key feature of a successful scalable coding scheme is that the sum of the data rates for the base and enhancement layers should be little more than the data rate required for coding the enhanced image directly. Hitherto this has been difficult to achieve for spatial scalability.

Scalability can be generalised by iteration. The lower level can be further decomposed into a base layer and an enhancement layer yielding three level scalability. Similarly, temporal and SNR scalability can be combined to provide a flexible decomposition of the original signal into a number of parts with different spatial and temporal resolutions and different quality (SNR). This specification mostly discusses two level decomposition but it should be understood that this could easily be extended to multiple layers.

As to broadcasting HDTV, on some platforms such as satellite and cable it is possible, other details permitting, simply to start broadcasting such services. However, DTT (Digital Terrestrial TV) presents a particular challenge because it has no spare capacity and, to date, there is no satisfactory way of finding the additional data capacity required to broadcast HDTV. By using a standard-definition broadcast, which would be required for compatibility, as a base layer we could significantly reduce the bandwidth required to simulcast standard definition and HDTV. It would be realistic to anticipate that HDTV could be broadcast using a 4Mbit/s, MPEG 2 compatible, base layer plus a 6Mbit/s enhancement layer. How this might be achieved is described in detail below. Scalable video coding would benefit Internet distribution of video. Bandwidths of channels vary widely between users depending on, for example, their service, the time of day, contention ratio. At the server end, data capacity is limited, particularly for major news events. This is currently dealt with by switching between video streams with various data rates. This is difficult because it requires complexity in the encoder, and an intimate connection between streaming server and encoder, which reinforces proprietary lock in.

Using scalable video coding the Internet could deliver a hierarchy of layers of video quality. That is, the enhanced layer of a first scalable coding scheme could form the base layer for a second scheme. The lowest resolution level could be sent all the time with progressively more layers being added as bandwidth permits. If desired Quality of Service could be applied to lower levels but not higher levels. The use of scalable (layered) video coding would be facilitated by the development of new streaming protocols.

Scalable video coding might particularly benefit the use of wireless networks in the user's home. IP over wireless links have significantly different characteristics than over wire networks. So, for wired connections, it is even more important to be able to adapt the data rate to network conditions. Reference [5] mentions other advantages.

For both wired and wireless connections, an adaptive streaming protocol, based on scalable coding, can be "network friendly" in a way that is impossible with a non-scalable codec.

Scalable video coding might be useful for mobile TV platforms in several ways. Some players might only have a low resolution screen. Such players need only decode the base layer. This would save considerable processing power and allow mobile TV on cheaper, low performance, low power devices. A second advantage would accrue if the broadcast of the base layer were more rugged than that of the enhancement layer. The viewer could then be guaranteed to receive a base layer signal, which might be enhanced in regions of good signal reception.

Scalable coding may be needed to exploit the full potential of new advanced broadcast systems, particularly an improved Digital Terrestrial Television format, perhaps using MIMO (multiple input multiple output) communications. New broadcast systems might be possible that provided robust reception for part of the data plus extended data rate when a strong signal was available. A possible application of scalable coding would be to send the base layer over the robust channel and the enhancement layer over the less robust channel.

It may be possible to produce broadcast systems in which part of the data rate could be received by existing receivers (backwards compatibility) with greater capacity available to more advanced receivers. If the base layer were compatible with existing STBs (set top boxes), for example it was apparently coded as MPEG 2, it could be sent over the compatible channel. An enhancement layer could be sent via the advanced channel available to newer receivers. There would then be a broadcast system compatible with today's Digital Terrestrial TV, which, nevertheless, could be upgraded to HDTV by using more advanced set top boxes.

Scalable coding could also benefit professional TV production. The base layer could be used as a low resolution proxy for the for the full video, simplifying searching browsing and editing. For further details, see reference [5].

MPEG is currently working on scalable coding reference [6]. Their work focuses on temporal scalability using MCTF (Motion Compensated Temporal Filitering) and SNR scalability. The MPEG scenario appears to have some restrictions, such as dyadic decomposition, that are avoided by embodiments of the approach presented here. Embodiments of the approach herein allow a flexible split between the bit rate of the base and enhancement layers and allow layers with different aspect ratios. Embodiments of the invention are also a simple extension to a wavelet codec such as Dirac (described in reference [2]), whereas MPEG's approach is complex. The techniques presented here cannot be directly applied to either the block transform approach of MPEG-4 AVC (AVC is an acronym for Advanced Video Coding and this is another video format standard) nor the oversampled pyramid coding approach (which is incompatible with existing AVC syntax) that is also being considered for SVC. Overall the techniques being proposed by MPEG for SVC are largely orthogonal, both literally and figuratively, to the techniques presented here.

There are many beneficial scenarios that depend on scalable video coding, some of which are outlined above. The rest of this specification describes how these might be achieved using wavelet technology. It shows that a wavelet approach could be simpler and more effective than scalable coding using block transform encoding such as MPEG2 or MPEG4 AVC. This specification also shows how issues such as different aspect ratios at different resolutions and backward compatibility with MPEG2 could be addressed. Overall, this specification describes new proposals for scalable video coding that might allow it to become a practical reality.

## SUMMARY OF THE INVENTION

The invention is defined in the independent claims below to which reference should now be made. Advantageous features are set forth in the appendant claims.

A preferred embodiment of the invention is described in more detail below and takes the form of an encoder for encoding a signal carrying a representation of an image, the encoder comprising a first encoder for encoding a signal carrying a representation of an image at a first quality level; and a second encoder for encoding a signal carrying a representation of the image at a second quality level at greater quality than the first quality level. The encoder also comprises a mixer for mixing a factor of a signal carrying a representation of a prediction of the image at the first quality level and a factor of a signal carrying a representation of a prediction of the image at the second quality level to produce a mixed signal. The encoder is arranged such that: the second encoder encodes the signal carrying a representation of the image at a second quality level based on the mixed signal; and the factors are selected based on a measure of noise introduced by the first encoder and the second encoder when producing the predictions.

A corresponding decoder and methods of decoding and encoding are also described.

The present specification discloses several different inventive features which can be used in combination in many ways and also independently. The most significant of these features are set forth in the following numbered paragraphs:

1. The use of scalable coding in the frequency domain, rather than spatial domain, as illustrated in Figures 1 and 2. This would include using the low frequency part of the wavelet transform (see Figure 3) as the base level signal.

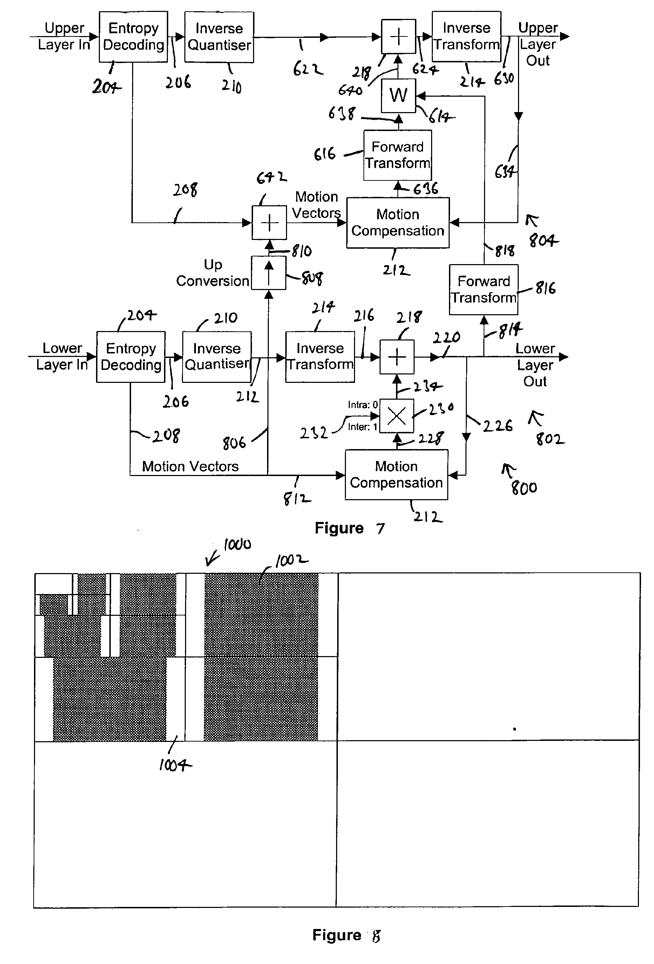

2. Spatially scalable coding using mixed frequency and spatial domains, as illustrated in Figures 6 and 7. This enables the construction of a particularly simple decoder.

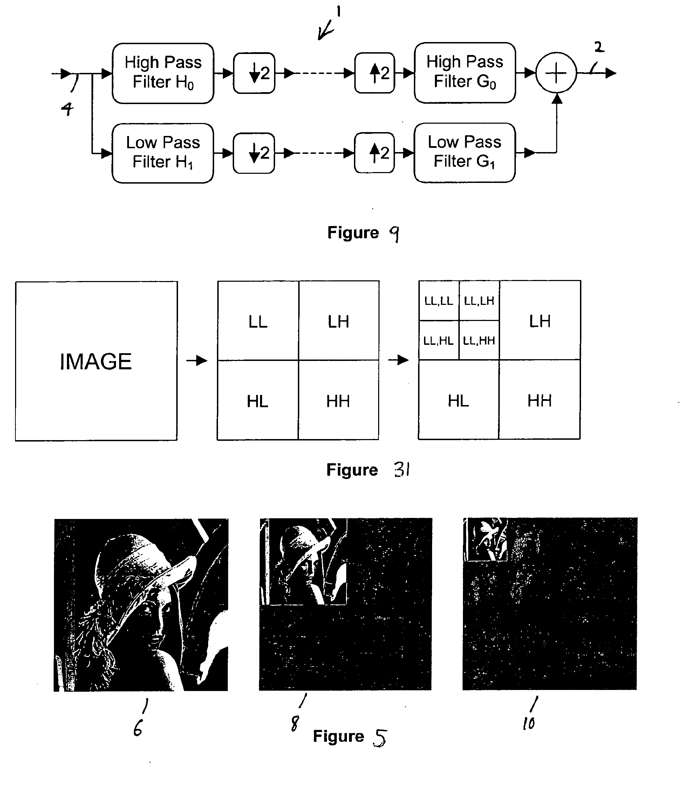

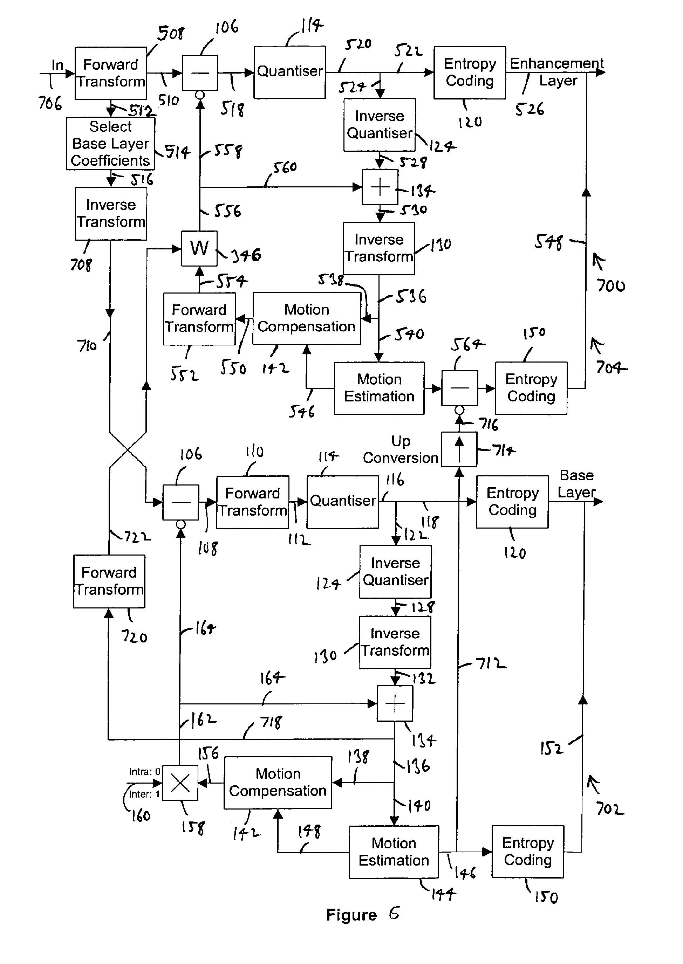

3. Varying the weighting factor (Block "W" in Figures 3, 4, 6 and 7) for each frequency depending on the quantisation applied at the encoder for both the base and enhancement layers, using the equations (1) and (2) below. This could be applied to feature 1 and/or 2 above. This may allow frequency domain scalable codecs to outperform spatial domain codecs such as MPEG-2.

4. Selecting different quantisation factors for the base and enhancement layers at the encoder to achieve SNR scalability, using feature 3 above. The use of this feature combined with feature 3 above allows good overall performance even with significantly different quantisation factors for the base and enhancement layers. This, in turn, allows more flexibility in choosing the relative bandwidths allocated to the base and enhancement layers, something that is difficult to control with MPEG-2 scalability and one of the reasons MPEG-2 scalability has been seldom used.

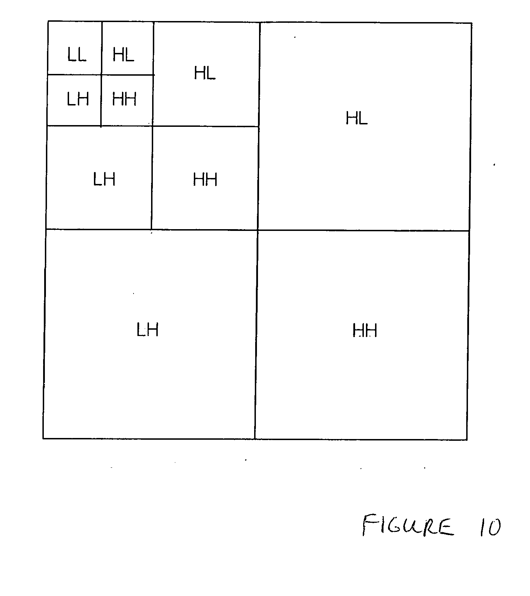

5. Using frequency domain scalability to support different aspect ratios for different layers. Described below in the section entitled "Aspect Ratio Scalability" with reference to Figure 8. This feature can be applied in two ways. First by selecting a subset of coefficients to use in the base layer and setting the rest to zero. Second by reducing the magnitude of some frequency components, i.e. scaling them down. The explanation below suggests that some coefficients would have to be set to zero. This is only necessary when the aspect ratio of the layers is different. Scaling down the frequency components could also be beneficial when the aspect ratio of the layers was the same. Allowing different aspect ratios for different layers is important for the application of scalable coding in practical situations and is not easily achieved in the spatial domain such as in MPEG-2. Scaling down coefficients is another mechanism to allow the control of the relative bandwidth of the base and enhancement layers with the advantages described above. This feature can be combined with features 3 and 4 above to allow maximum flexibility in the quality and bandwidth allocated to the two (or more) layers. This can also be applied to the same aspect ratio using a profile.

6. Using MPEG-2 as a "legacy" compatible "base" layer combined with a more advanced coding scheme for the "enhancement" layer, in which the enhancement layer codec has knowledge of the legacy compatible base layer (see the section entitled "Compatibility with MPEG2"). This could use features 3, 4 and 5 above.

7. Combination of a known broadcast "base" layer combined with a "trickle down" enhancement layer sent via an alternative means (such as the internet), in which the base layer is captured on a so-called personal video recorder (PVR) and combined with a previously stored "enhancement layer" to achieve HDTV distribution. This ensures that the programme cannot be viewed until the base layer has been broadcast, which obviates the need for complex DRM (Digital Rights Management) schemes to be applied to the "trickle down" signal. This feature can be combined with 6 above, i.e. the broadcast base layer can be compatible with legacy receivers and the "trickle down" enhancement signal can use a more advanced codec.

## BRIEF DESCRIPTION OF THE DRAWINGS

The invention will be described in more detail by way of example with reference to the accompanying drawings, in which:

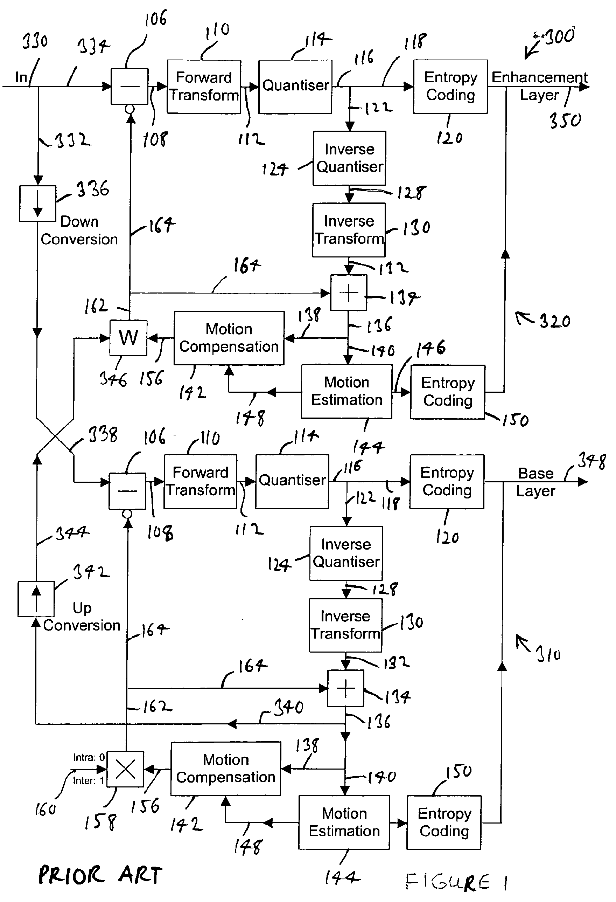

Figure 1 (prior art) illustrates a known spatial domain scalable encoder (such as MPEG2);

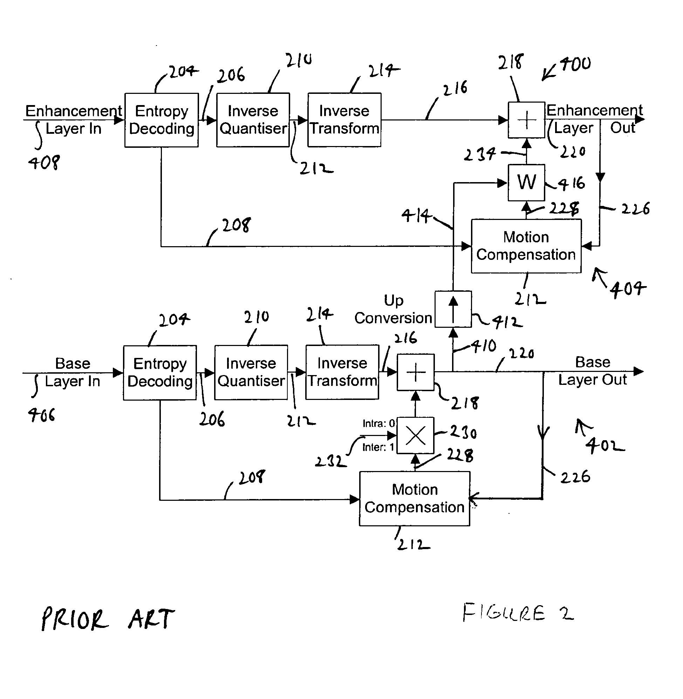

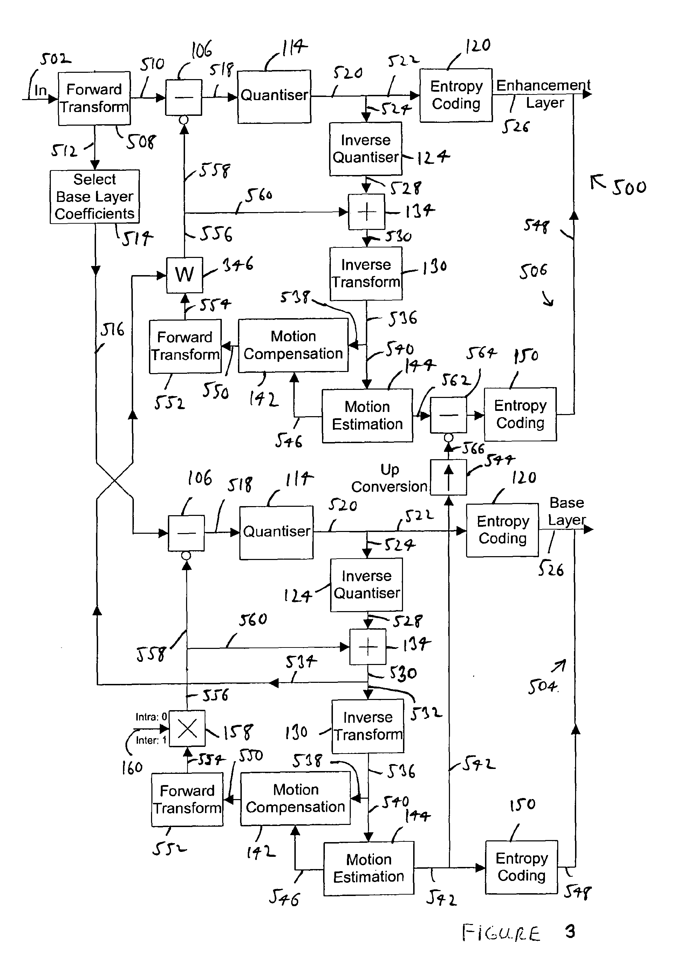

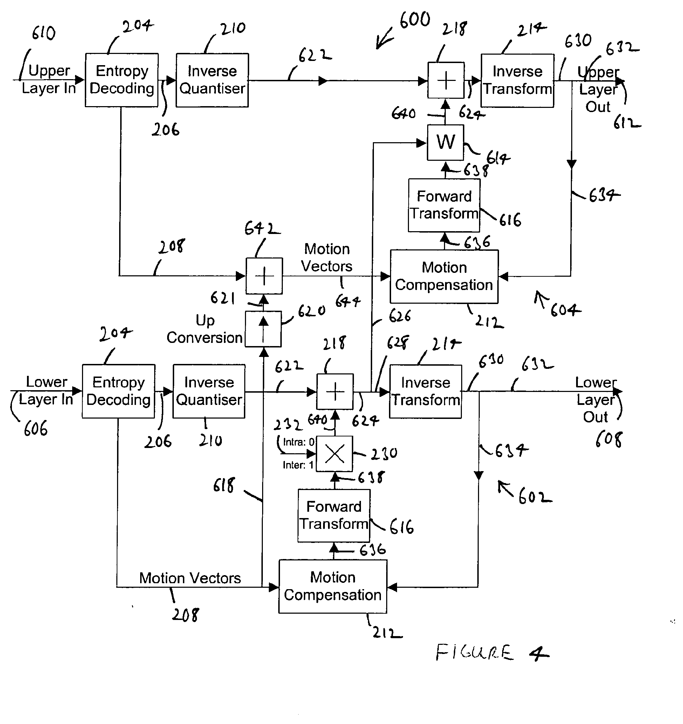

Figure 2 (prior art) illustrates a known spatial domain scalable decoder (such as MPEG2);

Figure 3 illustrates a transform domain scalable encoder embodying aspects of the present invention;

Figure 4 illustrates a transform domain scalable decoder embodying aspects of the present invention;

Figure 5 illustrates an example of an original image (on the left), that has been acted on by a first level wavelet transform (middle) and a second level wavelet transform (right);

Figure 6 illustrates a mixed frequency and spatial domain scalable encoder embodying aspects of the present invention;

Figure 7 illustrates a mixed frequency and spatial domain scalable decoder embodying aspects of the present invention;

Figure 8 illustrates the wavelet coefficients we could select in the scalable coding of 720 line HDTV to define a base layer using the encoder of Figure 6;

Figure 9 illustrates a two channel perfect reconstruction filter bank;

Figure 10 illustrates the decomposition of the two-dimensional spectrum of an image using wavelet filters;

Figure 11 (prior art) illustrates a known hybrid motion-compensated video encoder;

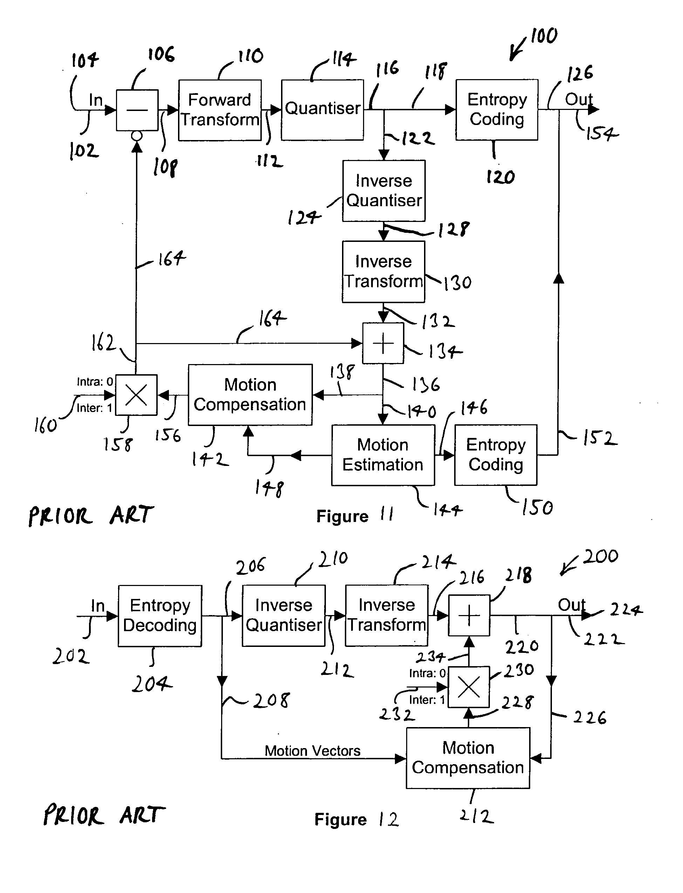

Figure 12 (prior art) illustrates a known hybrid motion-compensated video decoder;

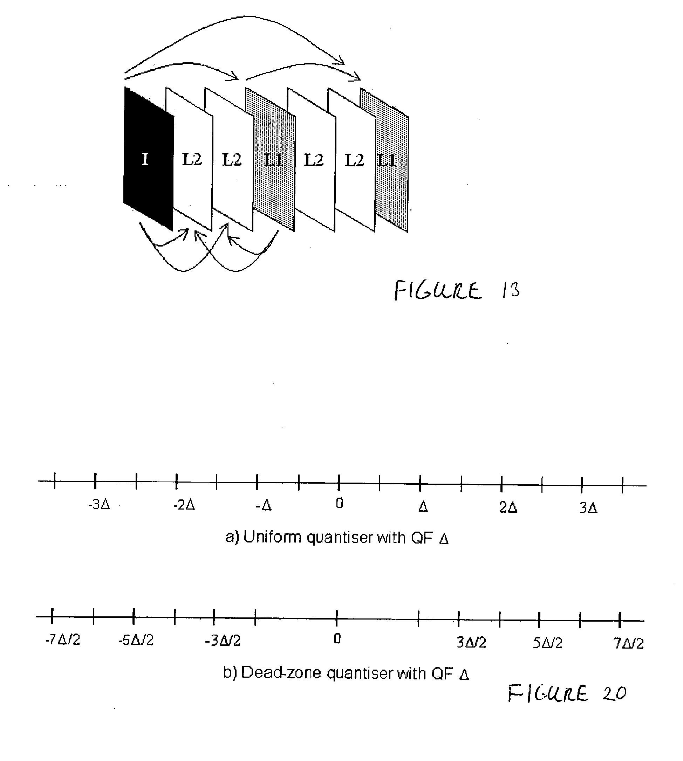

Figure 13 illustrates a group of pictures operated on by the encoder of Figure 3;

Figures 14 and 15 show a rate (R) -distortion (D) curves for a signal components X and Y respectively;

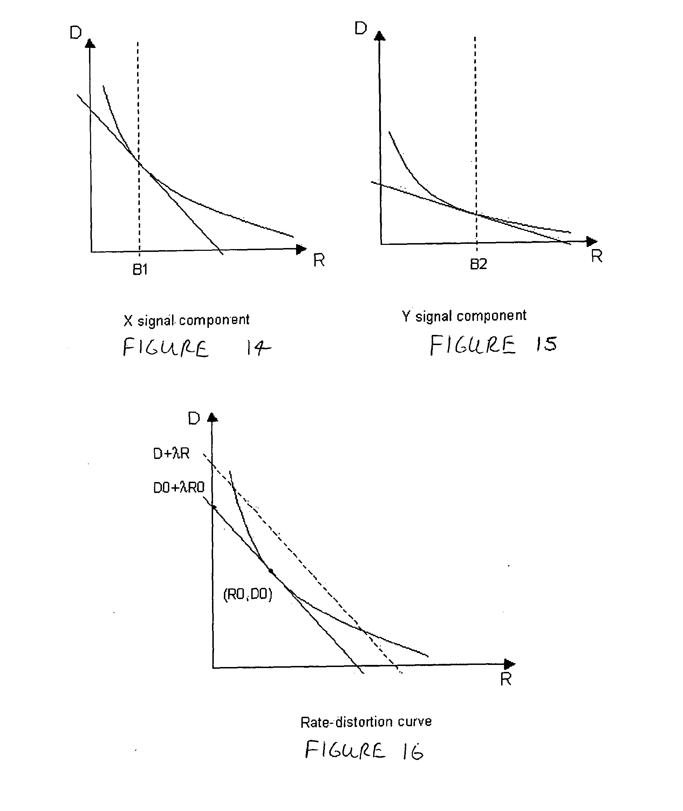

Figure 16 illustrates the minimisation of the Lagrangian cost function for signal component X of Figure 14;

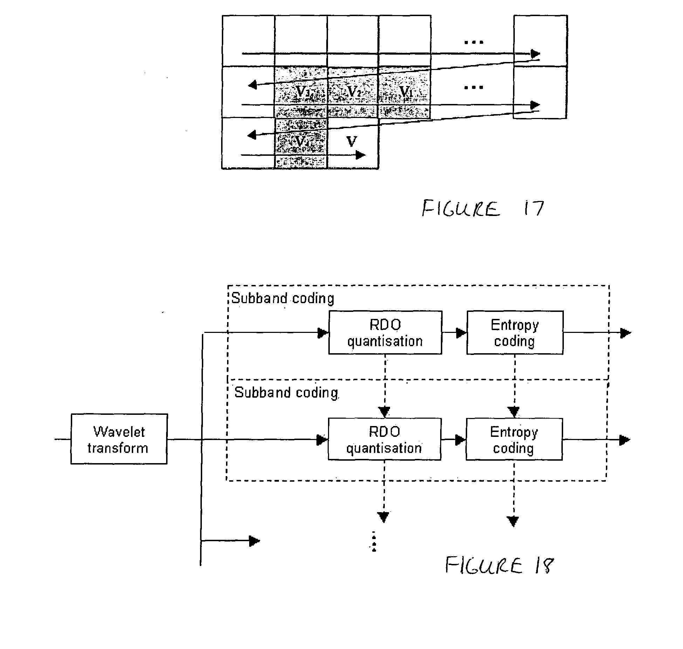

Figure 17 illustrates neighbouring vectors available in raster-scan order for local variance calculation;

Figure 18 illustrates a coefficient coding architecture;

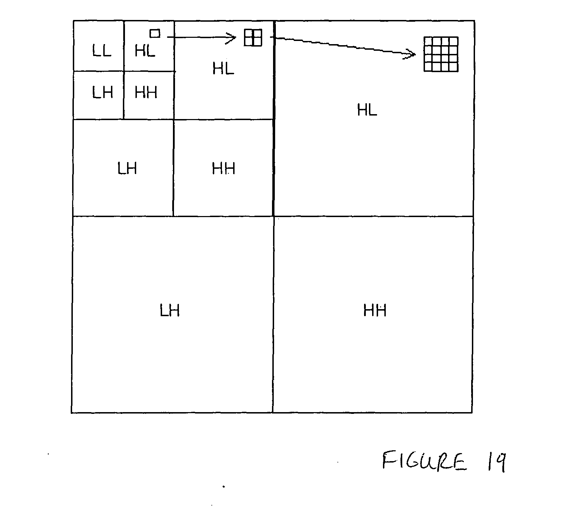

Figure 19 illustrates the parent-child relationship between subband coefficients;

Figure 20 illustrates uniform and dead-zone quantisers, with mid point reconstruction values;

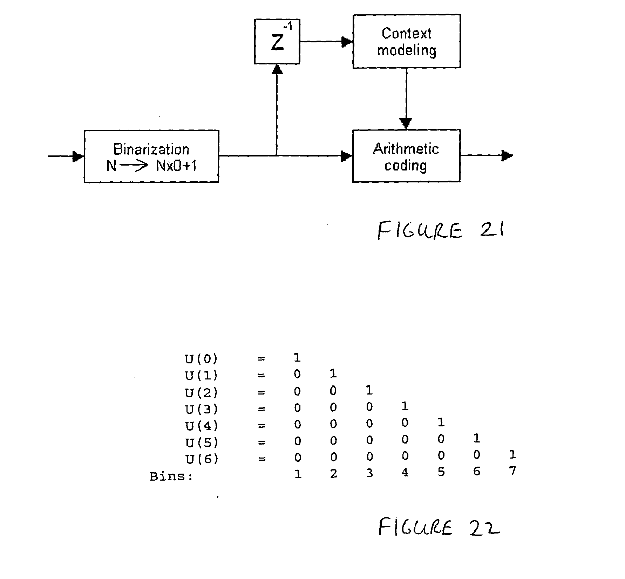

Figure 21 is an entropy coding block diagram;

Figure 22 is a unary encoding tree;

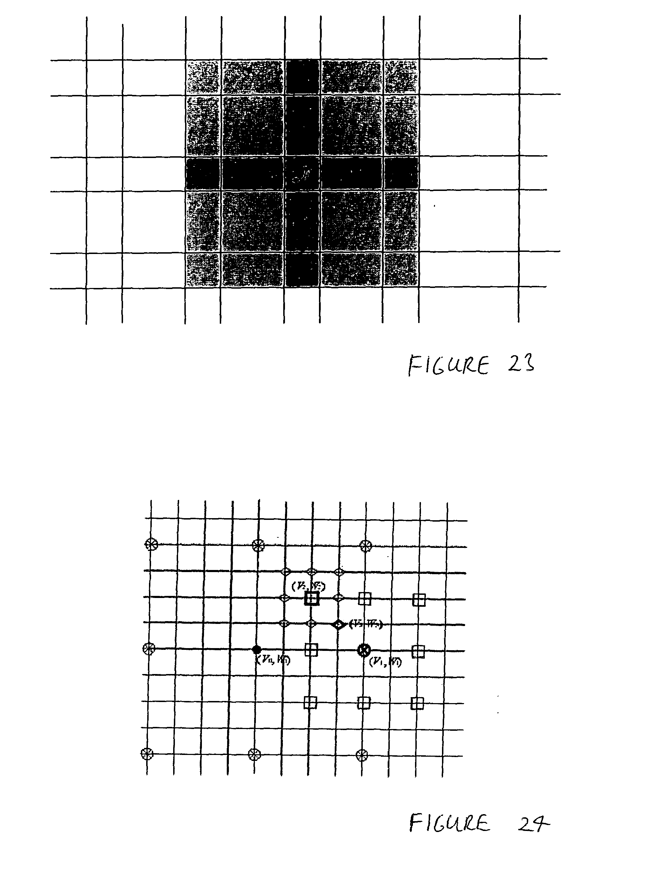

Figure 23 illustrates overlapped block-based motion compensation (the darker-shaded areas show overlapping areas);

Figure 24 illustrates sub-pixel motion-vector refinement;

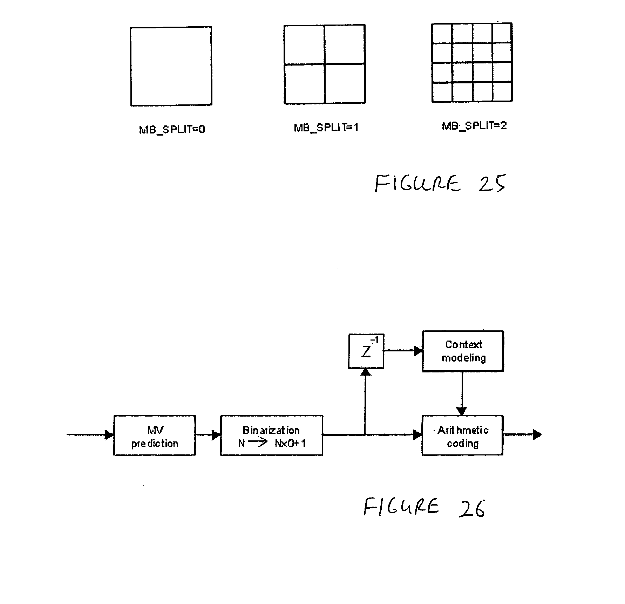

Figure 25 illustrates macroblock splitting modes;

Figure 26 illustrates a motion vector entropy coding architecture;

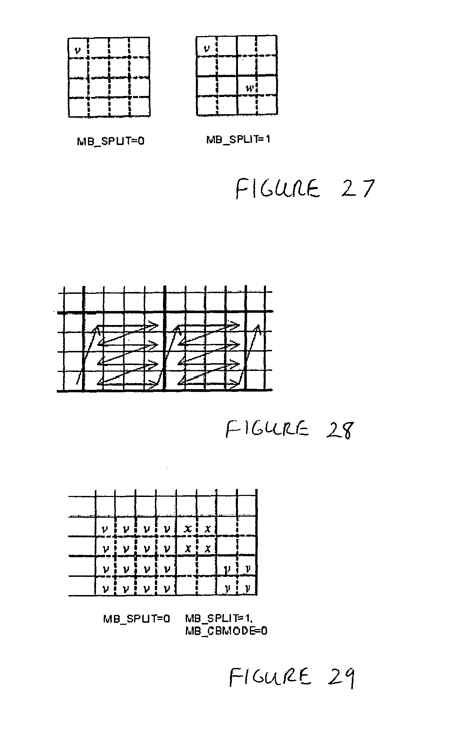

Figure 27 illustrates that data other than splitting level and common mode is always associated with particular blocks, even if the relevant prediction unit is the sub-MB (acroblock) or MB itself;

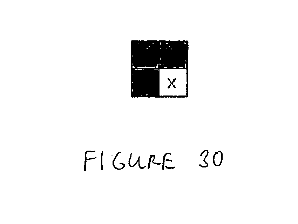

Figure 28 illustrates block data that is scanned in raster order by MB and then in raster order within each MB;

Figure 29 illustrates that, for the purposes of prediction, values are deemed to be propagated within MBs or sub-MBs;

Figure 30 illustrates an aperture for MV (motion vector) prediction;

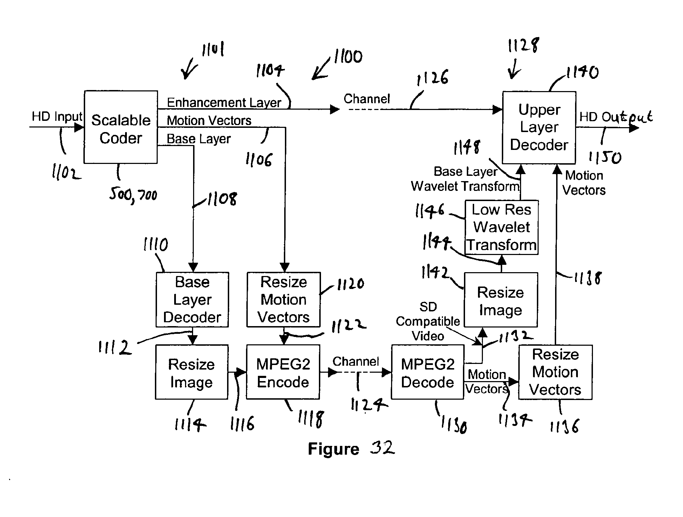

Figure 31 illustrates two stages of a two dimensional wavelet transform;

Figure 32 illustrates MPEG compatible transmission of the base layer; and

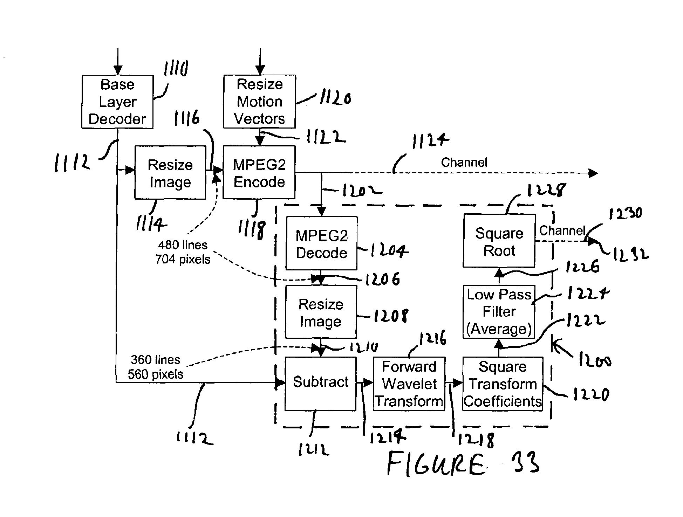

Figure 33 illustrates MPEG compatible transmission of the base layer.

The Wavelet Transform and Compression

Before proceeding, a brief review of the wavelet transform will be given.
A continuous wavelet transform can be written as:

$$\gamma(s,\tau) = \int f(t)\psi *_{s,\tau}(t)dt$$

A function $f(t)$ is decomposed into a set of basis functions $\psi_{s,\tau}(t)$, which are the wavelets. The variable $s$ represents scale and the variable $\tau$ represents the variable translation. The wavelets are generated from a so-called mother wavelet by scaling and translation. The mother wavelet can be written as:

$$\psi_{s,t}(t) = \frac{1}{\sqrt{s}}\psi\left(\frac{t-\tau}{s}\right)$$

The inverse wavelet transform is defined as:

$$f(t) = \iint \gamma(s,\tau)\psi_{s,\tau}(t)d\tau ds$$

In practice, the wavelet transform is applied using a discrete wavelet, which is defined as:

$$\psi_{j,k}(t) = \frac{1}{\sqrt{s_0^j}}\psi\left(\frac{t-k\tau_0 s_0^j}{s_0^j}\right).$$

$j$ and $k$ are integers and $s_0 > 1$ is a fixed dilation step. $\tau_0$ is the translation factor and it depends on the dilation step, $s_0$. Usually, the dilation step is chosen to give dyadic sampling along the frequency axis and the translation factor is chosen to give dyadic sampling in the time axis. Sampling is said to be dyadic when daughter wavelets are generated by dilating the mother wavelet by $2^j$ and by translating it by $k2^j$ and usually $s_0 = 2$ and $\tau_0 = 1$ are chosen. Dyadic sampling is optimal because it is sampling at the Nyquist rate.
The (discrete) wavelet transform is basically iterated low pass filtering and sub-sampling, based on a two channel perfect reconstruction filter bank 1 illustrated in Figure 9, which shows a two-channel perfect reconstruction filter bank. The filters H0, H1, G0, G1 are chosen so that the output 2 is the same as the input 4 in spite of the subsampling (and aliasing) in the two intermediate signals.
The wavelet transform repeatedly takes the low pass signal and splits it, leaving the high pass signal unchanged at each stage. That is to say, in one dimension it comprises the iterated application of a complementary pair of half-band filters followed by sub-sampling by a factor 2.

For image compression the wavelet transform is applied independently in the horizontal and vertical directions, as illustrated in Figure 9, which shows two stages of a two-dimensional wavelet transform.

Applied to two-dimensional images, wavelet filters are normally applied in both vertical and horizontal directions to each image component to produce four so-called sub-bands termed Low-Low (LL), Low-High (LH), High-Low (HL) and High-High (HH). In the case of two dimensions, only the LL band is iteratively decomposed to obtain the decomposition of the two-dimensional spectrum shown in Figure 10.

The number of samples in each resulting subband is as implied by the diagram. The critical sampling ensures that after each decomposition the resulting bands all have one quarter of the samples of the input signal.

The choice of wavelet filters has an impact on compression performance, filters having to have both compact impulse response in order to reduce ringing artefacts and other properties in order to represent smooth areas compactly. The filters currently used in the present system are the Daubechies (9,7) filter set which can require an average of 8 multiplications per sample for the transform in both directions. However, the lifting-scheme allows wavelet filters to be factorised. The present system uses a lifting implementation with integer approximations to the filters. This is much quicker, and easier to pipeline.

Clearly, applying an N-level wavelet transform requires N levels of subsamplings, and so for reversibility, it is necessary that $2^N$ divides all the dimensions of each component. A fixed 4-level transform is currently implemented by the present system (variable-depth transforms are intended for the future) so input picture components must be divisible by 16. This is not the case, for example, for European Standard Definition 720x576 pictures in anything other than 444 format, as the subsampled chroma data will not meet this criterion. So, if this condition is not met, the input data frames are padded as they are read in, by edge values, for best compression performance. Note that the entire frame is padded even if only the chroma components fail the divisibility test.

This padding is additional to that needed to accommodate the block sizes chosen for motion estimation and compensation. This is because wavelet coding is performed after any motion compensation.

Figure 5 shows an original image 6 on the left, a first level wavelet transform 8 in the middle and a second level transform on the right 10. Mid grey represents zero. Considering the first level transform 8, the transform is the same size as the original (a non-expansive transform) but most of the information is now concentrated in the low frequency top left corner. If you look carefully you may be able to see detail in the other parts of the transform but it is, obviously, at a much lower level. The wavelet transform can concentrate the information in a typical image and we can take advantage of the wavelet transform's ability to concentrate the information in a typical image to compress the data.

The right-hand image 10 of Figure 5 performs a second wavelet transform, but this time only on the top left portion of the first level transform. The second level of the wavelet transform packs the information even more tightly into the low frequency, top left corner of the transform. Now, although information is more tightly packed, you may be able to see some detail emerging outside the very top left. We can repeat the process to achieve higher levels of wavelet transform.

The benefits of higher levels diminish with each level of transform and typically about four levels are used in image or video compression.

Wavelet transforms can be used for video compression in place of the block transforms (e.g. DCT (discrete cosine transform)) used in known compression systems such as H26x, MPEG2 or MPEG4. This is done in the video compression system described below, which is a known hybrid motion-compensated video codec (coder/decoder) using wavelets that is described in reference [2] and is illustrated in Figures 11 (encoder) and 12 (decoder).

The example system demonstrates wavelet transforms acting on an entire video image rather than operating on portions or blocks of the image. The coder is illustrated in Figure 11. The decoder is illustrated in Figure 12.

The main elements or modules of the coder 100 of Figure 11 are as follows:

1) Transform or forward transform and scaling involves taking frame data and appling a transform (in this case the wavelet transform) and scaling the coefficients resulting from the transform to perform quantisation;
2) Entropy coding is applied to the quantised transform coefficients and to motion vector (MV) data and it performs lossless compression on them;
3) Motion estimation (ME) involves finding matches for frame data from previously coded frames, while trading off accuracy with motion vector bit rate;
4) Motion compensation (MC) involves using the motion vectors to predict the current frame, in such a way as to minimise the cost of encoding the residual data.

The following sections describe these modules in more detail, after first describing the rate-distortion framework used throughout the system.

A television signal usually includes a chrominance signal (or chroma for short), and a luma signal). The chroma signal represents two colour difference components U and V. The luma signal (Y) represents the brightness of an image.

The codec can support any frame dimensions and common chroma formats (luma only, 444, 422, 420, 411) by means of frame padding. The padding ensures that the wavelet transform can be applied properly. Frame padding also allows for any size blocks to be used for motion estimation, even if they do not evenly fit into the picture dimensions. It should be noted that frame padding may be required because the (normally sub-sampled) chroma components need padding even if the luma does not; in this case all components are padded. The encoder can support interlaced coding.

The codec operates on groups of frames (GOP). An example of a GOP is illustrated in Figure 13. The system described herein defines three types of frame: Intra frames, Level 1 frames and Level 2 frames. Intra frames (I frames) are coded without reference to other frames in the sequence. Level 1 frames (L1 frames) and Level 2 frames (L2 frames) are both inter frames, which means they are coded with reference to other previously coded frames.

In the example of Figure 13, the GOP comprises an I frame followed by L2 frames and L1 frames. In particular, the I frame is followed by pairs of L2 frames with the pairs of L2 frames being separated by L1 frames. In this example, there are a total of 7 frames in the GOP. Other GOPs can be used, for example, with 12 frames.

I and L1 frames are reference frames. L1 frames are coded with reference to the images in the previous reference frames. L2 frames are coded with reference to previous reference frames as well as subsequent reference frames. L1 frames are coded with reference to the I frame and, if there is one, the previous L1 frame. L2 frames are coded with reference to the I frame as well as the subsequent L1 frame.

The key to making good decisions in compression is to be able to trade off the number of bits used to encode some part of the signal being compressed, with the error that is produced by using that number of bits. There is no point striving hard to compress one feature of the signal if the degradation it produces is much more significant than that of compressing some other feature with fewer bits. In other words, one wishes to distribute the bit rate to get the least possible distortion overall. This is done using Rate Distortion Optimisation (RDO).

Rate Distortion Optimisation

Rate distortion can be described in terms of Lagrangian multipliers. It can also be described by the Principle of Equal Slopes, which states that the coding parameters should be selected so that the rate of change of distortion with respect to bit rate is the same for all parts of the system.

To see why this is so, consider two independent components of a signal. They might be different blocks in a video frame, or different sub-bands in a wavelet transform. Compress them at various rates using a coding technique, and you tend to get curves like those in Figures 14 and 15. They show that at low rates, there is high distortion (or error) and at high rates there is low distortion, and there is generally a smooth curve between these points with a convex shape.

Now suppose that we assign B1 bits to component X and B2 bits to component Y. Look at the slope of the rate-distortion curves at these points. At B1 the slope of X's distortion with respect to bit rate is much higher than the slope at B2, which measures the rate of change of Y's distortion with respect to bit rate. It's easy to see that this isn't the most efficient allocation of bits. To see this, increase B1 by a small amount to B1+$\Delta$ and decrease B2 to B2-$\Delta$. Then the total distortion has reduced even though the total bit rate has not changed, due to the disproportionately greater drop in the distortion of X.

The conclusion is therefore that for a fixed total bit rate, the error or distortion is minimised by selecting bit rates for X and Y at which the rate-distortion curves have the same slope. Likewise, the problem can be reversed and for a fixed level of distortion, the total bitrate can be minimised by finding points with the same slope.

Two questions arise in practice: firstly, how does one find points on these curves with the same slope; and secondly, how does one hit a fixed overall bit budget? The first question can be answered by referring to Figure 16. The intercept of the tangent to the rate-distortion curve at the point (R0,D0) to the D-axis is the value D0+$\lambda$R0 where -$\lambda$ is the slope at the point (R0, D0). Furthermore it is the smallest value of D+$\lambda$R for all values of (R,D) that lie on the curve. So , n selecting, for example, a quantizer in a given block or sub-band, one minimises the value D(Q)+$\lambda$R(Q) over all quantizers Q, where D(Q) is the error produced by quantizing with Q and R(Q) is the rate implied.

In order to hit an overall bit budget, one needs to iterate over values of the Lagrangian parameter $\lambda$ in order to find the one that gives the right rate. In practice, this iteration can be done in slow time given any decent encoding buffer size, and by modelling the overall rate distortion curve based on the recent history of the encoder. Rate-distortion optimisation (RDO) is used throughout the system described herein, and it has a very beneficial effect on performance.. However, there are some practical problems in applying the procedure.

**1) There may be no common measure of distortion.**

For example: quantising a high-frequency subband is less visually objectionable than quantising a low-frequency sub-band, in general. So, there is no direct comparison with the significance of the distortion produced in one subband with that produced in another. This can be overcome by perceptual weighting, in which the noise in high frequency bands is downgraded according to an estimate of the Contrast Sensitivity Function (CSF) of the human eye, and this is what is done. The problem even occurs in block-based coders, however, since quantisation noise can be successfully masked in some areas but not in others. Perceptual adjustment factors are therefore generally necessary in RDO in all types of coders.

**2) Rate and distortion may not be directly measurable.**

In practice, measuring rate and distortion for, say, every possible quantiser in a coding block or sub-band cannot mean actually encoding for every such quantiser and counting the bits and measuring mean square error (MSE). What one can do is estimate the values using entropy calculations or assuming a statistical model and calculating, say, the variance. In this case, the R and D values may well be only roughly proportional to the true values, and some sort of factor to compensate is necessary in using a common multiplier across the encoder.

**3) Components of the bitstream will be interdependent.**

The model describes a situation where the different signals X and Y are fully independent. This is often not true in a hybrid video codec. For example, the rate at which reference frames are encoded affects how noisy the prediction from them will be, and so the quantisation in predicted frames depends on that in the reference frame. Even if elements of the bitstream are logically independent, perceptually they might not be. For example, with Intra frame coding, each frame could be subject to RDO independently, but this might lead to objectionally large variations in quantisation noise between frames with low bit rates and rapidly changing content.

Incorporating motion estimation into RDO is difficult, because motion parameters are not part of the content but have an indirect effect on how the content looks. They also have a coupled effect on the rest of the coding process, since the distortion measured by prediction error, say, affects both the bit rate needed to encode the residuals and the distortion remaining after coding. This is discussed in more detail below.

**RDO motion estimation metric**

The performance of motion-estimation and motion-vector coding is critical to the performance of a video coding scheme. With motion vectors at 1/4 or 1/8th pixel accuracy, a simple strategy of finding the best match between frames can greatly inflate the resulting bitrate for little or no gain in quality. This is because the additional accuracy is very sensitive to noise. What is required is the ability to trade off the vector bitrate with prediction accuracy and hence the bit rate required to code the residual frame and the eventual quality of that frame, whilst at the same time making the estimator more robust.

The simplest way to do this is to incorporate a smoothing factor into the metric used for matching blocks. So, the metric comprises a basic block matching metric, plus some constant times a measure of the local motion vector smoothness. The basic block matching metric used by the present system is the sum of absolute differences (SAD). Given two blocks X,Y of samples, this is given by:

$$SAD(\mathrm{X,Y}) = \Sigma_{i,j} |\mathrm{X}_{i,j} - \mathrm{Y}_{i,j}|$$

The smoothness measure used is the difference between the candidate motion vector and the median of the neighbouring previously computed motion vectors. Since the blocks are estimated in raster-scan order then vectors for blocks to the left and above are available for calculating the median (see Figure 17):

The vectors chosen for computing the local median predictor are $V_2$, $V_3$ and $V_4$; this has the merit of being the same predictor as is used in coding the motion vectors.

The total metric is a combination of these two metrics. Given a vector V which maps the current frame block X to a block Y=V(X) in the reference frame, the metric is given by:

$$SAD(\mathrm{X,Y}) + \lambda(|V_x - \mathrm{pred}_x| + |V_y - \mathrm{pred}_y|)$$

The value A is a coding parameter used to control the trade-off between the smoothness of the motion vector field and the accuracy of the match. When A is very large, the local variance dominates the calculation and the motion vector that gives the smallest metric is simply that which is closest to its neighbours. When A is very small, the metric is dominated by the SAD term, and so the best vector will simply be that which gives the best match for that block. For values in between, varying degrees of smoothness can be achieved. The coding parameter λ is calculated as a multiple of the RDO parameters for the L1 and L2 frames, so that if the inter frames are compressed more heavily then smoother motion vector fields will also result.

Although RDO is very powerful, in practice it is not very helpful on its own. This is because both the bit rates and the quality (whatever measure of quality is used) that result from doing RDO will vary. In practice, video coding applications require constant quality, if they're not too bandwidth constrained, or constant bit rate. The best subjective performance results from having roughly constant quality, and large variations of quality, either from frame to frame or within a frame, tend to be disliked by viewers.

The present system incorporates a form of constant-quality encoding by adapting RDO parameters for each type of frame until a quality metric is met. The quality metric QM is based on the taking the fourth power of the difference between the coded and uncoded luminance picture values. This is in contrast to PSNR (peak signal-to-noise ratio), which is based on the square of the difference. The result is a metric which penalises large errors to a greater degree than PSNR, and hence helps quality hold on at lower bitrates.

The metric is further refined by dividing the picture into a number of regions (preferably 12), and taking the worst-case quality measure from each of them. The encoder will iterate coding a frame until the quality is within a certain range of the target value.

The iteration process is assisted by modelling the relationship between quality and the Lagrangian parameter, λ. Experimentally, this appears to be a linear relationship if λ and QM are in logarithmic coordinates. The linear model parameters can be used to predict the value of A that will give the required PSNR.

The model parameters are fairly stable provided the video sequence does not change too much. However, they can be adapted by measuring the actual QM value that results from using given Lagrangian parameters. Even so, they can be thrown off by cuts or scene changes in the video, mainly because these result in poorer quality predicted frames. However, this system also detects these and inserts intra frames at these points which improves QM.

Constant bit rate coding (CBR) is preferable when one is in a strictly bandwidth-constrained environment and real-time decoding is required, for example, for broadcasting. In CBR, what is constant determines the size of buffers and how much the bit rate of individual frames needs to be smoothed. The relationship between bitstream buffers, picture buffers, and CBR parameters is not simple because the decoder also needs to display frames at exactly regular intervals, which contrains frames from being very big or very small even if they would meet the CBR constraints.Once any motion compensation has been performed, motion -compensated residuals are treated almost identically to intra frame data. In both cases, we have up to three (luminance and two chrominance) components in the form of two-dimensional arrays of data values. The frame component data is coded in three stages. First, the data arrays are wavelet- transformed using separable wavelet filters and divided into sub-bands. Then they are quantised using RDO quantisers. Finally, the quantised data is entropy coded.

The architecture of coefficient coding is shown in Figure 18.

Each wavelet sub-band is coded in turn. Both the quantisation and the entropy coding of each band can depend on the coding of previously coded bands. This does limit parallelisation, but the dependences are limited to parent-child relationships so some parallelisation/multi-threading is still possible.

The only difference, in this embodiment, between intra frame coefficient coding and inter frame residual coefficient coding lies in the use of prediction within the DC wavelet sub-band of intra frame components.

At the decoder side, the three stages of the coding process are reversed. The entropy coding is decoded to produce the quantised coefficients, which are then reconstructed to produce the real values. Then, after undoing any prediction, the inverse transform produces the decoded frame component. The present system has to maintain a local decoder within it, in part so that the result of the compression picture can be viewed at the time of compression, but mainly because compressed pictures must be used as reference frames for subsequent motion compensation otherwise the encoder and the decoder will not remain synchronised.

Thus, throughout the encoding process, uncompressed frame data is gradually overwritten with compressed and locally decoded frame data. These locally-decoded frames must be identical to those that the real decoder would produce. In order to ensure this, the present system uses common libraries for all the operations that need to be identical in the encoder and the decoder.

**Parent-child relationships**

Since each sub-band represents a filtered and sub-sampled version of the frame component, coefficients within each sub-band correspond to specific areas of the underlying picture and hence those that relate to the same area can be related. It is most productive to relate coefficients that also have the same orientation (in terms of combination of high-pass and low-pass filters). The relationship is illustrated in Figure 19, which illustrates the situation for HL bands (bands that have been high-pass filtered horizontally and low-pass filtered vertically).

In Figure 19, it is illustrated that the sub-sampling structure means that a coefficient (the parent) in the lowest HL band corresponds spatially to a 2x2 block of coefficients (the children) in the next HL band, each coefficient of which itself has a 2x2 block of child coefficients in the next band, and so on. This relationship relates closely to spectral harmonics: when coding image features (edges, especially) significant coefficients are found distributed across sub-bands, in positions related by the parent-child structure, and corresponding to the original position of the feature. In particular, a coefficient is more likely to be significant if its parent is, and children with zero or small parents or ancestors may have different statistics from children with large parents or ancestors.

These factors suggest that when entropy coding coefficients, it will be helpful to take their parents into account in predicting how likely, say, a zero value is.

By coding from low-frequency sub-bands to high-frequency sub-bands, and hence by coding parent before child sub-bands, parent-child dependencies can be exploited in these ways without additional signalling to the decoder.

Having wavelet transformed the component data, each subband's coefficients are quantised using a quantiser.

### Quantisation

As illustrated in Figure 20 a), a uniform quantiser is a division of the real $\tau$ dimension into equal-width bins, of size equal to a quantisation factor QF. The bins are numbered and a reconstruction value is selected for each bin. So, the bins consist of the intervals

$$[(N-1/2)*QF, (N+1/2)*QF]$$

for integers N, which are also the labels for the bin. It is the labels that are subsequently encoded as explained below. The reconstruction value used in the decoder (and for local decoding in the encoder) can be any value in each of the bins. The usual, but not necessarily the best, reconstruction value is the midpoint N*QF.

In the illustrated example of Figure 20, a uniform dead-zone quantiser is used as shown in Figure 20 b). A uniform dead-zone quantiser is slightly different to a uniform quantiser in that the bin containing zero is twice as wide as the other bins. So, the bins consist of [-QF,QF], with a reconstruction value of 0, together with other bins of the form:

$$[N*QF, (N+1)*QF]$$

for N>0 and

$$[(N-1)*QF, N*QF]$$

for N<0, with reconstruction points somewhere in the intervals.

The advantage of the dead-zone quantiser is two-fold. Firstly, it applies more severe quantisation of the smallest values, which acts as a simple but effective de-noising operation. Secondly, it admits a very simple and efficient implementation: simply divide by the quantisation factor and round towards zero. In the example system, this process is approximated by a multiplication and a bitshift and the corresponding reconstructed value is given by (an integer approximation to):

$$\tilde{v} = 0 \text{ if } N = 0$$
$$= (N + 0.375)*QF \text{ if } N > 0$$
$$= (N - 0.375)*QF \text{ if } N < 0$$

A value of 0.5, giving the mid-point of the interval might be the obvious reconstruction point, giving as it does the mid-point of the bin. Typically, however, the values of transformed coefficients in a wavelet subband have a distribution with mean very near zero and which decays rapidly and uniformly for larger values. Values are therefore more likely to occur in the first half of a bin than in the second half and the smaller value of 0.375 reflects this bias, and gives better performance in practice.

This reconstructed value is used by the encoder to produce the locally decoded component data. This is identical to what the decoder would produce, after decoding the quantised value *N*.

Values are quantised within a compression coder to reduce the number of bits required to transmit the signal (i.e. to reduce the bit rate). At the decoder, the quantised values are inverse quantised to reconstruct an approximation to the value that was quantised in the coder. The process of quantisation followed by inverse quantisation introduces a small error (that is noise) into the encoded signal.

A quantiser takes a range of input values and maps them to a single value. The size of the range of input values that are mapped to a single value is controlled by the "quantisation factor" (quant_factor). A quantisation factor of 1 (unity) introduces no degradation in the inverse quantised values. As the quantisation factor is increased, a progressively larger range of quantised values is mapped to each quantised value. Therefore, as the quantisation factor is increased more noise is introduced into the inverse quantised values (but the fewer bits are needed to transmit the quantised value).

There are many different ways of performing quantisation and inverse quantisation within a compression system. These are known to the person skilled in the art.

An example of a simple quantiser and inverse quantiser are defined in the following C programming language code.

Code for a quantiser is as follows:

```
int quantise(int value, int quant_factor) {
  int quantised_value = value;
  int negative  = (value<0);
  if (negative) quantised_value *= -1;
  quantised_value += (quant_factor/2);
  quantised_value /= quant_factor;
  if (negative) quantised_value *= -1;
  return quantised_value;
}
```

Code for an inverse quantiser is as follows:

```
int inverse_quantise(int quantised_value, int quant_factor)
{
  int value = quantised_value;
  int negative  = (value<0);
  if (negative) value *= -1;
  value *= quant_factor;
  value += (quant_factor/2);
  if (negative) value *= -1;
  return value;
}
```

Both encoder and decoder convert negative values to positive ones before performing quantisation or inverse quantisation (and restore the sign of the value before returning a value).

The quantiser maps values between -quant_factor/2 and +quant_factor/2 to the quantised value zero. Similarly, values from quant_factor/2 to (3. quant_factor/2) are mapped to the quantised value one, and so on.

If we assume that the input values to the quantiser have a uniform probability distribution (any value is equally likely) then the root mean square error, or noise, herein denoted $\sigma$, introduced by the quantisation and inverse quantisation process, is given by the equation:

$$\sigma = \sqrt{\frac{1}{quant\_factor} \int_{\frac{quant\_factor}{2}}^{\frac{quant\_factor}{2}} x\, dx} = \sqrt{\frac{quant\_factor^2}{12}} = \frac{1}{2} \cdot \frac{quant\_factor}{\sqrt{3}}$$

In general, the noise introduced by the quantisation and inverse quantisation process is proportional to the quantisation factor. The constant of proportionality varies with the type of quantiser used and with the probability density function (pdf) of the value that are input to the quantiser. The constant of proportionality may also vary with the quantised value in a non-uniform quantiser. For example, in a "dead band" quantiser (described above), the input range about zero, that is mapped to zero output, is bigger than the ranges mapped to other output values. Consequently, with a dead band quantiser, the quantisation noise is bigger for zero output than for other output values. That is, in general:

$$\sigma = k\big(quantised\ value\big) \cdot quantisation\_factor$$

In the following description it is assumed, for simplicity of explanation, that k is a constant independent of the quantised value. Adaptations of the following description, to allow for k as a function of quantised value are known to a person skilled in the art.

**Coefficient Prediction (Intra frames only)**

The aim of the prediction stage is to remove any residual interdependencies between coefficients in the wavelet subbands, so that subsequent entropy coding can be applied as far as possible to decorrelated data. Prediction only applies to the DC (Low-Low) subband of intra frames.

In this subband, coefficients are scanned in raster order (that is, along horizontal lines in the subband) and so any quantised values to the left and above the current coefficient can be used to predict it. In the present system, the coefficient at position (i,j) is predicted by the mean of the reconstructed coefficients at positions $(i\text{-}1,j),(i,j\text{-}1)$ and $(i\text{-}1, j\text{-}1)$. After this, the difference is quantised, and it's this value that is sent.

To reconstruct the value, to use for prediction of the next coefficient, the prediction must be added back into the quantised difference.

This process illustrates a subtle point about the transform coding process described previously. The process is not one where all the coefficients in a subband are quantised and then the subband is iterated over again to code all the coefficients. These processes instead take place for each coefficient in a single pass over the data. This is a more efficient implementation, but because prediction is intertwined with quantisation, it is also essential for coding Intra DC bands.

**Lagrangian parameter control of subband quantisation**

Selection of quantisers is a matter for the encoder only. The decoder does not care what quantiser is used.

The encoder of the present system uses an RDO technique to pick a quantiser by minimising a Lagrangian combination of rate and distortion. In particular, many quantisers are tried and the best picked. Rate is estimated via a an adaptively-corrected measure of zeroth-order entropy measure Ent(q) of the quantised symbols resulting from applying the quantisation factor q, calculated as a value of bits/pixel. Distortion is measured in terms of the perceptually-weighted error fourth-power error E(q,4), resulting from the difference between the original and the quantised coefficients:

$$E(q,4) = \left( \Sigma_{i,j} |p_{i,j} - Q_{(i,j)}|^4 \right)^{1/4}$$

The total measure for each quantiser q is:

$$\lambda.C.Ent(q)+(E(q,4)^2/w)$$

where w is the perceptual weight associated with the subband (higher frequencies have a larger weighting factor) and $C$ is a correction factor. Using the square of $E(q,4)$ makes it equal to the mean-square error (MSE) for constant values, but in general it gives greater weight to large values than the MSE, for a mixed signal. The correction factor compensates for any discrepancy between the measure of entropy and the actual cost in terms of bits, based on the actual bit rate produced by the corresponding elements of previous frames. It is used because the entropy measure does not take into account dependencies between coefficients that are taken into account in the actual coefficient entropy coding.

The quantisers are incremented in quarter-powers of 2 - i.e. $q$ is an integer approximation of $2^{n/4}$ for integers n. In other words, the quantisers represent the coefficient magnitudes to variable fractional-bit accuracies in quarter-bit increments.

The Lagrangian parameter $\lambda$ is derived from the encoder quantisation parameter. The larger the value of $\lambda$, the lower the resulting bit rate, and vice-versa.

Clearly, there are a lot of quantisers to search. The encoder of the present system speeds things up by splitting the search up into three stages.

First, one quarter of the coefficients are used to obtain the best quantiser to bit-accuracy. Secondly, one quarter of the coefficients are again used to refine this estimate to half-bit accuracy. Thirdly, half the coefficients are used to refine the search further to 1/4-bit. In each stage, only a single loop over the coefficients is used to test all the candidate quantisers. The result is much faster than a brute-force search of all the quantisers, and almost as good in performance.

**Wavelet Coefficient Coding**

The entropy coding used in wavelet subband coefficient coding is based on three stages: binarisation, context modelling and adaptive arithmetic coding. It is illustrated in Figure 21. Further explanation of coding strategies can be found at:

http://en.wikipedia.org/wiki/Entropy_encoding,

http://en.wikipedia.org/wiki/Lossless_data_compression,

http://en.wikipedia.org/wiki/Huffman_coding, and http://www.data-compression.info/Algorithms/EC/ which are all incorporated herein by reference.

The purpose of the binarisation stage is to provide a bitstream with easily analysable statistics that can be encoded using arithmetic coding, which can adapt to those statistics, reflecting any local statistical features.

**Binarisation**

Binarisation is the process of transforming the multi-valued coefficient symbols into bits. The resulting bitstream can then be arithmetic coded. The original symbol stream could have been coded directly, using a multi-symbol arithmetic coder, but this tends to suffer from 'context dilution', where most symbols occur very rarely and so only sparse statistics can be gathered, which reduces coding efficiency.

One way to binarize a symbol is directly. A symbol is encoded by encoding the constituent bits of the binary representation of its magnitude, followed by a sign bit. This is termed bit-plane coding. However, modelling the resulting bitstream in order to code it efficiently is complicated. Each bit-plane has different statistics, and needs to be modelled separately. More importantly, there are interdependencies between bit-planes, which cannot be known in advance, and which introduce conditional probabilities in the bit-plane models. Modelling these is possible, but for the most part the models do not well represent the statistics of transform coefficients.

Transform coefficients tend to have a roughly Laplacian distribution, which decays exponentially with magnitude. This suits so-called unary binarization. Unary codes are simple VLCs (variable length codes) in which every non-negative number N is mapped to N zeroes followed by a 1 as illustrated in Figure 22.

For Laplacian distributed values, the probability of N occurring is $2^{-(|N|+1)}$, so the probability of a zero or a 1 occurring in any unary bin is constant. So, for an ideal system, only one context would be needed for all the bins, leading to a very compact and reliable description of the statistics. In practice, the coefficients do deviate from the Laplacian ideal and so the lower bins are modelled separately and the larger bins are lumped into one context.

The process is best explained by example. Suppose one wished to encode the sequence: -3 0 1 0 -1

When binarized, the sequence to be encoded is: 0 0 0 1 | 0 | 1 | 0 1 | 1 | 1 | 0 1 | 0

The first 4 bits encode the magnitude, 3. The first bit is encoded using the statistics for bin 1, the second using those for bin 2 and so on. When a 1 is detected, the magnitude is decoded and a sign bit is expected. This is encoded using the sign context statistics; here it is 0 to signify a negative sign. The next bit must be a magnitude bit and is encoded using the bin 1 contexts; since it is 1 the value is 0 and there is no need for a subsequent sign bit. And so on.

## Context modelling

The context modelling in the present system is based on the principle that whether a coefficient is small (or zero, in particular) or not is well-predicted by its neighbours and its parents. Therefore, the codec conditions the probabilities used by the arithmetic coder for coding bins 1 and 2 on the size of the neighbouring coefficients and the parent coefficient.

The reason for this approach is that, whereas the wavelet transform largely removes correlation between a coefficient and its neighbours, they may not be statistically independent even if they are uncorrelated. The main reason for this is that small and especially zero coefficients in wavelet sub-bands tend to clump together, located at points corresponding to smooth areas in the image, and as discussed elsewhere, are grouped together across sub-bands in the parent-child relationship.

To compute the context, two pieces of information are used. Firstly, a value *nhood_sum* is calculated at each point (x,y) of each subband, as the sum of two previously coded quantised neighbouring coefficients:

$$nhood\_sum(x,y) = |c(x-1,y)| + |c(x,y-1)|$$

*nhood_sum* depends on the size of the of the predicted neighbouring coefficients in the case of intra DC band coding. Secondly, it is determined whether the parent of the coefficient is zero or not.

There are sixteen contexts used in frame coding. They are:

0. SIGN0_CTX - sign context, previous symbol is 0

1. SIGN_POS_CTX - sign context, previous symbol is +ve
2. SIGN_NEG_CTX - sign context, previous symbol is -ve
3. Z_BIN1z_CTX - bin 1, parent is zero, neighbours zero
4. Z_BIN1nz_CTX - bin 1, parent is zero, neighbours non-zero
5. Z_BIN2_CTX - bin 2, parent is zero
6. Z_BIN3_CTX - bin 3, parent is zero
7. Z_BIN4_CTX - bin 4, parent is zero
8. Z_BIN5plus_CTX - bins 5 plus, parent is zero
9. NZ_BIN1z_CTX - bin 1, parent is non-zero, neighbours zero
10. NZ_BIN1a_CTX - bin 1, parent is non-zero, neighbours small
11. NZ_BIN1b_CTX - bin 1, parent is non-zero, neighbours large
12. NZ_BIN2_CTX - bin 2, parent is non-zero
13. NZ_BIN3_CTX - bin 3, parent is non-zero
14. NZ_BIN4_CTX - bin 4, parent is non-zero
15. NZ_BIN5plus_CTX - bins 5 plus, parent is non-zero

What 'small' means depends on the sub-band, since the wavelet transform (as implemented in the present system) has a gain of 2 for each level of decomposition a threshold is set individually based on the sub-band type.

After binarization, a context is selected, and the probabilities for 0 and 1 that are maintained in the appropriate context are fed to the arithmetic coding function along with the value itself to be coded.

So in the example of the previous section, when coding the first value, -3, the encoder then checks the values of neighbouring coefficients and the parent coefficient. Based on these data, a different statistical model (that is, a count of 1 and a count of zero) is used to code the first two bins. So the coder maintains, for example, the probabilities that bin 1 is 0 or 1, given that the value of neighbouring coefficients is 0 and the parent is 0 (this is contained in Z_BIN1z_GTX). These are fed to the arithmetic coding engine for encoding the bit in bin 1, and the context probabilities are updated after encoding.

## Arithmetic coding

A description of arithmetic coding can be found at http://en.wikipedia.org/wiki/Arithmetic_coding, which is herein incorporated by reference.

Conceptually, an arithmetic coder can be thought of a progressive way of producing variable-length codes for entire sequences of symbols based on the probabilities of their constituent symbols. For example, if we know the probability of 0 and 1 in a binary sequence, we also know the probability of the sequence itself occurring. So if

P(0)=0.2, P(1)=0.8

then

P(1110111111011110101)=(0.2)3(0.8)17=1.8x10$^{-4}$ (assuming independent occurrences).

Information theory then says that optimal entropy coding of this sequence requires $\log_2(1/P)$=12.4 bits. Arithmetic coding (AC) produces a code-word very close to this optimal length, and implementations can do so progressively, outputting bits when possible as more arrive.

All AC requires are estimates of the probabilities of symbols as they occur, and this is where context modelling fits in. Since AC can, in effect, assign a fractional number of bits to a symbol, it is very efficient for coding symbols with probabilities very close to 1, without the additional complication of run-length coding. The aim of context modelling within the present stystem is to use information about the symbol stream to be encoded to produce accurate probabilities as close to 1 as possible.

The present system computes these estimates for each context simply by counting their occurrences. In order for the decoder to be in the same state as the encoder, these statistics cannot be updated until after a binary symbol has been encoded. This means that the contexts must be initialised with a count for both 0 and 1, which is used for encoding the first symbol in that context.

An additional source of redundancy lies in the local nature of the statistics. If the contexts are not refreshed periodically, then later data has less influence in shaping the statistics than earlier data, resulting in bias, and local statistics are not exploited. The present system adopts a simple way of refreshing the contexts by halving the counts of 0 and 1 for that context at regular intervals. The effect is to maintain the probabilities to a reasonable level of accuracy, but to keep the influence of all coefficients roughly constant.

An abstract class is used to encapsulate the basic functions of both coding and decoding. Particular classes to code the sub-band data are derived from this. By using common context selection and other functions, synchronisation between coder and decoder can be enforced.

Motion estimation and motion compensation

Motion estimation and compensation are known in the literature see, for example, http://en.wikipedia.org/wiki/Motion_compensation, which is incorporated herein by reference.

The present system employs a FrameBuffer class to manage temporal prediction. Each frame is encoded with a header that specifies the frame number in display order, the frame numbers of any references and how long the frame must stay in the buffer. The decoder then decodes each frame as it arrives, searching the buffer for the appropriate reference frames and placing the frame in the buffer. The decoder maintains a counter indicating which frame to 'display' (i.e. push out through the picture input/output to the application calling the decoder functions, which may be a video player, for example). It searches the buffer for the frame with that frame number and displays it. Finally, it goes through the buffer eliminating frames which have expired.

This decoder process allows for quite arbitrary prediction structures to be employed, not just those of MPEG-like GOPs.

Nevertheless, the encoder operates with standard GOP modes whereby the number of L1 frames between I frames, and the separation between L1 frames, can be specified; and various presets for streaming, SDTV (standard definition television) and HDTV (high definition television) imply specific GOP structures.

A prediction structure for frame coding using a standard GOP structure is illustrated in Figure 13.

The FrameBuffer structure gives great flexibility, including the ability for the decoder to decode dynamically-varying GOP structures. However, it also brings some dangers, since at least in theory it means that I frames need not be random access points - that is points where a decoder may start decoding. This is because it is possible for a subsequent L1 or L2 frame to have, as a reference, a frame that temporally precedes a preceding I frame, and indeed forms part of a chain of reference right back to the start of the sequence. So, in some embodiments, signalling indicating a random access point is provided, and at this point the sequence header information would also be repeated.

**I-frame only coding**

Setting the number of L1 frames to be 0 on the encoder side implies that we don't have a GOP, and that we are doing 1-frame only coding. I-frame only coding is useful for editing and other applications where fast random access to all frames is required, but 1-frame only coding is not essential for these applications. Bitstream and wrapping format may be specified, which provide support for index tables that will tell the decoder how it can enter the stream in order to decode a specific frame. This is more difficult, since a chain of several reference frames may need to be decoded in order to reach the desired frame, but it is possible with suitable support.

**Single I frames**

Specifying the number of L1 frames to be negative on the encoder side also implies that a standard GOP does not in fact apply. Instead, a single I frame is used to start encoding, but no other I frames are coded. L1 frames are forward predicted only, at regular specified intervals, and L2 frames lie between them, bidirectionally predicted as illustrated in Figure 13. This arrangement can alternatively be thought of as an infinitely long GOP, and is suitable for file transfer or streaming short sequences, but not for broadcast applications where random access is required, or for streaming across error-prone networks.

**Skipping frames and global motion**

The frame header also contains other information. Firstly, it contains a flag indicating whether or not the frame is skipped or not. In this case, no frame data is sent at all. If this occurs, the decoder will return the most recent decoded frame in temporal order.
The second flag that the frame header contains indicates the presence of global motion data that is a parameterised model of the motion data.
When implemented on the encoder side, these tools provide a powerful impact on compression performance, allowing the frame rate to be scaled down and the motion more heavily compressed, when the encoder bit rate is very limited.

**Interlace coding**

The present system may support special tools for interlace coding. These refine the prediction structure by making it possible to predict fields by fields as well as by frames.

**Overlapped block-based motion compensation**

Motion compensation in the present system uses Overlapped Block-based Motion Compensation (OBMC) to avoid block-edge artefacts which would be expensive to code using wavelets. Pretty much any size blocks can be used, with any degree of overlap selected: this is configurable at the encoder and transmitted to the decoder. The only constraint is that there should be an exact number of macroblocks horizontally and vertically, where a macroblock is a 4x4 set of blocks. This can be quite a significant constraint, since we also require that the dimensions of each component are divisible by 16 to allow for a 4-level wavelet decomposition. This may be achieved by automatically padding the data with black before encoding.
The size of blocks is the only non-scalable feature, and for lower resolution frames, smaller blocks can easily be selected.
The OBMC scheme is based on a separable Raised-Cosine mask, which is illustrated in Figure 23. This acts as a weight function on the predicting block. Given a pixel $p=p(x,y,t)$ in frame t, p may fall within only one block or in up to four if it lies at the corner of a block
Each block that the pixel p is part of has a predicting block within the reference frame selected by motion estimation. The predictor $\tilde{p}$ for p is the weighted sum of all the corresponding pixels in the predicting blocks in frame $t'$, given by $p(x-V_i,y-W_i,t')$ for motion vectors $(V_i,W_i)$. The Raised-Cosine mask has the necessary property that the sum of the weights will always be 1:

$$\tilde{p}(x,y,t) = \sum_i w_i p(x-V_i, y-W_i, t'), \quad \sum_i w_i = 1$$

This may seem complicated but in implementation the only additional complexity over standard block-based motion compensation is to apply the weighting mask to a predicting block before subtracting it from the frame. The fact that the weights sum to 1 automatically takes care of splicing the predictors together across the overlaps.
As explained elsewhere herein, the present system provides motion vectors to 1/8th pixel accuracy. This means upconverting the reference frame components by a factor of 8 in each dimension. The area corresponding to the matching block in the upconverted reference then consists of 64 times more points. These can be thought of as 64 reference blocks on different sub-lattices of points separated by a step of 8'sub-'pixels, each one corresponding to different sub-pixel offsets.

Sub-pixel motion compensation places a huge load on memory bandwidth if done by upconverting the reference by a factor 8 in each dimension. In the present system, however, the reference is upconverted by a factor of 2 in each dimension and the other offsets are computed by linear interpolation on the fly. In other words, the load from the bus is moved to the CPU (central processing unit). The 2x2 upconversion filter has been designed to get the best prediction error across all the possible sub-pixel offsets.

**Motion estimation**

Motion estimation (ME) is specific to the encoder. It is the most complicated part of the system, and can absorb huge system resources, so methods have been found to simplify the process. The present system uses a three-stage approach.

In the first stage, motion vectors are found for every block and each reference to pixel accuracy using hierarchical motion estimation. In the second stage, these vectors are refined to sub-pixel accuracy. In the third stage, mode decisions choose which predictor to use, and how to aggregate motion vectors by grouping blocks with similar motion together.

Motion estimation is most accurate when all three components of the television signal described above are involved, but this is more expensive in terms of computation as well as more complicated. The present system only uses one component. In this case, the luma (Y) component.

**Hierarchical motion estimation**

Hierarchical ME speeds things up by repeatedly downconverting both the current and the reference frame by a factor of two in both dimensions, and doing motion estimation on smaller pictures. At each stage of the hierarchy, vectors from lower levels (smaller versions of the picture) are used as a guide for searching at higher levels. This dramatically reduces the size of searches for large motions.

The present system has four levels of downconversion. The block size remains constant (and the blocks will still overlap at all resolutions) so that at each level there are only a quarter as many blocks and each block corresponds to four blocks at the next higher resolution. Therefore, each block provides a guide motion vector to four blocks at the next higher resolution layer. At each resolution, block matching proceeds by searching in a small range around the guide vector for the best match using the RDO metric (which is described below).

**Search strategies in hierarchical ME**

The hierarchical approach dramatically reduces the computational effort involved in motion estimation for an equivalent search range. However, it risks missing small motions and it might not make good decisions when there are a variety of motions near to each other.

To mitigate this, the codec also always uses the zero vector (0,0) as another guide vector. This allows it to track slow as well as fast-moving objects. Finally, the motion vectors already found in neighbouring blocks can also be used as guide vectors, it they have not already been tried.

Since each layer has twice the horizontal and vertical resolution of the one below it, the search could just be made in an area +/-1 pixel of the guide vectors. In fact, the search ranges are always larger than this because otherwise the motion estimator could get trapped in a local minimum.

**Sub-pixel refinement and upconversion**

Sub-pixel refinement also operates hierarchically. Once pixel-accurate motion vectors have been determined, each block will have an associated motion vector $(V_0, W_0)$ where $V_0$ and $W_0$ are multiples of 8. 1/2-pel (or pixel) accurate vectors are found by finding the best match out of $(V_0, W_0)$ and its 8 neighbours: $(V_{0+4}, W_{0+4})$, $(V_0, W_{0+4})$, $(V_{0-4}, W_{0+4})$, $(V_{0+4}, W_0)$, $(V_{0-4}, W_0)$, $(V_{0+4}, W_{0-4})$. $(V_0, W_{0-4})$, $(V_{0-4}, W_{0-4})$. This in turn produces a new best vector $(V_1, W_1)$, which provides a guide for 1/4-pel refinement, and so on. The process is illustrated in Figure 24.

The sub-pixel matching process is complicated slightly since the reference is only upconverted by a factor of 2 in each dimension, not 8, and so 1/4 and 1/8 pel matching requires frame component values to be calculated on the fly by linear interpolation.

**Video upconversion and downconversion**

Video upconversion or downconversion are the processes of converting a two dimensional sampled signal, representing a sampled image, onto a different sampling lattice.

Upconversion converts the signal to lie on a sampling lattice with more frequent samples. For example, one might wish to convert a standard definition TV image, with 720 pixels and 576 lines onto a HDTV raster with 1920 pixels and 1080 lines. In this process no new information is created and so an upconverted image will look "softer" than one originated on the HDTV standard.

Downconversion is the opposite process. It takes an image and converts it to lie on a sampling lattice with fewer (less frequent) samples. For example, one might wish to downconvert an HDTV image to lie on a standard definition lattice. For example one might wish to convert an HDTV image, with 1920 pixels and 1080 lines onto a standard definition TV image with 720 pixels and 576 lines. The standard definition lattice, containing fewer sampling points, cannot support as much information as the HDTV lattice. Therefore information is lost in the downconversion process.

In scalable video compression, upconversion is typically by factors of two in both horizontal and vertical dimensions. So, for the purposes of scalable coding, one might wish to convert and HDTV image, e.g 1920 pixels by 1080 lines, to a lattice with 960 pixels by 540 lines, and vice versa.

There are many techniques that can be used for upconversion and downconversion, which are detailed in the literature. This process is known to a person skilled in the art of video processing.

The following references describe the process and they are all incorporated herein by reference:

http://dirac.sourceforge.net/documentation/algorithm/upconversion/upconversion. pdf;

http://downloads.bbc.co.uk/rd/pubs/reports/1984-20.pdf;

Digital Television Edited by C.P. Sandbank, John Wiley and Sons Ltd (30 April 1990) ISBN: 0471923605. Chapter 6 by C.K.P. Clarke "interpolation" pages 287-374; and

Television Standards Conversion by Tim Borer. Ph.D. Thesis for Department of Electronic and Electrical Engineering, University of Surrey, Guildford, England. 1992. Chapters 3 & 4 pages 46 to 98.

Other references are available.

## Macroblock structures and motion vector data

The present system uses macroblock (MB) structures to introduce a degree of adaption into motion estimation by allowing the size of the blocks used to vary. The motion estimation stage of the encoding is organised by macroblock, and each combination of block size and prediction mode is tried using the RDO block-matching metric. This is called "mode decision" and the best solution adopted is macroblock by macroblock.

A macroblock consists of a 4x4 array of blocks, and there are three possible ways of splitting an MB, which are illustrated in Figure 25. There are as follows.

Splitting level 0: no split, a single MV per reference frame for the MB;

Splitting level 1: split into four sub-macroblocks (sub-MBs), each a 2x2 array of blocks, one MV per reference frame per sub-MB;

Splitting level 2: split into the 16 constituent blocks.

The splitting mode is chosen by redoing motion estimation for the sub-MBs and the MB as a whole, again using the RDO metric described above, suitably scaled to take into account the different sizes of the blocks. At the same time, the best prediction mode for each prediction unit (block, sub-MB or MB) is chosen. Four prediction modes are available:

INTRA: intra coded, predicted by DC value;

REF1_ONLY: only predict from the first reference;

REF2_ONLY: only predict from the second reference (if one exists);

REF1AND2: bi-directional prediction.

A further complication is that mode data itself incurs a cost in bit-rate. So, a further MB parameter is defined, which records whether a common block prediction mode is to be used for the MB. If so, then each prediction unit will have the same mode, and it is only necessary to record the mode once for that MB. Otherwise, all the prediction modes may be different.

Of course, if the splitting level is 0, then the MB comprises a single prediction unit in any case, and so there is no need to specify whether there is a common mode or not.

The result is a hierarchy of parameters: the splitting level determines whether there needs to be a common mode parameter or not; the MB parameters together determine what modes need to be transmitted; and the modes for each prediction unit themselves determine what motion vectors and block DC values (in the case of INTRA, described above) need to be present.

In motion estimation, an overall cost for each MB is computed, and compared for each legal combination of these parameters. This is a difficult operation, and has a very significant effect on performance. The decisions interact very heavily with those made in coding the wavelet coefficients of the resulting residuals, and the best results depend on picture material, bit rate, the block size and its relationship to the size of the video frames, and the degree of perceptual weighting used in selecting quantisers for wavelet coefficients. Parameters for controlling the mode decision are estimated.

**Choice of block sizes**

The present system can use any block sizes, by ensuring that the input frames are padded so that an integral number of macroblocks can fit both horizontally and vertically. The padding is by edge values and is applied to the right-hand side and bottom of the frames. Sometimes, additional padding is necessary so that the wavelet transform can be applied. In this case, the frames are padded by both amounts, but the number of blocks is not increased to cover the transform padding area since the data here is not displayed and can be set to zero after motion compensation.

As an example, consider a picture of width 100 pixels, with horizontal block separation set to be 10 pixels. Then the picture must be padded to 120 pixels to give 3 full macroblocks horizontally. To apply a 4-level wavelet transform, the picture must be further padded to 128 pixels, but the number of macroblocks is not also increased. Motion compensation, therefore, covers all the original picture area but not the fully padded picture area.

Having said that, the present system is flexible in terms of block sizes. Choosing poor block sizes will introduce overhead through the padding process.

Blocks parameters do have to meet some constraints, however, so that the overlapping process works properly, especially in conjunction with sub-sampled chroma components (for which the blocks will be correspondingly smaller). For example, the block separations and corresponding lengths must differ by a multiple of two, so that overlap is symmetric. Normally this is enforced by the encoder, which may recompute unsatisfactory block parameters.

**Block data**

Parameters other than the splitting level and the common mode parameter are called block data, even though they may apply to blocks, sub-MBs or the MB itself depending on the value of the MB data. The prediction mode has already been described. The five remaining block parameters are:

REF1_x: horizontal component of motion vector to the first reference frame;

REF1_y: vertical component of motion vector to the first reference frame;

REF2_x: horizontal component of motion vector to the second reference frame;

REF2_y: vertical component of motion vector to the second reference frame; and

DC: DC or average value for the prediction unit for each component (Y, U or V) being coded, to 8-bit accuracy.

Clearly not all of these values must be coded. If the prediction mode is REF1_ONLY then REF2_x and REF2_y will not be coded, for example, and if the prediction unit is not INTRA, then no DC value needs to be sent.

**Motion vector data coding architecture**

Motion vector (MV) data coding is important to the performance of video coding, especially for codecs with a high level of MV accuracy (1/4 or 1/8 pel). For this reason, MV coding and decoding is quite complicated, since significant gains in efficiency can be made by choosing a good prediction and entropy coding structure. The basic format of the MV coding module is similar to the coding of coefficient data: it consists of prediction, followed by binarisation, context modelling and adaptive arithmetic coding. It is illustrated in Figure 26.

Overall, a single pass is made over the macroblocks to code the MV data: the MB data and the block data pertaining to the MB. The MB data is coded first, splitting level followed by common mode (if necessary i.e. if the splitting level is not 0). The block data is coded for the prediction units, considered in raster order, with the mode first followed by the reference 1 motion vector and/or the reference 2 motion vector, as appropriate.

**Prediction of motion vector data**

All the motion vector data is predicted from previously encoded data from nearest neighbours. In predicting the data, a number of conventions are observed.

The first convention is that all the block data (prediction modes and the motion vectors themselves, and/or any DC values) are actually associated with the top-left block of the prediction unit to which they refer. This allows for a consistent prediction and coding structure to be adopted.

As illustrated in Figure 27, if splitting level=1 and common mode is false then the prediction units in a MB are sub-MBs. Nevertheless, the prediction mode and any motion vectors are associated with the top-left block of each sub-MB and values need not be coded for other blocks in the sub-MB.

if MB_split=2 but MB_common=1 then the prediction mode (INTRA, REF1_ONLY etc) need only be coded for the top-left block in the MB. Motion vectors still need to be coded for every block in the MB if the mode is not INTRA.

The second convention is that all MB data is scanned in raster order for encoding purposes. All block data is scanned first by MB in raster order, and then in raster order within each MB. That is, taking each MB in raster order, each block value which needs to be coded within that MB is coded in raster order as illustrated in Figure 28.

The third convention concerns the availability of values for prediction purposes when they may not be coded for every block. Since prediction will be based on neighbouring values, it is necessary to propagate values for the purposes of prediction when the MV data indicates that values are not required for every block.

Figure 29 shows the effect of this. Suppose we are coding REF1_x. In the first MB, splitting level=0 and so at most only the top-left block needs a value, which can be predicted from values in previously coded MBs. As it happens, the prediction mode REF1_ONLY and so a value is coded. The value v is then deemed to be applied to every block in the MB. In the next MB, splitting level=1 and common mode=false, so the unit of prediction is the sub-MB. In the top-left sub-MB the prediction mode is, say, REF1AND2 and so a value x is coded for the top-left block of that sub-MB. It can be predicted from any available values in neighbouring blocks, and in particular the value v is available from the adjacent block.

**Prediction methods**

The prediction used depends on the MV data being coded, but in all cases the aperture for the predictor is shown in Figure 30. This aperture is interpreted as blocks where block data is concerned and MBs where MB data is concerned.

the splitting level is predicted as the mean of the levels of the three MBs in the aperture. Likewise, the common mode value is predicted by the mean of the three values in the aperture, by interpreting a Boolean value as a 0 or 1.

Of the block data, the prediction mode is also coded as a mean, the various modes being given values from 0 (INTRA) to 3 (REF1AND2). The motion vector data is predicted by taking the median of each component separately. The median helps ensure that the prediction is not strongly biased by large motion vectors.

The DC values are predicted by the average of the three values in the aperture.

In many cases, values are not available from all blocks in the aperture, for example if the prediction mode is different. In this case, the blocks are merely excluded from consideration. Where only two values are available, the median motion vector predictor reverts to a mean. Where only one value is available, this is the prediction. Where no value is available, no prediction is made, except for the DC values, where 128 is used by default.

In the case of the MB data, the number of possible values is only 3 in the case of MB_split and 2 in the case of MB_common. The prediction therefore can use modulo arithmetic and produces an unsigned prediction residue of 0,1 or 2 in the first case and 0 or 1 in the second. All other predictions produce signed prediction residues.

**Motion Vector Data Entropy Coding**

Entropy coding of the MV prediction residuals uses the same basic architecture as for wavelet coefficient coding: unary VLC binarization, followed by adaptive arithmetic coding with multiple context models. For MV coding there are many different types of data, and these have their own context models.

There are 47 motion vector data contexts in total. They are:

0. YDC_BIN1_CTX - context for bin 1 of the luma DC values

1. YDC_BIN2plus_CTX - context for the remaining bins of the luma DC values

2. YDC_SIGNO_CTX - context for the sign of the luma DC values

3. UDC_BIN1_CTX - context for bin 1 of the U component DC values

4. UDC_BIN2plus_CTX - context for the remaining bins of the U component DC values

5. UDC_SIGNO_CTX - context for the sign of the U component DC values

6. VDC_BIN1_CTX - context for bin 1 of the V component DC values

7. VDC_BIN2plus_CTX - context for the remaining bins of the V component DC values

8. VDC_SIGN0_CTX - context for the sign of the V component DC values

9. REF1xBIN1_CTX- bin 1, reference 1 x values

10. REF1xBIN2_CTX - bin 2, reference 1 x values

11. REF1xBIN3_CTX - bin 3, reference 1 x values

12. REF1xBIN4_CTX - bin 4, reference 1 x values

13. REF1xBIN5plus_CTX - remaining bins, reference 1 x values

14. REF1x_SIGNO_CTX - sign, reference 1 x values, previous value 0

15. REF1x_SIGNP_CTX - sign, reference 1 x values, previous value positive

16. REF1x_SIGNN_CTX - sign, reference 1 x values, previous value negative

17. REF1yBIN1_CTX - bin 1, reference 1 y values

18. REF1yBIN2_CTX - bin 2, reference 1 y values

19. REF1yBIN3_CTX - bin 3, reference 1 y values

20. REF1yBIN4_CTX - bin 4, reference 1 y values

21. REF1yBIN5plus_CTX - remaining bins, reference 1 y values

22. REF1y_SIGNO_CTX - sign, reference 1 y values, previous value 0

23. REF1y_SIGNP_CTX - sign, reference 1 y values, previous value positive

24. REF1y_SIGNN_CTX - sign, reference 1 y values, previous value negative

25. REF2xBIN1_CTX - bin 1, reference 2 x values

26. REF2xBIN2_CTX - bin 2, reference 2 x values

27. REF2xBIN3_CTX - bin 3, reference 2 x values

28. REF2xBIN4_TX - bin 4, reference 2 x values

29. REF2xBIN5plus_CTX - remaining bins, reference 2 x values

30. REF2x_SIGNO_CTX - sign, reference 2 x values, previous value 0

31. REF2x_SIGNP_CTX - sign, reference 2 x values, previous value positive

32. REF2x_SIGNN_CTX - sign, reference 2 x values, previous value negative

33. REF2yBIN1 CTX - bin 1, reference 2 y values

34. REF2yBIN2_CTX - bin 2, reference 2 y values

35. REF2yBIN3_CTX - bin 3, reference 2 y values

36. REF2yBIN4_CTX - bin 4, reference 2 y values

37. REF2yBIN5plus_CTX - remaining bins, reference 2 y values

38. REF2y_SIGN0_CTX sign, reference 2 y values, previous value 0

39. REF2y_SIGNP CTX - sign, reference 2 y values, previous value positive

40. REF2y_SIGNN_CTX - sign, reference 2 y values, previous value negative

41. PMODE_BIN1_CTX - bin 1, prediction mode value

42. PMODE_BIN2_CTX - bin 2, prediction mode value

43. PMODE_BIN3_CTX - bin 3, prediction mode value

44. MB_CMODE_CTX - context for MB common block mode

45. MBSPLIT_BIN1_CTX - bin 1, MB splitting mode values

46. MBSPLIT_BIN2_CTX - bin 2, MB splitting mode values

The contextualisation also exploits the boundedness of some of the data types to avoid coding the last bin in the binarisation. For example, the splitting mode residue is either 0, 1, or 2. 2 is binarised to be 0 0 1, but when the second zero has arrived the decoder knows that the residue is bigger than 1, and so must be two. So the VLC can be truncated to 0 0, which is coded with just two bins. The same applies to the prediction mode and the macroblock common mode data.

**Summary**

In summary, image motion is tracked and the motion information used to make a prediction of a later frame. A wavelet transform is applied to the predicted frame and the transform coefficients are quantised and entropy coded. The term "hybrid" is used in this motion-compensated hybrid codec because both a transform and motion compensation are used. Motion compensation is used to remove temporal redundancy and the transform is used to remove spatial redundancy. Entropy coding packs the bits efficiently into the bitstream. Dirac, the present system, like MPEG 4 AVC, uses arithmetic coding rather than the more usual Huffman codes.

Referring again to the encoder 100 of Figure 11, the encoder 100 comprises a signal path 102, which extends from the input of the encoder 104 to a subtractor 106. A signal path 108 extends out of the subtractor and passes to a forward wavelet transformer 110. A signal path 112 from the forward transfomer extends to a quantiser 114. A signal path 116 extending out from the quantiser 114 branches. One branch 118 connects to an entropy coder 120 (wavelet coefficient entropy coder) and the other branch 122 extends to an inverse quantiser 124. A signal path out of the entropy coder 126 forms part of the output from the encoder 100.

A signal path 128 from the inverse quantiser 124 extends into an inverse wavelet transformer 130. A signal path 132 extends out of the inverse transformer 130 into an adder 134. A signal path 136 extends out from the adder 134 into two branches 138, 140. One branch 138 extends to a motion compensator 142. The other branch 140 extends into a motion estimator 144.

Two signal paths 146, 148 extend out from the motion estimator 144. One of the signal paths 146 extends into a motion vector entropy coder 150. The other signal path 148 extends into a motion compensator 142. An output signal path 152 from the motion vector entropy coder 150 joins into the output signal path 126 from the entropy coder 120 to form output 154.

A signal path 156 out from the motion compensator 142 extends into a multiplier 158. The multiplier 158 has a signal input 160 for a signal to indicate whether the signal output from the motion compensator 142 represents an inter frame or an intra frame (these are described above). The signal input to the multiplier has a zero for indicating an intra frame and a one for indicating an inter frame. The multiplier has an output signal path 162 that branches. One branch 164 extends into the subtractor 106. The other branch 164 extends into the adder 134.

In use, a group of pictures or is stored in a buffer (not shown) before the input 104. As described above and as shown in Figure 13, the GOP comprises frames in the following order: 1, L2, L2, L1, L2, L2, L1. The frames need to be encoded so that frames on which other frames are dependent for coding are coded first. Therefore, the intra frame (I) (which is encoded without reference to any other frame) is coded first. Then, the inter frame which is dependent on the I frame only (the first L1 frame) is encoded. Then the first and second L2 frames are encoded, then the second L1 frame and finally the last two 12 frames are encoded. The buffer outputs signals representing the images in this order.

The frames in the GOP are acted on by the encoder 100 as follows.

First, the encoder 100 is initialised by setting the input signal 160 to the multiplier 158 to zero.

A first (intra, I) frame in a spatial domain representation arrives at the input 104 from the buffer. It passes along signal path 102 and into the subtractor 106. The signal is not changed by the subtractor because the signal output from the multiplier is zero (so nothing is subtracted from the signal). A signal representing the first intra frame I is transmitted through the signal path 108 to the forward transformer 110 where the entire frame I is wavelet transformed as described above into the frequency domain. A signal representing the wavelet transformed or frequency domain image is then transmitted through the signal path 112 to the quantiser 114 where first coefficient prediction is implemented and then the coefficients of the wavelet transformed image are quantised as described above. A signal representing the quantised coefficients of the wavelet transformed frame is then transmitted along the signal path 116 and along both branches 118 and 122 of the signal path. The signal representing the quantised wavelet transformed frame is input into the entropy coder 120 where it is entropy coded as described above (see the section on wavelet coefficient coding) and the entropy coded signal is output along signal path 126. The wavelet transformed signal that is transmitted along the other signal path 122 from the quantiser 114 is input into the inverse quantiser 124 where it is inverse quantised and then output along signal path 128 into the inverse wavelet transformer 130 where the entire representation of the image is inverse wavelet transformed as described above so that the representation is in the spatial domain. This reconstructs an estimate of the I frame in the form of a correction signal. It is not an exact representation of the original input signal as errors are introduced by the quantisation process. It is an approximation, estimation or prediction of the image. This signal then passes along the signal path 132 and into the adder 134. The adder 134 has no effect on intra frames because the signal along signal path 164 is zero as the output from the multiplier 158 is zero as mentioned above. The same signal that was input into the adder 134 is then output along signal paths 136, 138 and 140 to the motion estimator 144 and motion compensator 142. The signal is stored in buffers or memories (not shown) in the motion compensator 142 and motion estimator 144. No motion estimation or compensation is carried out on the intra frame and so no signal is output from the entropy coder 150.

Next, the first inter frame (L1) is processed by the encoder 100.

The input 160 into the multiplier 158 is set to one.

As with the intra frame, a signal representing the L1 image in the spatial domain is transmitted from the buffer along the signal path 102 to the subtractor 106. As the input to the multiplier 158 is set to one, the signal from the motion compensator 142 which represents the first I frame is multiplied by one and thus the representation of the I frame is transmitted to the subtractor 106 along signal paths 162 and 164. Signal paths 162 and 164 carry a signal representing a prediction of the preceding picture. In this case, the I picture. The signal representing the first L1 image is subtracted from the representation of the I frame. The result is output along signal path 108. It is input into the forward wavelet transformer 110 where it is wavelet transformed into the frequency domain. The resulting signal is then output and transmitted to the quantiser 114 along signal path 112. The signal is input into the quantiser 114 where first coefficient prediction is implemented and then the coefficients of the wavelet transformed image are quantised as described above. The quantised signal is output along signal path 116 and along both branches 118 and 122. The output signal is transmitted into the wavelet coefficient entropy coder 120 where it is entropy coded. A representation of the entropy coded difference I frame and the first L1 frame is output along signal path 126.

The quantised signal is transmitted along the signal path 122 to the inverse quantiser 124 where the coefficients of the frequency domain representation are inverse quantised as described above and then output along signal path 128.

The signal is transmitted along the signal path 128 to the inverse wavelet transformer 130 where it is inverse wavelet transformed into the spatial domain and output along signal path 132. The output signal represents a spatial domain representation of the difference between the I and L1 frames. It is not a perfect representation as some error is introduced by the quantisation process. It is an approximation or prediction of the image. The signal from signal path 132 is input into the adder 134.

As the input 160 to the multiplier 158 is set to one, a signal representing a spatial domain representation of the I frame is transmitted along the signal path 164 to the adder 134. The adder 134 adds together the spatial domain representation of the I frame and the difference between the I frame and the L1 frame and outputs the result, which corresponds to an approximation, estimation or prediction of a representation of the L1 frame, along signal paths 136, 138, 140. Thus, the representation of an approximation of the L1 frame is input into the motion estimator 144 and motion compensator 142 where they are stored in buffers (not shown). As always, motion estimation and compensation are carried out in the spatial domain.

Motion estimation is carried out in the motion estimator 144 as described above based on the stored I and L1 frames. Signals representing the resulting motion vectors are output along signal paths 146 and 148.

The motion vectors from signal path 146 are input into the entropy coder 150 where they are entropy coded as described above. A signal representing the entropy coded motion vectors are output along signal path 152 to the output 154.

The signal representing the vectors output along signal path 148 are input into the motion compensator 142. Here, motion compensation as described above is carried out based on the I and L1 frame and a signal representing the motion compensated spatial domain approximation of the L1 frame is output. Generally, this is a better approximation or prediction than the approximation or prediction of the L1 frame at signal path 132.

The L2 frames are then processed in turn. The processing is the same as the L1 frames except that the motion vectors are generated based on a later and an earlier reference frame in the form of the L1 frame and the I frame. The image that is subtracted from the input L2 frame and added at the adder 134 is the estimation of the L1 frame that is output from the motion compensator along signal path 156 (and subsequently multiplied by one at the multiplier 158 and output along signal paths 162 and 164).

The subsequent L1 and L2 frames in the GOP are then processed in the order described above.

The output signal 154 from the encoder may be broadcast, such as for television (either HDTV or SDTV) or transmitted to a storage device, such as a hard drive or DVD, where it is stored.

In an alternative arrangement (not shown), no inverse quantiser 124 or inverse transformer 130 are provided and there is no signal path between the output 116 of the quantiser 114 and the motion estimator 144 and compensator 142. Instead, a signal path is located between the input path 102 and the motion estimator 144. A signal representing the input image can be is transmitted along this signal path. Motion estimation and compensation is then based on this perfect representation of the input image rather than the approximation output at signal path 132.

The example decoder 200 of Figure 12 comprises an input for the encoded signal 202 into an entropy decoder 204. Two signal paths 206 and 208 extend from the entropy decoder 204. One path 206 extends to an inverse quantiser 210 and the other signal path 208, for signals representing motion vector information, extends to a motion compensator 212.

A signal path 212 extends from the inverse quantiser 210 to an inverse transformer or inverse wavelet transformer 214. A signal path 216 extends from the output of the inverse transformer 214 to an adder 218. A signal path 220 extends from the adder 218. The path 220 has two branches. One branch 222 extends to form the decoded signal output 224. The other branch 226 extends to the motion compensator 212.

The motion compensator 212 has an output signal path 228 that extends to a multiplier 230. The multiplier 230 has a signal input 232 for a signal to indicate whether the signal output from the motion compensator 212 represents an inter frame or an intra frame. The signal input 232 to the multiplier 230 has a zero for indicating an intra frame and a one for representing an inter frame. An output signal path 234 from the multiplier extends into the adder 218.

In use, a signal representing the first intra frame I encoded by the encoder described above is input along signal path 202. The encoded signal is transmitted into the entropy decoder 204 where it is entropy decoded. The entropy decoder 204 separates the information relating to the image data into signal path 206 and the information relating to motion vectors into signal path 208. However, as the I frame data does not include any motion vector information, no motion vector information is transmitted along signal path 208. Image information is transmitted along signal path 206 to the inverse quantiser

210. Here, the signal is inverse quantised to give a signal representing the coefficients of the wavelet transformed intra frame image. They are transmitted along signal path 212 to the inverse wavelet transformer 214 where they are inverse wavelet transformed to produce a signal representing an estimation or prediction of the original intra frame image I in the spatial domain. This signal is output along signal path 216 into adder 218. As the input 232 into the multiplier 230 is set to zero, there is no signal transmitted along signal path 234. The adder 218 adds this zero signal to the signal representing an estimation of the original intra frame image. The signal representing an estimation of the original intra frame image I is then output along signal path 220 and along signal paths 222 to 226. The representation of the image I is transmitted to the motion compensator, where it is stored in a buffer or memory (not shown). The output 224 from signal path 222 is stored in a buffer or memory (not shown) so that the frames can be reordered into the original frame sequence.

Next, the input 232 to the multiplier 230 is set to one. The first encoded L1 frame is received at the entropy decoder 204 where it is entropy decoded. The motion vector data is extracted from the entropy decoded data and is transmitted through the signal path 208 to the motion compensator 212. The signal in signal path 208 is the same as that transmitted in the encoder 100 along signal path 146. The image data is transmitted along signal path 206 to the inverse quantiser 210. The signal in signal path 206 is the same as in the encoder 100 along signal path 118. The signal is inverse quantised in the inverse quantiser 210 to give a signal representing the difference between the coefficients of the wavelet transformed L1 image and the I image. They are transmitted along signal path 212 to the inverse wavelet transformer 214 where they are inverse wavelet transformed to produce a signal representing an estimation of the difference between the original intra frame image I and the L1 image in the spatial domain. This signal is output along signal path 216. The signal in signal path 216 is the same as that in the encoder in signal path 132.

The signal carrying the motion vector information passes along signal path 208 to the motion compensator 212. The motion compensator 212 applies the motion vectors to the stored I frame (as described above) to give a prediction of the L1 frame. This is stored in the motion compensator 212.

The signal in signal path 216 is input into adder 218. As the input 232 into the multiplier 230 is set to one, the signal transmitted along signal path 234 is the decoded I frame in the spatial domain. It is the same signal as in the encoder along signal path 162. The adder 218 adds the signal representing the I frame in the spatial to the signal representing the difference between the I frame and the L1 frame in the spatial domain, which results in a signal representing an estimation of the L1 image in the spatial domain being output along signal path 220. The signal here is the same as in the encoder 100 in signal path 136. This signal is then output along signal paths 222 and 226. The representation of the image L1 in the spatial domain is transmitted along path 226 to the motion compensator 212, where it is stored in a buffer (not shown) together with the representation of the I image in the spatial domain. The signal from signal path 222 is output at 224 and stored in a buffer (not shown) together with the I frame so that the frames can be reordered into the original frame sequence.

The subsequent frames are decoded in the same way, in the same order that they are encoded and transmitted from the encoder 100. The L2 frames are decoded from a motion vector improved estimation of the L1 and I frames stored in the buffer of the motion compensator 212, which are output along signal path 228. The signal along this path is the same as that in signal path 156 of the encoder.

Finally, all the decoded frames in the GOP stored in the buffer are transmitted in the order in which they were originally received at the encoder 100.

## Scalable Coding Using Wavelets

This section starts by considering how spatial scalability is implemented for MPEG 2. It then considers how it could be implemented for wavelets. The advantages of wavelets are pointed out and the reasons for the relatively poor performance of known scalable coding with block transform codecs are considered. The reasons for using wavelets for spatial scalability are summarised elsewhere in this specification.

Figures 1 and 2 illustrate a known spatial scalable encoder 300 and decoder 400, such as would be used for MPEG2. The encoder (shown in Figure 1) 300 is two coupled non-scalable coders (encoders) 100 as described above. The base (lower) layer coder (encoder) 100 simply codes a low resolution, downconverted, version of the high resolution input. The enhancement (upper) layer coder (encoder) 100 is also, more or less, a known encoder 100 that has the option of using the locally decoded output of the lower layer encoder 100 as an alternative prediction.

Similarly, the decoder (shown in Figure 2) is two coupled non-scalable decoders 200 of the type described above.

The base layer encoder 310 and enhancement layer encoder 320 of the spatial scalable encoder 300 are similar to the encoder 100 described above, and the base layer decoder 410 and enhancement layer decoder 420 of the spatial scalable decoder are similar to the decoder 200 described above. Like features have been given like reference numerals. The operation of the various components are explained in the section above or in the prior art.

The spatial scalable encoder 300 of Figure 1 comprises an input 330 for the high resolution GOP. The images are input in the same order as for the encoder 100 described above. The input 330 branches into two signal paths 332 and 334. Signal path 332 extends into a down converter 336, which converts the high resolution input into a resolution compatible with the base layer encoder 310.

An output signal path 338 extends from the down converter 334 and forms the input for the base layer encoder 310. This is equivalent to the input 104 of the encoder of Figure 11.

The other signal path 334 from the input 330 extends into the input of the enhancement layer encoder 334. This is equivalent to the input 104 of the encoder of Figure 11.

The base layer encoder 310 comprises a further signal path 340 between the adder 134 and signal path 138. The further signal path 340 extends to an upconverter 342, which converts the low resolution base layer signal in signal path 340 into one that is compatible with the higher resolution or higher quality enhancement layer encoder 320. A signal path 344 from the upconverter extends into a mixer 346 in the enhancement layer encoder 320. The mixer 346 replaces the multiplier (multiplier 158 in the example encoder of Figure 11) in the enhancement layer encoder 320.

The output 348 from the base layer encoder 310 carries the base layer encoded signal. It is equivalent to the output 154 of the encoder of Figure 11. The output 350 from the enhancement layer encoder 320 carries the enhancement layer encoded signal. It is equivalent to the output 154 of the encoder of Figure 11.

The operation of each of the encoders is similar to the encoder of Figure 11 with the base layer encoder operating on the low resolution base layer signal and the enhancement layer operating on the high resolution input (at a quality level greater than the quality level of the base layer). The example shown uses MPEG 2 encoders. These differ from the encoder of Figure 11 in that the forward transformer and inverse tranformer use discrete cosine transforms in blocks and inverse discrete cosine transforms in blocks respectively rather than wavelet transforms and inverse wavelet transforms over the whole image.

In use, the frames of the GOP are input in the same order as the example of Figure 11. The operation of the down converter 336, which reduces the number of pixels representing the image so that there are the same number and orientation as the pixels in the base layer encoder, is described above. This results in a signal that can be operated on by the base layer encoder 310.

The enhancement layer encoder 320 operates simultaneously with the base layer encoder 310. The signal output from the adder 134 along signal path 136 is transmitted along signal path 340 to the upconverter 342. This signal represents the image received at the input 338, but some error is introduced through the quantisation/ inverse quantisation process. The upconverter upconverts the representation of the image to have the same number and orientation of pixels as the image at input 330 so that it can be used by the enhancement layer encoder 320. The operation of the upconverter is described above.

The upconverted image passes along signal path 344 to the mixer ("W") 346.

If the upconverted signal from the base layer is a better representation of the input image then it is used by the enhancement layer encoder as the prediction signal that passes along signal path 164 and into the adder 106. If the upconverted signal from the base layer is a worse representation of the input image then it is not used by the enhancement layer encoder as the prediction signal that passes along signal path 164 and into the adder 106. Instead, the enhancement layer encoder 320 uses the motion compensated representation of the image that passes along signal path 156.

The mixer ("W') 346 is a switch that can switch between either allowing the signal form path 156 to pass into signal path 162 or to allowing the signal from path 344 to pass into signal path 162.

The signal 344 from the base layer can be better for I frames only and the switch is changed so that the best image is transmitted along signal path 164.

It should be noted that the mixer 346 switches between representations of the prediction image in the spatial domain.

A representation of the position of the mixer 346 for each I frame must be transmitted together with the encoded enhancement layer information as it is required by the decoder. This adds to the bit rate requirement of the enhancement layer encoder 300. Typically, the bit rate of the enhancement layer encoder suitable for HDTV is 16Mbit/s and the bit rate of the base layer encoder for SDTV is 4 Mbit/s.

The spatial scalable decoder 400 of Figure 2 comprises a base layer decoder 402 and an enhancement layer decoder 404. The base layer encoded signal is input into the input 406 of the base layer decoder 404, which is equivalent to the input 202 of the decoder of Figure 12. The enhancement layer encoded signal is input into the input 408 of the enhancement layer decoder 404, which is equivalent to the input 202 of the decoder of Figure 12.

Compared to the decoder described above and shown in Figure 12, a further signal path 410 extends from the signal path 220 output from the adder 218. Signal path 410 extends into an upconverter 412, which converts the image signal from the base layer decoder to have a suitable number and arrangement of pixels for the enhancement layer decoder (as described above). An output signal path 414 extends from the upconverter 412 and into a mixer ("W") 416 in the enhancement layer decoder 404. The mixer 416 replaces the multiplier (multiplier 230 in Figure 12) in the enhancement layer decoder.

The operation of each of the decoders of Figure 2 is similar to the decoder of Figure 12 with the base layer decoder operating on the low resolution base layer signal and the enhancement layer operating on the high resolution input.

As in the scalable encoder of Figure 1, the mixer 416 is a switch. The switch is on when a signal is received from the encoder that the enhancement layer intra frame being decoded has been encoded based on a prediction signal from the base layer encoder rather than the enhancement layer encoder. Otherwise, the switch is off.

In other words, the upper (enhancement) layer coder can choose between using the usual motion compensated prediction or the alternative upconverted low resolution picture from the lower (base) layer coder as a prediction. This is correspondingly decoded in the decoder. The two predictions are combined in the block labelled "W" (the mixer). In P. N. Tudor's document reference [1] this is described as an "adaptive weighting function". In practice, MPEG 2 sends additional information for each block indicating whether the motion compensated or the upconverted prediction is to be used. That is, for MPEG 2, W is simply a switch[1]. The operation of "W" is key to making an effective scalable coder and is discussed in more detail below.

Known spatially-scalable coding has some shortcomings. Usually, the motion compensated prediction is a better prediction than the upconverted prediction. Therefore, for interframes, the enhanced layer coder simply functions as an ordinary non-scalable coder. The upconverted prediction does, however, help for intra frames, although for interlaced video similar advantages can be achieved by coding the intra frame as an intra field followed by a P (predictive) field. Both layers perform independent motion estimation so that motion information is duplicated in the two layers. Typically with MPEG 2 the I (intra), B (bidirectionally predictive) and P frames each require a similar total number of bits, even though in a typical 12 frame GOP (group of pictures) there is only 1 I frame, 3 P frames and 8 B frames. Since scalable coding mostly benefits I frames then, assuming the two layers required broadly similar bit rates, we would only expect the bit rate of the upper layer to be reduced by about 1/6. Typically we might achieve bit rate

reductions in the upper layer of between 10% and 15%. The lower layer may even require a slightly higher bit rate than in a non-scalable scheme because it operates on a downconverted image with a fuller spectrum. Overall the modest gains of scalable coding in MPEG 2 are usually outweighed by its additional complexity

[1] The MPEG 2 Spec appears to allow a 50:50 mix of motion compensated prediction and upconverted base layer, and for P frame the switch can either select motion compensated prediction or the 50:50 mix.

**Base Layer Coder and Decoder that Operate in the Frequency Domain**

Figure 3 illustrates an encoder or scalable encoder 500 for encoding a signal carrying information representing video images or a representation of an image. The scalable coder (encoder) 500 of Figure 3 is similar to the scalable encoder described above with reference to Figure 1 and like features have been given like reference numerals. The operation of the various components are explained in the sections above.

In contrast to the base and enhancement layer encoders of Figure 1, the base layer encoder and the enhancement layer encoder both operate on signals in the frequency domain rather than in the spatial domain. That is to say, the signals representing the images input into the base and enhancement layer encoders are in the frequency domain. The motion estimation and motion compensation aspects of the base and enhancement layer encoders operate in the spatial domain. The base layer encoder comprises a first encoder for encoding a signal carrying a representation of an image at a first quality level or first spatial resolution. The enhancement layer encoder comprises a second encoder for encoding a signal carrying a representation of an image at a second quality level or second spatial resolution that is greater than the first quality level or first spatial resolution.

In this arrangement, overall predictions are generated by combining predictions from the base and enhancement layers, using knowledge of the variance (noise) in the predictions from the base and enhancement layers to determine a good weighting factor.

In the scalable encoder of Figure 3, a signal path 502 extends from the input of the encoder to a forward transformer 508. One signal path 510 out of the forward transformer passes to a subtractor 106 of the enhancement layer encoder 500. Another signal path 512 out of the forward transformer 508 passes to a base layer coefficient selector 514. The base layer coefficient selector 514 selects the coefficients of the input image signal that are acted on by the base layer encoder 504. In this example, the forward transformer 508 is a wavelet transformer. This means that frequency domain information of an image lies in the same space as the spatial domain information. In this way, using the example of Figure 3, the base layer selector takes the upper left hand quadrant of the wavelet transform. The base layer selector 514 is a frequency domain analogue to the down converter 336 of the encoder 300 of Figure 1.

A signal path 516 extends from the base layer coefficient selector 514 into the base layer encoder 504.

The signal path from the base layer coefficient selector enters the base layer encoder into subtractor 106. A signal path 518 from the subtractor extends to a quantiser 114. A signal path 520 from the quantiser 114 branches. One branch 522 connects to an entropy coder 120 and the other branch 524 extends to an inverse quantiser 124. A signal path 526 extends out of the entropy encoder 120.

A signal path 528 extends out from the inverse quantiser 124 into an adder 134. A signal path 530 extends out from the adder and branches in two. One branch 532 extends into an inverse transformer 130. The other path 534 extends into a mixer 346. The mixer 346 is located in the enhancement layer encoder 506.

A signal path 536 extends out from the inverse transformer 130 and branches. One branch 538 extends to a motion compensator 142. The other branch 540 extends into a motion estimator 144. Two signal paths extend out from the motion estimator 144. One of the signal paths 542 extends into a motion vector entropy coder 150 and to an up converter 544. The upconverter converts the base layer signal into a signal that is compatible with the enhancement layer encoder and its operation is described above. The other signal path 546 extending out of the motion estimator 144 extends into a motion compensator 142.

An output signal path extending out from the motion vector entropy coder 150 joins into the output from the base layer coder 526.

A signal path 550 extends from the motion compensator 142 into a forward transformer 552. An output signal path 554 from the forward transformer 552 extends into a multiplier 158. The multiplier 158 has a signal input 160 for a signal to indicate whether the signal output from the forward transformer 554 represents an inter frame or an intra frame. The signal input 160 to the multiplier 158 has a zero for indicating an intra frame and a one for representing an inter frame. The multiplier 158 has an output signal path 556 that branches. One branch 558 extends into the subtractor 106. The other branch 560 extends into the adder 134.

The enhancement layer encoder 506 comprises similar components to the base layer encoder 504. Indeed, many components perform the same function and are arranged in the same way. Like components have been given like reference numerals.

The enhancement layer encoder 506 comprises a mixer 346. This is arranged such that the signal path 554 passes from the forward transformer 552 of the enhancement layer encoder 506 into the mixer 346.. This is in an equivalent position to the multiplier 158 of the base layer encoder 504. The enhancement layer encoder 506 does not have a multiplier.

The enhancement layer encoder 506 differs in another aspect to the base layer encoder 504. Instead of having a branched signal path 542 extending out from the motion estimator 144, there is a single signal path 562. The single signal path 562 extends into a second subtractor 564 in the enhancement layer encoder 506. The second subtractor 564 has a second input for a signal path 566 from the up converter 544. The second subtractor has an output signal path into the motion vector entropy encoder 150.

The enhancement layer encoder 506 does not have a signal path 530 that branches. Instead, there is a single signal path 530 that extends into the inverse transformer 130.

In other respects, the base layer encoder 504 and the enhancement layer encoder 506 are the same.

In use, the operation of the encoder 500 is similar to the encoder of Figure 1. In particular the images of a GOP are processed in the same order. Significantly, the representation of the images of the GOP are forward transformed into the frequency domain by the forward transformer 508 before being input into the enhancement layer encoder and base layer encoder along signal paths 510 and 512 respectively. This means that both the enhancement layer encoder 506 and the base layer encoder 504 operate in the frequency domain. The frequency domain representation of the images in the signal path 512 are input into the base layer coefficient selector 514, which selects the coefficients of the frequency domain representation which are input into the base layer encoder 504 along signal path 516 in the manner described above. The enhancement layer encoder 506 and the base layer encoder 504 do not have or require the forward transformer 110 after the subtractor 106. They do not have or require the inverse transformer 130 after the inverse quantiser 124. However, as the motion compensation and estimation operate in the spatial domain an inverse transformer 130 is required after the adder 134 in order to transform the representation of the images into the spatial domain. A forward transformer 552 is also provided to transform the representation of the images output from the motion compensator 142 along signal path 550 into the frequency domain so that the frequency domain representation of the image in signal path 556 forming a prediction of a picture (in the frequency domain) can be directly subtracted and added to the frequency domain representation of the images at the adder 134 and subtractor 106 respectively.

The mixer 346 of the encoder 500 produces the prediction signal along signal path 556 that is input into the subtractor 106 of the enhancement layer encoder by mixing the base layer prediction in signal path 534 and the enhancement layer prediction in signal path 554 of the representation of the relevant encoded image in the frequency domain.

In contrast to the encoder of Figure 1, no type of "upconversion" or "scaling" is required in the signal path between the base layer encoder and the enhancement layer encoder (340 in Figure 1, 534 in Figure 3). This is because of the difference in properties between the spatial domain representation of the images in the encoder of Figure 1 and wavelet transform domain representation of the images of Figure 3. The reasons for this are discussed elsewhere in this specification.

In the example of Figure 3, the motion vectors in the upper or enhancement layer are coded as the residue from the upconverted low resolution motion vector field [2]. This is achieved by upconverting the motion vector representation in signal

path 542 at the upconverter 544 and transmitting the resulting signal along signal path 566 to the subtractor 564. At the subtractor 564, the upconverted base layer motion vectors are subtracted from the enhancement layer motion vectors and a signal representing the result is transmitted to the entropy encoder 150.

[2] This upconversion involves little computational complexity because there is only one motion vector per block rather than one per pixel. A linear upconversion (zero insertion and filtering) would be an adequate form of upconversion to form a prediction of the upper layer motion vector field.

This is intended to save bit rate. To make this work requires a smooth motion vector field, which is close to "true motion". To achieve this, motion estimation would be best performed starting with the high resolution input images rather than the locally decoded images (as is shown in Figures 3 and 4[3]). This is discussed further below.

[3] Motion estimation is shown in the diagrams as using the locally decoded output both for convenience and because it is done that way in MPEG2 and other coders. In practice the uncompressed input images are also available at the encoder and probably constitute a better basis from which to perform motion estimation.

Figure 4 illustrates a decoder 600 for decoding signals from the encoder 500 of Figure 3. It performs the opposite operations to the encoder 500. The operation of the various components are explained in the sections above.

The base layer decoder comprises a first decoder for decoding a signal carrying a representation of an image at a first quality level or first spatial resolution. The enhancement layer decoder comprises a second decoder for decoding a signal carrying a representation of an image at a second quality level or second spatial resolution that is greater than the first quality level or first spatial resolution.

The decoder 600 comprises a base or lower layer decoder 602 and an enhancement or upper layer decoder 604. The base layer decoder 602 operates on aspects of a signal representing encoded video images received at the base layer input 606 at lower spatial resolution than the video images operated on by the enhancement layer decoder 604, to produce a base layer decoded output at the output 608. The enhancement layer decoder 604 operates on aspects of the signal received at the enhancement layer input 610 representing the frequency domain of the encoded video images at higher spatial resolution than the encoded video images operated on by the base layer decoder 602, to produce an enhancement layer decoded output at output 612.

The decoder is similar in some respects to the decoder of Figure 2 and like components have been given like reference numerals. As the mixer 614 mixes

representations of the images in the frequency domain (rather than the spatial domain representation of the images as in the example of Figure 2) various modifications have been made to the decoder 600, in particular with the location of a forward transformer 616 and an inverse transformer 214 in the base and enhancement layer decoders 602, 604.

The base layer decoder 606 comprises an input for the lower or base layer encoded signal from the encoder output 526. There is a signal path from the input 610 to an entropy decoder 204. Two signal paths 206 and 208 extend from the entropy decoder 204. One path 206, for signals representing frequency domain image information, extends to an inverse quantiser 210 and the other path 208, for signals representing motion vector information, extends to a motion compensator 212. The path extending to the motion compensator 212 has a branch 618, which extends to an up converter 620. A signal path 621 extends out from the upconverter 620.

A signal path 622 extends from the inverse quantiser to an adder 218. A signal path 624 extends out from the adder 218. The signal path 624 branches. One branch 626 extends to a mixer 614 and the other branch 628 extends to an inverse transformer 214. A signal path 630 extends out from the inverse transformer 214. The signal path 630 branches. One branch 632 forms a lower or base layer decoded signal output 608. The other branch 634 extends to the motion compensator 212.

The motion compensator 212 has an output signal path 636 that extends to a forward transformer 616. The forward transformer 616 has an output 638 that extends to a multiplier 230. The multiplier 230 has a signal input 232 for a signal to indicate whether the signal output from the forward transformer 616 represents an inter frame or an intra frame. The signal input 232 to the multiplier 230 has a zero for indicating an intra frame and a one for representing an inter frame. An output signal path 640 from the multiplier 230 extends into the adder 218.

The enhancement layer decoder 604 comprises similar components to the base layer decoder 602. Indeed, many components perform the same function and are arranged in the same way. Like components have been given like reference numerals.

The enhancement layer decoder 604 differs in that it has a second adder 642 located between the entropy decoder 204 and the motion compensator 212 of the enhancement layer decoder 604. A signal path 208 extends from the entropy decoder 204 of the enhancement layer 604 to the second adder 642 and a signal path 644 extends out of the second adder 642 to the motion compensator 212 of the enhancement layer decoder 604. Signal path 621 extends from the up converter 620 in the base layer decoder 602 into the second adder 642.

The enhancement layer decoder 604 differs in another respect. It does not have a multiplier. It has a mixer 614 in the equivalent position. The mixer 614 has an input from signal path 626 from the base layer decoder 602 and an input from signal path 638 from the forward transformer 616 of the enhancement layer decoder 604. An output signal path 640 from the mixer extends to the adder 218 of the enhancement layer decoder.

In all other respects, the base layer decoder and enhancement layer decoder are the same.

In use, the decoder 600 operates in a similar way to the decoder 400 of Figure 2. However, the mixer 614 operates on representations of the respective base and enhancement layer images in the frequency domain rather than in the spatial domain. This is achieved by not having inverse transformers directly after the inverse quantisers 210 of the base and enhancement layer decoders 602 and 604. Because the motion compensation operates in the spatial domain and because the decode output image should also be in the spatial domain the signals representing the images output from the adders 218 are inverse wavelet transformed into the spatial domain by the inverse transformers 214. In order to convert the motion compensated image data in the spatial domain output from the motion compensators 616 into the frequency domain, the image signal in signal path 636 are transformed by the additional forward transformers 616 so that the image data can be operated on in the frequency domain by the mixer 614 and multiplier 230 respectively.

As the enhancement layer motion vectors are encoded with respect to the base layer motion vectors, the signal representing the base layer motion vectors for the relevant image is output along signal path 618 where it is upconverted (scaled) at upconverter 620. The upconverted motion vectors are output along signal path 621 where they are input into the second adder 642 and added to the corresponding motion vector information (the enhancement layer motion vector information - the base layer information) to reconstruct the enhancement layer motion vector information, which is output along signal path 644.

The use of wavelets allows spatial scalability to be implemented mainly in the transform domain rather than the spatial domain, as illustrated in Figures 3 and 4. One difference is that there is no spatial down and up conversion of frames [4]. Instead of down conversion some of the transform coefficients are selected to form the base layer. These might correspond to the LL (low low) coefficients (discussed in more detail below) from the first level of the wavelet transform. With this selection the base layer would be 2:1 down sampled frame (in both dimensions). This is equivalent to the generation of the base layer picture in Figure 1, both having been generated by low pass filtering and subsampling [5]. No up sampling is required; the wavelet coefficients corresponding to the locally decoded output of the lower layer can be used directly in the enhancement layer.

[4] The upconversion shown is of motion vectors, which is discussed below.

[5] Wavelet filters are, typically, not designed to minimise aliasing. However different wavelet filters may be used for different levels of the wavelet transform. In particular the first level wavelet transform filter could be designed to yield a good base layer (with little aliasing), although this would probably not be necessary.

As with spatial domain scalability the lower layer operates wholly on low resolution images and transforms and the upper layer operates on high resolution images and transforms.

As discussed above, in the frequency domain codec, illustrated in Figures 3 and 4, the motion vectors in the upper layer are shown coded as the residue from the upconverted low resolution motion vector field [6]. This is intended to save bit rate. To make this work requires a smooth motion vector field, which is close to "true motion". To achieve this, motion estimation would be best performed starting with the high resolution input images rather than the locally decoded images (as it shown in Figures 3 and 4[7]). We have found that smoother, more accurate,

vectors reduce the motion vector bit rate but this is cancelled out by a higher bit rate for the transform residue. In a non-scalable coder it is, therefore, usually more cost effective to use a block matcher operating on the locally decoded pictures. In a scalable coder, however, it may be more effective to use true motion vectors, at least for the lower layer, to be able to take advantage of predicting the upper layer motion vectors.

[6] This upconversion involves little computational complexity because there is only one motion vector per block rather than one per pixel. A linear upconversion (zero insertion and filtering) would be an adequate form of upconversion to form a prediction of the upper layer motion vector field.

[7] Motion estimation is shown in the diagrams as using the locally decoded output both for convenience and because it is done that way in MPEG2 and other coders. In practice the uncompressed input images are also available at the encoder and probably constitute a better basis from which to perform motion estimation.

Another difference between spatial domain (Figures 1 and 2) and transform domain scalability (Figures 3 and 4) is that more of the processing takes place in the transform domain (roughly speaking the frequency domain for a wavelet transform) rather than the spatial domain. In the encoder, this requires repositioning the forward transform block, but overall complexity is not affected. In the decoder an additional forward transform block is required.

**Base Layer Coder and Decoder that Operate in the Spatial Domain**

The additional complexity of the base layer frequency domain decoder can be mitigated using a mixed domain scalable codec, in which the base layer is a spatial domain and the upper layer is frequency domain. This is illustrated in Figures 6 and 7. A mixed domain scalable encoder has similar complexity to a known spatial domain scalable coder. Instead of up conversion and down conversion it has one high resolution forward transform and a low resolution forward and reverse transform. The base layer encoder is known and the same as used in the Dirac system described above and illustrated in Figure 11. The base layer decoder is also known (it is the same as that illustrated in Figure 12) and of minimum complexity. This is probably the best configuration to be used for the base layer decoder, but not for higher layers in a multi layer codec.

The overall architecture of the encoder 700 of Figure 6 is similar to that of the encoder 500 of Figure 3. However, as mentioned above, the base layer encoder 702 is replaced with the type illustrated in Figure 11 and also used in the example of Figure 1.

In contrast to the example of Figure 3, the example of Figure 6 illustrates an encoder 700 in which the base layer encoder 702 operates on aspects of the signal representing the spatial domain of the video images. Like the example of Figure 3, the enhancement layer encoder 704 of Figure 6 operates on aspects of the signal representing the frequency domain of the video images and this aspect of the encoders are the same.

The base layer encoder 702 of Figure 6 is similar in many respects to the base layer encoder 310 of Figure 1 and like components have been given like reference numerals. The enhancement layer encoder 704 of Figure 6 is similar in many respects to the enhancement layer encoder 506 of Figure 3 and like components have been given like reference numerals. The operation of each of the elements is as described in detail above.

Referring to Figure 6, a signal path 706 for the signal representing the input images passes into an input forward wavelet transformer 508. One output 512 from the forward transformer 508 extends into a base layer coefficient selector 514. An output signal path 516 extends out from the base layer coefficient selector 514 into inverse transformer 708. An output signal path 710 extends out from the inverse transformer 708 and is input into the subtractor 106 of the base layer encoder 702.

The arrangement of the base layer encoder 702 is the same as the base layer encoder 100 of Figure 11 except for the following differences.

The base layer encoder 702 comprises a further signal path 712 branching from signal path 146 that is output from the motion estimator 146. This further signal path 712 extends into an upconverter 714. An output 716 from the upconverter 714 extends into a second subtractor 564 of the enhancement layer encoder 704. This aspect is similar to the base layer encoder 504 of Figure 3.

The base layer encoder 704 of Figure 6 also comprises a further signal path 718 branching from the output signal path 136 from the adder 134. Further signal path 718 extends into a forward wavelet transformer 720. An output signal path 722 from the forward wavelet transformer extends into the mixer ("W") 346 of the enhancement layer encoder 704. Forward wavelet transformer 720 is analogous to the upconverter 342 of Figure 1.

The enhancement layer encoder 704 of Figure 6 is identical to the enhancement layer encoder 506 of Figure 3.

In use, the representation of the input images are first converted so that they are in the correct domain for the base layer encoder (spatial domain) and enhancement layer encoder (frequency domain). Signals representing each image of a GOP in a spatial domain representation are input into forward transformer 508, which wavelet transforms the images as described above. The frequency domain representation of the images is then output along signal path 510 and input into the subtractor 106 of the enhancement layer encoder 704.

The other output signal path 512 from the base layer coefficient selector 514 selects the coefficients of the frequency domain image signal that are acted on by the base layer encoder 702 as described above. The selected part of the frequency domain image signal is output along signal path 516 and input into the inverse wavelet transformer 708. The frequency domain representation of the image is then inverse wavelet transformed by the inverse wavelet transformer 708 into the spatial domain and input into the subtractor 106 of the base layer encoder 702. The combination of the forward transformer 508, the base layer coefficient selector 514 and the inverse transformer 708 are analogous to the down converter of the encoder of Figure 1.

The signal representing the images is therefore input into the base layer encoder 702 in the spatial domain and input into the enhancement layer encoder 704 in the frequency domain.

The operation of the base layer encoder 702 is the same as that of the encoder 100 of Figure 11. The output signal representing the motion vectors from the motion estimator 144 along signal path 146 is also transmitted along signal path 712, this is upconverted (scaled) by the upconverter 714 and a signal representing the upconverted motion vectors is output along signal path 716 to the second adder 564 of the enhancement layer encoder. This aspect is the same as the corresponding signal path 542, upconverter 544 and signal path 566 of Figure 3.

The signal output from the adder representing the spatial domain of the input images is transmitted along signal path 718 to the forward transformer 720 where it is wavelet transformed into the frequency domain. The resulting frequency domain representation of the input images is output along signal path 722 into the mixer 346.

As in the example of Figure 3, the mixer 346 mixes or provides a weighted sum of the base layer encoder 702 and enhancement layer encoder 704 predicted images in the frequency domain.

In contrast to the example of Figure 4, the example of Figure 7 illustrates a decoder 800 in which the base layer decoder 802 operates on aspects of the signal representing the spatial domain of the video images. Like the example of Figure 4, the enhancement layer encoder 804 of Figure 7 operates on aspects of the signal representing the frequency domain of the video images. The base layer decoder 802 of Figure 7 is similar in many respects to the decoder 200 of Figure 2 and like components have been given like reference numerals. The enhancement layer decoder 804 of Figure 7 is similar in many respects to the enhancement layer decoder 604 of Figure 4 and like components have been given like reference numerals.

The base layer decoder 802 of Figure 7 is the same as the base layer decoder 402 of Figure 2 except that the signal path 208 after the entropy decoder 204 branches. One branch 806 extends to an upconverter 808. An output signal path 810 extends from the upconverter 808 to the additional adder 642 of the enhancement layer decoder 804. These are the same components as the signal path 618, upconverter 620 and signal path 621 of Figure 4. The other branch 812 of signal path 208 extends to the motion compensator 212.

The signal path 220 of the base layer decoder branches into signal path 814. Signal path 814 extends into forward transformer 816. A signal path 818 is output from forward transformer 816 and extends to the mixer 614 of the enhancement level decoder 804.

The enhancement layer decoder 804 of Figure 7 is the same as the enhancement layer decoder 604 of Figure 4.

The operation of each of the elements is as described in detail above.

The output signal of the base layer decoder is in the spatial domain. The spatial domain representation is wavelet transformed in forward transformer 816 to provide a frequency domain representation of the decoded image to the mixer 614. The mixer 614 can therefore mix or weighted sum the representations of the predicted images in the frequency domain.

Using frequency domain spatial scalability leads to a more flexible and effective scalable coder. This flexibility arises from the operation of the "W" block (described in detail below) in a way that is only possible in the frequency domain.

The objective of scalable coding is that the sum of the bits for the two layers is little more than that of encoding high resolution directly, that is the low resolution signal effectively gets a free ride.

For intra frames, frequency domain scalability clearly does an effective job. Selecting the base layer to be the low frequencies of a wavelet transform clearly makes it independent of the high frequency wavelet coefficients. The base and enhancement layer simply encode different parts of the wavelet transform and the combined bit rate will be the same as had low and high frequencies been coded together. It is also possible to quantise the low frequencies more coarsely in the base layer and requantise more finely in the enhancement layer (using the base as a prediction). That is, we can apply SNR scalability to the low frequencies (base layer). The ability to apply SNR scalability to the low frequencies allows us control over the share of the bit rate allocated to the base and enhancement layers. Working in the frequency domain allows us to employ SNR scalability only for the low frequencies, which is not possible in the spatial domain.

Compare this with intra frame spatial scalability used by MPEG 2. The enhancement layer codes the residual between the upconverted base layer and the high resolution image. The bit rate for the upper layer is indeed reduced, but there is no clean separation between coding the base and enhancement layers as there is with frequency domain scalability. This leads to a greater bit rate overhead from using the scalable codec. SNR scalability also works to some extent but coarse quantisation of the base layer injects noise into high frequency DCT coefficients in the enhancement layer. So MPEG2's spatial scalability does work for intra frames, just not as effectively or as flexibly as frequency domain scalability using wavelets as described herein.

The problem with MPEG2 spatial scalability is that the transform it uses (juxtaposed block DCTs) is not the same as that used to generate the base layer (approximation to Fourier transform using a filter). The base layer therefore affects "high frequency" DCT coefficients in the enhancement layer. Actually, frequency domain scalability could be used with DCT block transforms. The base layer could comprise just the low frequency DCT coefficients. However, this generates a poor quality base layer. It also requires a non standard block DCT (e.g. 4x4 rather than 8x8) to be used for the base layer, or, alternatively, a non standard (e.g. 16x16) transform to be used for the enhancement layer. A similar process would allow frequency domain scalability to be applied to compression systems that used juxtaposed block wavelet transforms or other transforms. But the single transform applied to the whole frame as described herein seems most suitable for this technique.

A key reason that MPEG 2 scalable coding is not effective is that, for inter frames, there are two alternative frame predictions. Either could be used, but the motion compensated prediction is usually better and so scalability offers little advantage for inter frames.

Frequency domain scalability can be effective for inter frames as well as intra frames. The separation of high and low frequency wavelet coefficients allows the high frequency, enhancement layer, coefficients to be coded as in a non-scalable coder. Interframes have the option of two predictions for the low wavelet coefficients from either the base layer or from motion compensated prediction. As with spatial domain scalability, the motion compensated prediction is likely to be better, but if we choose just that prediction spatial scalability would be as ineffective in the frequency domain as in the spatial domain. However, we can remedy this, and make scalability effective for inter frames, by creating an improved prediction that combines the two alternative individual predictions.

When you have two noisy predictions it is possible to create a prediction that is better than either by using a weighted sum. Consider two noisy estimates $x \pm \sigma_x^2$, $y \pm \sigma_y^2$, and form a weighted sum using a weighting factor $\alpha$. The combined estimate is given by:

$$\alpha(x \pm \sigma_x) + (1-\alpha)(y \pm \sigma_y) \Rightarrow \alpha x + (1-\alpha)y \pm \sqrt{\alpha^2 \sigma_x^2 + (1-\alpha)^2 \sigma_y^2}$$

... equation (1)

To find the optimum weighting factor we differentiate the noise term with respect to alpha and equate to zero i.e:

$$\frac{\partial\left(\alpha^2\sigma_x^2+(1-\alpha)^2\sigma_y^2\right)}{\partial\alpha}=2\alpha\left(\sigma_x^2+\sigma_y^2\right)-2\sigma_y^2=0$$

$$\Rightarrow\quad \alpha=\frac{\sigma_y^2}{\sigma_x^2+\sigma_y^2}=\frac{1}{1+\dfrac{\sigma_x^2}{\sigma_y^2}}$$

... equation (2)

Thus the optimum weighting factor depends on the ratio of the errors in the two estimates.

**Calculating the weighting factor**

The key to frequency domain scalability is the calculation of a good weighting factor, which is used in block marked "W" (the mixer 164, 346) in Figures 3, 4, 6, and 7. A separate weighting factor is generated for each subband or each part of a subband that has a distinct quantisation factor (in the case of spatially varying quantisation factors).

In order to generate weighting factor, $\alpha$, the quantisation factors for the wavelet subbands are used. The quantisation factors are generated by the encoder and are transmitted to the decoder using a transmitter (not shown). The same quantisation values are, therefore, available at both the encoder and decoder. The quantisation factors are stored in a memory in the encoder and a memory in the decoder (not shown). The quantisation factors are proportional to the noise introduced by quantising each subband (as described above).

In order to generate the weighting factor we must know the noise applicable to each of the predictions that are combined in block "W" (the mixer 164, 346). For the prediction from the base layer coder (encoder) the noise is determined from the quantisation factor applied to each subband in the base layer coder. The noise for the motion compensated prediction has two components. Firstly, it depends on the quantisation factor used to decode the pictures used to form the motion compensated prediction. Secondly, it may depend on the accuracy of the motion compensation. In an initial explanation, one may assume that the motion compensation is perfect. So, the noise for the motion compensated prediction may also be assumed to depend on the quantisation factor applied to each subband in the enhancement layer coder (encoder).

The quantisation factors used by the base layer coder are available because they will have just been used to quantise the subbands. The quantisation factors used for the pictures involved in the motion compensated prediction will have been applied one or more pictures previously in time. Therefore, the quantisation factors corresponding to the locally decoded pictures, which are stored with the "Motion Compensation" block 142, must also be stored. For each locally decoded picture, the encoder and decoder must each store a set of quantisation factors for that picture. For example, in a typical scenario, if a 4 level wavelet transform is used, there are 13 subbands, if each subband uses a single quantiser then, for each picture, the encoder/decoder must store 13 quantisation factors.

A motion compensated prediction will, typically, be generated from either one or two previously decoded pictures. If two pictures are used to generate the prediction then the noise in the predicted picture will depend on the quantisation factors used to quantise both pictures. Let the quantisation factors used for a specific subband in each of the two pictures used to form the prediction be denoted by q1 and q2. Let the contribution of each picture to the prediction be $\beta$ and $(1-\beta)$ for picture 1 and 2 respectively. Typically both pictures will contribute equally to the prediction so that both $\beta$ and $(1-\beta)$ will have the value %. Then, the noise for the motion compensated prediction (ignoring noise introduced by the motion compensation process itself) will be (from equation (1) above):

$$\sigma=k\sqrt{\beta^2 q_1^2+(1-\beta)^2 q_2^2}$$

The effective quantisation factor, when the motion compensated prediction is generated from two pictures, may be denoted as:

$$\sigma = kq_{effective} \quad \text{where} \quad q_{effective} = \sqrt{\beta^2 q_1^2 + (1-\beta)^2 q_2^2}$$

When the motion compensated prediction is generated from a single picture the noise in the predicted picture will be:

$$\sigma = k \cdot q$$

Now, denote the noise in the prediction from the base coder/decoder as $\sigma_{base}$ ($\sigma_{base} = k.q_{base}$, where $q_{base}$ is the quantisation factor used in the base coder of that subband). And denote the noise in the prediction from the enhanced layer coder/decoder (given by the equations above) as $\sigma_{enhancement}$. Then (again, from equation (1) above), the weighting factor, $\alpha$, used by block "W" 164, 346 is given by:

$$\alpha = \frac{1}{1 + \dfrac{\sigma_{base}^2}{\sigma_{enhancement}^2}}$$

Or, bearing in mind that $\sigma = k.q$:

$$\alpha = \frac{1}{1 + \dfrac{q_{base}^2}{q_{enhancement}^2}}$$

Note, that in this second equation for $\alpha$, we need only know the ratio of the quantisation factors used in the base and enhancement layers. We do not need to know the absolute value of the noise, nor the value of k, which relates $\sigma$ to q.

In summary, in order to calculate the weighting factor for a specific wavelet subband (or part thereof) it is necessary to store the quantisation factors used with each decoded picture, calculate the effective quantisation factor from the equations given above, and then calculate the weighting factor, $\alpha$ from the equation above.

This observation allows us to define the operation of the "W" block in Figures 3 (mixer 436), 4 (mixer 614), 6 (mixer 346) and 7 (mixer 614). The output from the mixer is a weighted sum (mix) of the two prediction inputs; either the prediction input provided by the motion compensated enhancement layer images or the base layer images.

For frequency domain scalability the decoder already has estimates of the error for the two, low frequency, inter frame predictors. These are available from the quantisation factors, which the decoder needs to perform inverse quantisation. So, no extra information need be transmitted in order to calculate an optimum weighting factor. Indeed, in the present system, the quantisation factors are explicitly coded as (approximately) the logarithm of the quantisation factor. Hence, the optimum weighting factor depends only on the difference between these (logarithmic) quantisation factors for the base layer and the motion compensated prediction. Therefore, a simple look up table could be used to generate the weighting factor using the difference in quantisation factors as an input.

A key feature of this approach is the ability to vary the weighting factor with frequency. Each frequency band has its own quantisation factor in a wavelet coder such as the present system. This means that the optimum weighting can be applied to each frequency band. In some wavelet coders, such as in the present system, it is also possible to apply different quantisers in different regions of the picture. In this case, the weighting factor can be adjusted spatially as well as with respect to frequency. Indeed, if the noise varies spatially in a known way then different optimum weightings can be applied for each spatial sample in each frequency band. This may be useful in more complex applications, as described below.

A similar approach could be applied to a spatial domain scalable codec, but it is difficult to estimate the appropriate weighting factor. For the motion compensated prediction, the error depends on quantisation applied to the reference frame. The quantisation is applied in the DCT (discrete cosine transform) domain but is needed in the spatial domain. An estimate could be generated but this is much more complicated and clearly not ideal. For the base layer estimate, the error depends on the loss of high frequencies, which, in turn, depends on the shape of the signal spectrum and the signal level. Again this could be estimated, but the estimation would be more complex and sub-optimal. Overall, using a weighted estimate is not well suited to the spatial domain.

Consider coding just the low frequencies in the enhancement layer using a weighed combination of predictions. First, an intra frame is coded using some quantisation factor. Next, an inter frame is coded using the intra frame as a reference; say the base layer uses the same quantisation factor. The noise in the motion compensated prediction is proportional to the quantisation factor, as is the noise in the base layer prediction, so the optimum weighting factor is $\alpha=0.5$. This yields a combined prediction with $1/\sqrt{2}$ times the noise. Assuming the motion estimation is accurate, the noise in the low frequencies of the enhanced layer has reduced without sending any more information. For the next inter frame, (the weighting applied to the base layer prediction) reduces from 1/2 to 1/3 generating an overall prediction with $1/\sqrt{3}$ times the original quantisation noise. A sort of motion compensated noise reduction is taking place, which reduces the noise by a factor of $1/\sqrt{(n+1)}$ for the $n^{th}$ inter frame in the GOP. This is the noise reduction that would be obtained from averaging n+1 noisy estimates of the base layer.

Low frequency noise in the enhancement layer reduces for each successive inter frame in frequency domain scalability (assuming perfect motion estimation and an optimally weighted prediction). This contrasts with spatial scalability in MPEG2 where at best the noise remains constant. Of course, in practice, motion compensation would not be perfect. But this analysis suggests that little data would be required for the low frequencies in the enhancement layer, which is the objective of scalable coding.

The enhancement layer can also apply SNR scalability to the low frequency wavelet coefficients in inter frames, in the same way as for intra frames. This allows the flexibility to control the relative bit rate of base and enhancement layers. This is an example of selecting different quantisation factors for the base and enhancement layers at the encoder to achieve SNR scalability.

In summary, frequency domain scalability with wavelets works for several reasons. Choosing the low frequency wavelet coefficients as a base layer provides perfect separation of low and high frequency components. This does not happen with spatial domain scalability because of the mismatch between the DCT and construction of the base layer by down conversion. The separation of low and high frequencies allows SNR scalability of low frequencies in the enhanced layer, which allows flexibility in setting bit rates for the two layers. An optimally weighted prediction of the low frequencies can be used in interframes because the weighting is performed in the same, frequency, domain as quantisation. In contrast to spatial domain scalability, no additional information need be transmitted to determine the optimum weighting factor, which can be simply derived from the quantisation factors. The noise reduction afforded by a weighted prediction means that the low frequencies require few bits in the enhancement layer.

## Aspect Ratio Scalability

Scalable coding must confront the issue of different picture formats for the different layers. For example standard definition broadcasts use a 4:3 aspect ratio whilst high definition broadcasts require a 16:9 aspect ratio. It is difficult to address this issue with spatial domain.

The previous section described frequency domain scalability in which the base layer had half the resolution (horizontally and vertically) as the enhancement layer. This section describes how this can be extended to allow for different aspect ratios.

To facilitate the explanation consider a concrete example, the scalable coding of 720 lines by 1280 pixels HDTV. We must select an aspect ratio for the base layer. Being approximately standard definition, a 4:3 aspect ratio is a possibility. But it is unlikely that the same programme would view well with such disparate aspect ratios. A more likely scenario is that the base layer would have an intermediate 14:9 aspect ratio and would be shown on a standard definition display with black bars at top and bottom. Therefore, we might want a base layer that was 360 lines by 560 pixels, that being a low resolution, 14:9, version of the centre of the full resolution image.

We can generalise our method of generating the base layer to accommodate different aspect ratios. To do so we need only select a different subset of wavelet coefficients.

Figure 8 shows the wavelet coefficients we could select in the scalable coding of 720 line HDTV above. It shows a 3 level wavelet transform 1000 of the HD image and the shaded regions 1002 show the wavelet coefficients chosen to define the base layer. The coefficients not selected are those corresponding to the edge of the image outside the 14:9 aspect ratio and they are set to zero (and shown unshaded 1004).

The wavelet transform used by the lower layer must be half the dimensions of the one used by the upper layer[8]. In this example the wavelet transform size would be 360x640 (NOT 360x560). This would add very little to the data required to code the picture since the extra coefficients would always be zero. Even though the wavelets coefficients only correspond to the desired 14:9 region of the image, nevertheless the inverse transform would generate picture data

outside this region[9]. Only the 14:9 region would be used as the output of the decoder. The forward transform of the motion compensated prediction might generate wavelet coefficients outsize the 14:9 region. These coefficients would be set to zero following the forward transform 508 in Figures 3 and 6. That is to say, the base layer selector 514 sets the relevant coefficients to zero.

Once we have defined our base layer image then coding is performed as in the previous section. The optimal weighting strategy described above would ensure that the upper layer would encode the omitted wavelet coefficients.[8] Changing the dimension of the wavelet transform for the lower layer would significantly change the values of the wavelet coefficients rendering them a poor prediction for the upper layer.

[9] The uncertainty principle.

The definition of the base layer may be generalised further if desired. Clearly, coefficients corresponding to regions outside the base layer image must be set to zero. In addition, we may also change the magnitude of other coefficients; that is we do not simply have to omit coefficients, we can also scale them down. For example, it may be desirable to reduce (but not eliminate) high frequencies at the edge of the picture. We may window the wavelet coefficients to achieve this. Windowing the coefficients in this way provides another way, in addition to SNR scalability, to control the relative bit rates of the base and enhancement layers. If we scale coefficients down to define the base layer image they must subsequently be scaled up correspondingly to predict the enhanced layer coefficients. This effectively increases the noise/error in the prediction of these coefficients; however this is automatically taken into account by the optimum weighting strategy. Here, again, we have the weighting factor varying spatially. This would be carried out in the base layer selector 514 of the example of Figures 3 and 6.

In summary, we may allow for aspect ratio differences, or other format differences, between base and enhanced layer, by defining the base layer image to have zero wavelet coefficients corresponding to regions outside the base layer image. The size of the base layer wavelet transform remains ½ that of the enhanced layer image, but the additional size does not add to the bit rate because the coefficients are zero. The definition of the base layer image may be further adjusted by, for example, rolling off high frequencies at the edge of the image. This provides another degree of flexibility with which to control the bandwidths of the base and enhancement layers. This is another benefit of the mixer or weighted adder combining representations of images in the frequency domain.

**Compatibility with MPEG2**

There is large installed base of legacy equipment that uses MPEG2. It would be desirable to be able to use the spatial scalability described herein in combination with existing MPEG2 infrastructure. In particular, it would be useful to be able to transmit the base layer via MPEG2 and still have the advantages of spatial scalability using wavelets coding described above.

This section describes how the base layer of a spatially scalable coder using wavelets can be sent via an MPEG2 channel. It then discusses how this is used in practice.

In order to use an MPEG2 channel, the base layer of a scalable coder must appear to be an MPEG2 signal. This process is illustrated in Figures 8, and 32, which illustrates MPEG compatible transmission of the base layer. In which each representation of an image represents an image of 360 lines x 640 pixels.

In order for a scalable coder to use another codec, such as MPEG 2, to transport the base layer, the encoder should determine the noise added to the base layer by MPEG coding by comparing the (wavelet transforms of) the MPEG coded base layer and the original base layer. The measurement of this added noise could be sent as an auxiliary signal (illustrated in Figure 33, but not shown in Figure 32) to the upper (enhancement) layer decoder and be used to adjust the weighting factor ("W" block). Hence, we can attain the optimum prediction even allowing for the MPEG coder in the loop.

The example system 1100 of Figure 32 comprises a device which transmits an HDTV signal by transmitting a known MPEG2 encoded SDTV signal and an encoded enhancement layer signal. The SDTV signal can be received and decoded by legacy equipment and yet the full HDTV signal can be decoded while making efficient use of bandwidth.

The system 1100 comprises, at the transmitter side 1101, an HD (high definition) input 1102 into a scalable coder (encoder). This is the encoder 500 of Figure 3 or the encoder 700 of Figure 6. Outputs are made from the encoder 500,700. An output for the enhancement layer encoded signal 1104 (enhancement layer output 526 of the encoder 500, 700), an output for the base layer motion vectors 1106 (this is the signal path 542 output from the base layer motion estimator 144 in Figure 3 and the signal path 146 output from the base layer motion estimator 144 in Figure 6), and an output for the base layer encoded signal 1108 (base layer output 526 of the encoder 500, 700).

The signal path for the base layer encoded signal is input into a base layer decoder 1110. This is the decoder 200 of Figure 12. The output image is typically 360 lines x 640 pixels. A signal path 1112 is output from the base layer decoder 1110 for the decoded base layer images in the spatial domain. This is the signal path from output 224 of the decoder 200 of Figure 12. Signal path 1112 is input into a resizer 1114. A signal path 1116 extends from the resizer 1114 to MPEG2 encoder 1118. The signal path 1106 which carries the motion vectors is input into a motion vector resizer 1120, which resizes and scales the motion vectors for compatibility with the MPEG2 encoder 1118. An output signal path 1122 from the motion vector resizer 1120 is input into the MPEG2 encoder 1118. The MPEG2 encoder 1118 comprises a transmitter (not shown) for transmitting the encoded base layer signal along channel 1124. The MPEG2 encoder has the architecture of the encoder 100 of Figure 11 with the forward transformer and inverse transformer using block DCTs rather than a wavelet transform of the whole images of the example of Figure 11.

The enhancement layer encoded signal path 1104 extends into a transmitter (not shown) for transmitting the enhancement layer encoded signal through another transmission channel 1126.

The receiver side 1128 comprises a receiver (not shown) for receiving the encoded MPEG2 encoded signal from channel 1124. The receiver comprises an output into MPEG2 decoder 1130. The MPEG 2 decoder 1130 comprises an output signal path 1132 for the decoded SD video signal and an output signal path 1134 for the motion vectors used by the MPEG2 encoder 1118. MPEG2 decoder 1130 has the architecture of the decoder 200 of Figure 12 with the inverse transformer using block DCTs rather than a wavelet transform of the whole images of the example of Figure 11. Signal path 1134 extends into motion vector resizer 1136. A signal path 1138 is output from the motion vector resizer 1136 into the enhancement layer decoder 1140.

Signal path 1134 extends to image resizer 1142. A signal path 1144 extends into wavelet transformer 1146. A signal path 1148 extends out from the wavelet transformer to enhancement layer decoder 1140. The enhancement layer decoder is the enhancement layer decoder 804 of Figure 7.

Enhancement layer decoder 1140 comprises an output 1150 for the HDTV signal.

Referring now to Figure 33, the noise produced in the MPEG coder is measured and transmitted to the decoder 1128 using the following apparatus 1200 (shown within the dashed line box of Figure 33). The decoder 1110, image resizer 1114, MPEG2 encoder 1118, and motion vector resizer 1120 correspond to the similarly numbered components of Figure 32.

A signal path 1202 extends from the output of the MPEG2 encoder 1118 to an MPEG2 decoder 1204. A signal path 1206 extends from the MPEG2 decoder 1204 to an image resizer 1208. A signal path 1210 extends from the image resizer 1208 to a subtractor 1212. The subtractor 1212 also comprises an input for a branch of signal path 1112 from the base layer decoder 1110. A signal path 1214 extends from the subtractor to a forward wavelet transformer 1216. An output signal path 1218 from the wavelet transfomer 1216 extends to a transform coefficient squarer 1220. A signal path 1222 extends from the squarer to a low pass filter 1224. A signal path 1226 extends from the low pass filter 1224 to a square rooter 1228. An output signal path 1230 extends into a transmitter (not shown) for transmitting a measure of the noise produced in the MPEG2 encoder through transmission channel 1232 to the enhancement layer decoder 1140.

In use, referring first to Figure 32, an HD signal of size 720 lines x 1280 pixels is input into scalable encoder 500,700, along input 1102. The encoder 500, 700 operates as described above. The enhancement layer encoded signal is transmitted along signal path 1104 and transmitted by the transmitter along channel 112 to the enhancement layer decoder 1140. The base layer motion vectors from the scalable encoder 500,700 are transmitted along signal path 1106 to motion vector resizer 1120, which resizes the image information to represent an image 360 lines x 640 pixels. This image information is output from the resizer along signal path 1122 to MPEG2 encoder 1118. The encoded base layer image signal from the scalable encoder 500,700 is transmitted along signal path 1108 to base layer decoder 1110, which decodes the signal as described above. The decoded signal is output along signal path 1112 to image resizer 1114, where the image represented by the decoded signal is resized for compatibility with the MPEG2 encoder 1118 (to 576 lines x 720 pixels) to which a signal representing the resized image is transmitted along signal path 1116.

The encoded MPEG2 signal is transmitted along channel 1124. The image size is 576 lines x 720 pixels. It is received and decoded by MPEG2 decoder 1130 (which operates as described above). A signal representing an image that is 576 lines x 720 pixels and which is SD (standard definition) compatible is output along signal path 1132. The images are resized in the resizer 1142 (to 360 lines x 640 pixels) and the resized images are transmitted along signal path 1144 to the wavelet transformer 1146 where the images are wavelet transformed. Signals representing the wavelet transformed images are output along signal path 1148 to the enhancement layer decoder 1140.

The motion vector information from the MPEG2 decoder 1134 is output along signal path 1134 to motion vector resizer 1136, which resizes and scales the motion vectors from the MPEG2 decoder for compatibility with images 360 lines x 640 pixels and outputs them along signal path 1138 to the enhancement layer decoder 1140.

Referring to Figure 33, in order to provide the enhancement layer decoder with a measure of the error produced by the MPEG2 encoder 1118, the MPEG2 encoded base layer signal from signal path 1202 is first decoded, as it would be in the decoder by MPEG2 decoder 1204. A signal representing the decoded picture is output along signal path 1206 and is resized by resizer 1208 to be the same size as that from the base layer decoder 1110. The MPEG-2 decoded image is of size 480 lines by 704 pixels (within a black frame of 576 lines by 720 pixels). So, the decoded image is resized to 360 lines x 560 pixels by the resizer 1208. With the base layer decoded image and the MPEG-2 decoded image the same size, they are subtracted from one another by subtractor 1212 (the base layer decoded image is transmitted along signal path 1112 to the subtractor 1212 and the signal representing the resized image is transmitted along signal path 1210 to the subtractor 1212). A signal representing the result of the subtraction is transmitted along signal path 1214 to the wavelet transformer 1216. Here, the difference between the signal is transformed into the frequency domain (using a wavelet transform). A signal representing the result is output along signal path 1218 to the squarer 1220. The root mean square error signal is calculated for each wavelet subband (or region thereof). This is done by squaring the transform coefficients in the squarer 1220 and outputting the result along signal path 1222 to the low pass filter 1224, which low pass filters the square of the coefficients and outputs the result along signal path 1226 to the square rooter 1228. The square rooter 1228 takes the square root of the low pass filtered squared coefficients and outputs them along signal path 1230 where they are transmitted along channel 1232 to the enhancement layer decoder 1140.

A typical example might use a four level wavelet transform for the overall coder (both base and enhancement layer combined). In this example, the base layer would use a three level transform, which has ten subbands. Typically, each subband might use a single quantisation factor. So, the example of Figures 32 and 33, would generate ten noise levels corresponding to the ten quantisation factors used in the base level coder 504. These noise levels would be sent over the channel 1232.

Considering a single base layer subband, denote the noise introduced by the MPEG-2 encoding and decoding process as $\sigma_{MPEG-2}$. This noise must be combined with the noise from the base layer quantisation process to determine the weighting factor used in block "W" of the enhancement (upper) layer decoder 1140. The effective combined noise level is given by:

$$\sigma_{base-effective} = \sqrt{(k \cdot q)^2 + \sigma_{MPEG-2}^2}$$

where k is a constant independent of the quantised value and q is the quantisation factor. q and k relate to the enhancement layer. In this equation, q is the effective quantisation factor for the enhancement layer. That is, for I frames (intra frames) it is the quantisation factor used in the coding. For inter frames (P and B frames in MPEG-2 parlance, which respectively correspond to L1 and L2 inter frames), q is $q_{effective}$ defined above. k is the constant of proportionality that relates the enhancement layer quantisation factor to the noise the enhancement layer introduces into the enhancement signal.

The effective base layer quantisation factor, including the noise contribution from the MPEG-2 code-decode, may be denoted as:

$$\sigma_{base-effective} = kq_{base-effective} \quad \text{where} \quad q_{base-effective} = k\sqrt{q^2 + \left(\frac{\sigma_{MPEG-2}}{k}\right)^2}$$

Note that to calculate the effective quantisation factor we now do need to know the value of k.

Having calculated $q_{base-effective}$ we can now calculate the weighting factor, $\alpha$, to be used in the enhanced level coder (of coder 500,700) /decoder 1140, which is given by:

$$\alpha = \frac{1}{1 + \frac{q_{base-effective}^2}{q_{enhancement}^2}}$$

The enhancement layer decoder 1140 receives the enhancement layer encoded signal, the motion vectors, the wavelet transformed resized base layer image and the noise introduced by the MPEG-2 encoding and decoding process to produce and output a high definition (HD) output as described above. In other words, considering the example of scalably coding 720 line by 1280 pixel HD (high definition) image signal from the previous section. The base layer represents a 360 line by 560 pixel image with aspect ratio 14:9. Considering the scenario of broadcasting HDTV via DTT the SD (standard definition) video must be compatible with legacy set top boxes. To achieve compatibility we decode the base layer, resize it to 480 lines by 704 pixels, and place this in the centre of a 576x720 black image. This picture can be coded using MPEG2[10] and would be displayed as a 14:9 image with black bars top and bottom. To decode the HD image first the SD picture would be MPEG2 decoded. Then it would be resized back to 360x560. It would be padded[11] to 360x640 because this is the size of the wavelet transform needed by the upper layer decoder (see the previous section). Finally, the upper layer decoder would reconstruct the HD image using the base layer wavelet transform and motion vectors and the enhancement layer.

The compressed MPEG2 stream may add distortion without breaking the system. The effect of distortion from the MPEG compression would be to add noise to the base layer. To allow for this the encoder would have to use the base layer as seen at the decoder. That is, it would have to decode the MPEG2 encoded image, resize it and wavelet transform it before using it as the base layer DWT (discrete wavelet transform). Details of this are shown in Figure 33. Furthermore, the encoder could determine the noise added to the base layer by MPEG coding by comparing the (wavelet transforms of) the MPEG coded base layer and the original base layer. The measurement of this added noise could be sent as an auxiliary signal (shown in Figure 33) to the upper layer decoder and be used to adjust the weighting factor ("W" block described above). Hence, we could attain the optimum prediction even allowing for the MPEG coder in the loop. Clearly, this is an additional overhead, but it would be small one. Only one noise value is required for each different quantiser, and there are relatively few of these (typically one per sub band).

[10] The MPEG encoder must be modified to use the motion vectors generated by the scalable coder.

[11] The image should be padded using the DC value of the decoded SD image.

In practice, the MPEG compatible base layer might use 4Mbit/s (this is the transmission rate or bit rate along channel 1124) and the enhancement layer 6Mbit/s (or even less) (this is the transmission rate or bit rate along channel 1126). 4Mbit/s would provide a reasonable SNR for the base layer, bearing in mind that picture was upconverted from 360 to 576 lines and that "true" motion vectors were derived from the original HD signal. Experiments with Dirac have shown that we can generate excellent 720x1280 pictures (at 25 frames) in a bandwidth of 8Mbit/s. Assuming that MPEG2 has only half the compression efficiency of Dirac, which is what experiments indicate, then the 4 Mbit/s base layer represents 2Mbit/s of Dirac coded video. Assuming that spatial scalability using wavelets works with only a small overhead then a further 6 Mbit/s are required to code the full HD image.

In this scenario, we could broadcast a backward-compatible HD broadcast using only a total of 10Mbit/s. This is at least 6Mbit/s less than alternative, simulcast, scenarios using, for example, MPEG4 AVC. The HD picture is only 25 frames/s, but it is questionable whether a higher frame rate is actually required for a DTT compatible broadcast. This scenario would certainly provide a significant quality improvement beyond existing broadcasts. If 50 frames/s were really required it could be provided by a further, low bit rate, temporal scalability layer. In the same manner as the system described above, the system that uses the MPEG2 legacy system as the base layer encoder uses knowledge of the noise introduced by the coding process to determine the best weighting factor. In this case the additional noise introduced by the MPEG-2 coding (and illustrated in Figure 33), which is transmitted or sent as side information in the enhancement layer. The MPEG-2 coded and decoded base layer is used to form a prediction for the enhancement layer without measuring this extra noise and transmitting it to the decoder and without using the measure of the extra noise to determine the weighting factor. Using a legacy codec for the base layer would not be possible. Without measuring, sending and using this extra information, the noise introduced by the legacy coded base layer would be introduced into the enhancement layer thereby degrading the pictures. It is only by knowing how much noise is in the legacy coded pictures, and using this to determine the right amount of base layer prediction to combine with enhancement layer prediction that adding noise into the decoded enhancement layer can be avoided. With this system it is not just the base layer quantisation that adds noise to its prediction of the enhancement layer, it is also the noise introduced by the legacy codec. It is described above how to combine knowledge of these noise sources so that they can be used to calculate the right weighting factor. Measuring and knowing the noise introduced by both the base and enhancement layer coding processes, and using it appropriately, is the concept here. Frequency domain processing is a convenient way of implementing this.

**Interlace**

Interlace is the bane of all compression systems. The sections above have considered progressive signals. Partly that is because, in the future, progressive signals will become increasingly dominant. Nevertheless, interlace cannot be ignored.

At present, Dirac does not directly support interlaced signals. Interlaced signals can be coded as if they were progressive, which slightly reduces the compression efficiency. Our experiments have shown that this reduction in efficiency is not great. Nevertheless, Dirac will support interlaced signal. The above discussion of scalable coding applies largely unchanged to interlaced signals. It does, however, require an interlaced compression mode for the wavelet coder.

**"Trickle down" of HDTV programmes**

Because of the data-rate limitations of DTT it is suggested to "trickle down" HDTV programmes, overnight, in non-real time, to a video disc recorder (sometimes known as a PVR or personal video recorder). That is to say, the enhancement layer is transmitted at a lower bit rate than the base layer. The enhancement layer is also transmitted, at least in part, before the base layer. The base layer can be a standard definition broadcast. The HDTV picture would then be replayed in real time upon receipt of a signal embedded in the subsequent standard definition broadcast. Scalable coding can help with this scenario in several ways. If the "trickle down" were of an enhancement layer rather than the complete HDTV picture, much less data would have to be trickled down and stored. Importantly, from a rights management and marketing perspective, the HDTV programme could not be played until the standard definition programme was broadcast. That is, viewers could not get a sneak preview of a prestigious broadcast. Furthermore, the reduced data requirements of an enhancement layer would make it easier to use alternative methods of distribution such as via the Internet.

This is implemented by, for example, using a modified version of the encoder 700 of Figure 6. The encoder 700 is modified to include a buffer, store or memory (not shown) to receive and store the encoded enhancement layer signal from signal path 526 and another buffer, store or memory (not shown) to receive and store the encoded base layer signal.

A corresponding decoder (not shown) would comprise the decoder 800 of Figure 7 adapted to include a buffer, memory or store at the enhancement layer input. It would also comprise a synchroniser (not shown) to synchronise the input of the enhancement layer signal into the decoder with receiving the encoded base layer signal at the base layer input.

In use, the base and enhancement layers would be encoded in the encoder 700 as described above and stored in their respective buffers. At an appointed time, the enhancement layer is transmitted from the buffer at a slow bit rate or transmission rate, less than the transmission rate of the base layer, to the decoder 800 and the encoded enhancement layer would be stored in the buffer in the decoder 800. At a later appointed time, the encoded base layer signal is transmitted from the buffer, where it is stored, at a higher transmission rate than the enhancement layer transmission rate to the decoder 800 where it is received and stored in the buffer in the decoder. The synchroniser synchronises the release of the stored encoded enhancement layer signal from the buffer with the receipt of the base layer encoded signal. The encoded base layer and enhancement layer signals are then decoded as described above in relation to the decoder 800 of Figure 7.

**Conclusions**

This specification has described how scalable video coding is implemented using wavelet compression technology based on that used in the Dirac video codec. Whilst spatial domain spatial scalability, as standardised for MPEG2, is of debatable effectiveness and utility, spatial scalability in the frequency domain, using wavelets, could be much better. Scalable coding using wavelets could improve performance and have a low overhead compared to coding the high-resolution pictures directly. It can support different aspect ratios for the base and enhancement layers and considerable flexibility is possible in controlling the bit rates of the two layers.

Scalable video coding would be useful for HDTV broadcasts via DTT where a scalable broadcast, backward compatible with MPEG 2, might be possible in a total of 10Mbit/s or less. In particular, this specification discusses a scenario in which HDTV could be broadcast via DTT using an MPEG compatible base layer of 4Mbit/s and an enhancement layer of 10Mbit/s.

Scalable coding would also be useful for Internet streaming, mobile video, "trickle down" scenarios for HDTV delivery and in new broadcast systems. The ideas discussed here may make these uses a practical proposition.

Embodiments of the present invention have been described with particular reference to the examples illustrated. However, it will be appreciated that variations and modifications may be made to the examples described within the scope of the present invention. For example, different motion estimation and compensation strategies may be used.

The base and enhanced layers are described above as mixed in the frequency domain. This is a preferable arrangement.

In an alternative arrangement, the base and enhanced (or enhancement layers) could be mixed in the spatial domain. However, this arrangement would be complex, difficult and would not work as well as mixing in the frequency domain.

The problem with spatial domain mixing is that motion compensation moves the noise around. So, one is not sure at any particular pixel what the noise should be. One could track the noise with the video. However, this would be complex. For frequency domain mixing, one would use a single quantiser for each frequency, and this applies across the whole picture. Therefore, the problem of noise moving with motion compensation in the spatial domain can be ignored in the frequency domain.

**Claims**

**1.** An encoder for encoding a signal carrying a representation of an image, the encoder comprising:

a first encoder for encoding a signal carrying a representation of an image at a first quality level;

a second encoder for encoding a signal carrying a representation of the image at a second quality level at greater quality than the first quality level; and

a mixer for mixing a factor of a signal carrying a representation of a prediction of the image at the first quality level and a factor of a signal carrying a representation of a prediction of the image at the second quality level to produce a mixed signal;

wherein the encoder is arranged such that:

the second encoder encodes the signal carrying a representation of the image at a second quality level based on the mixed signal; and

the factors are selected based on a measure of noise introduced by the first encoder and the second encoder when producing the predictions.

2. An encoder according to claim 1, wherein the first quality level is a first spatial resolution and the second quality level is a second spatial resolution greater than the first spatial resolution.

3. An encoder according to claim 1 or 2, wherein the mixer mixes a factor of a signal carrying a representation of a prediction of the image at the first quality level and a factor of a signal carrying a representation of a prediction of the image at the second quality level in the frequency domain.

4. An encoder according to any preceding claim, wherein the first encoder comprises a quantiser for quantising the coefficients of each subband of a signal representing the frequency domain of the image at a first quality level, the first quantiser comprising a plurality of bins, arranged such that in use, the numbers of coefficients which lie within a range of coefficient values included in each bin are output.

5. An encoder according to claim 4, wherein the size of the bins is proportional to a first encoder quantisation factor.

6. An encoder according to claim 5, wherein the measure of noise introduced by the first encoder is derived from the first encoder quantisation factor.

7. An encoder according to any preceding claim, wherein the second encoder comprises a quantiser for quantising the coefficients of each subband of a signal representing the frequency domain of the image at a second quality level, the second quantiser comprising a plurality of bins, arranged such that in use, the numbers of coefficients which lie within a range of coefficient values included in each bin are output.

8. An encoder according to claim 7, wherein the size of the bins is proportional to a second encoder quantisation factor.

9. An encoder according to claims 8, wherein the measure of noise introduced by the second encoder is derived from the second encoder quantisation factor.

10. An encoder according to any preceding claim, wherein the mixer produces a weighted sum output $\alpha X + (1-\alpha)Y$ where $\alpha$ is a weighting factor, X is the prediction of the image at the first quality level, and Y is the prediction of the image at the second quality level.

11. An encoder according to claim 10, wherein $\alpha$ depends on the first encoder quantisation factor and the second encoder quantisation factor.

12. An encoder according to claim 11, wherein the weighting factor

$$\alpha = \frac{1}{1 + \dfrac{\sigma_x^2}{\sigma_y^2}}$$

where $\sigma_x^2$ is the error between the signal carrying a representation of an image at a first quality level and a signal carrying a spatial domain representation of a prediction of the image at the first quality level and $\sigma_y^2$ is the error between the signal carrying a representation of an image at second quality level and a signal carrying a spatial domain representation of a prediction of the image at the second quality level.

**13.** An encoder according to claim 12, wherein $\sigma_x^2$ depends on the first encoder quantisation factor.

**14.** An encoder according to claim 12 or 13, wherein $\sigma_y^2$ depends on the second encoder quantisation factor.

**15.** An encoder according to any of claims 12 to 14, wherein $\alpha$ depends on the difference between the logarithm of the first encoder quantisation factor and the second encoder quantisation factor.

**16.** An encoder according to claim 15, comprising a look-up table in which a signal representing $\alpha$ is output from the look-up table when a signal representing the difference between the first encoder quantisation factor and the second encoder quantisation factor is input to the look-up table.

**17.** An encoder according to claim 11, wherein the weighting factor

$$\alpha = \frac{1}{1 + \dfrac{q_{base}^2}{q_{enhancement}^2}}$$

where $q_{base}$ is the first encoder quantisation factor and $q_{enhancement}$ is the second encoder quantisation factor.

**18.** An encoder according to any of claims 8 to 17, wherein the first encoder quantisation factor is different to the second encoder quantisation factor.

**19.** An encoder according to claim 18, wherein the first encoder quantisation factor is greater than the second encoder quantisation factor.

**20.** An encoder according to any preceding claim, wherein the encoder comprises a transformer arranged to perform a transform on the signal carrying a representation of an image in order to transform the signal into the frequency domain.

**21.** An encoder according to claim 20, wherein the transform is a wavelet transform.

**22.** An encoder according to claim 20 or 21, wherein the encoder comprises a reducer which reduces the magnitude of a portion of the frequency components to be encoded by the first encoder.

**23.** An encoder according to claim 22, wherein the reducer reduces the magnitude of at least some of the portion of the frequency components to be encoded by the first encoder to substantially zero

**24.** An encoder according to claim 23, wherein the reducer reduces the magnitude of all of the portion of the frequency components to be encoded by the first encoder to substantially zero.

**25.** An encoder according to any preceding claim, further comprising an output for outputting an encoded signal from the second encoder at a time before an encoded signal is output from the first encoder.

**26.** An encoder according to any preceding claim, further comprising a transmitter for transmitting an encoded signal output from the first encoder at an information transmission rate greater than that of the second encoder.

**27.** An encoder according to any preceding claim, wherein the second encoder is arranged to encode signals carrying a representation of an image at a second quality level input into the second encoder in the frequency domain.

**28.** An encoder according to any preceding claim, wherein the first encoder is arranged to encode signals carrying a representation of an image at a first quality level input into the first encoder in the spatial domain.

**29.** An encoder according to any of claims 1 to 27, wherein the first encoder is arranged to encode signals carrying a representation of an image at a first quality level input into the first encoder in the frequency domain.

**30.** An encoder according to claim 28, wherein the first encoder is an MPEG2 encoder.

**31.** An encoder according to any preceding claim, comprising memory for storing the measure of noise introduced by the first encoder and the second encoder.

**32.** An encoder according to any preceding claim, comprising a transmitter for transmitting the measure of noise introduced by the first encoder and the second encoder to a decoder.

**33.** A decoder for decoding signals carrying an encoded representation of an image, the decoder comprising:

a first decoder for decoding a signal carrying an encoded representation of an image at a first quality level;
a second decoder for decoding a signal carrying an encoded representation of the image at a second quality level at greater quality than the first quality level; and
a mixer for mixing a factor of a signal carrying a representation of a prediction of the image at the first quality level and a factor of a signal carrying a representation of a prediction of the image at the second quality level to produce a mixed signal;

wherein the decoder is arranged such that:

the second decoder decodes the signal carrying an encoded representation of the image at a second quality level based on the mixed signal; and
the factors are selected based on a measure of noise introduced when producing the predictions during encoding and which are available to the decoder.

**34.** A decoder according to claim 33, wherein the first quality level is a first spatial resolution and the second quality level is a second spatial resolution greater than the first spatial resolution.

**35.** A decoder according to claim 29 or 30, wherein the mixer mixes a factor of a signal carrying a representation of a prediction of the image at the first quality level and a factor of a signal carrying a representation of a prediction of the image at the second quality level in the frequency domain.

**36.** A decoder according to any of claims 33 to 35, wherein the measure of noise introduced by encoding is derived from encoder quantisation factors.

**37.** A decoder according to any of claims 33 to 36, wherein the mixer produces a weighted sum output $\alpha X + (1-\alpha)Y$ where $\alpha$ is a weighting factor, X is the prediction of the image at the first quality level, and Y is the prediction of the image at the second quality level.

**38.** A decoder according to claim 37, wherein $\alpha$ depends on a first encoder quantisation factor and a second encoder quantisation factor.

**39.** A decoder according to claim 33, wherein the weighting factor

$$\alpha = \frac{1}{1 + \dfrac{\sigma_x^2}{\sigma_y^2}}$$

where $\sigma_x^2$ is the error between the signal carrying a representation of an image at a first quality level and a signal carrying a spatial domain representation of a prediction of the image at the first quality level and $\sigma_y^2$ is the error between the signal carrying a representation of an image at second quality level and a signal carrying a spatial domain representation of a prediction of the image at the second quality level.

**40.** A decoder according to claim 39, wherein $\sigma_x^2$ depends on the first encoder quantisation factor.

**41.** A decoder according to claim 39 or 40, wherein $\sigma_y^2$ depends on the second encoder quantisation factor.

**42.** A decoder according to any of claims 37 to 41, wherein $\alpha$ depends on the difference between the logarithm of the first encoder quantisation factor and the second encoder quantisation factor.

**43.** A decoder according to claim 42, comprising a look-up table in which a signal representing $\alpha$ is output from the look-up table when a signal representing the difference between the first encoder quantisation factor and the second encoder quantisation factor is input to the look-up table.

**44.** A decoder according to claim 43, wherein the weighting factor

$$\alpha = \cfrac{1}{1 + \cfrac{q_{base}^2}{q_{enhancement}^2}}$$

where $q_{base}$ is the first encoder quantisation factor and $q_{enhancement}$ is the second encoder quantisation factor.

**45.** A decoder according to any of claims 37 to 44, wherein the first encoder quantisation factor is different to the second encoder quantisation factor.

**46.** A decoder according to claim 45, wherein the first encoder quantisation factor is greater than the second encoder quantisation factor.

**47.** A decoder according to any of claims 33 to 46, further comprising a receiver for receiving an encoded signal from the second encoder at a time before receiving an encoded signal from the first encoder.

**48.** A decoder according to any of claims 33 to 47, further comprising a receiver for receiving an encoded signal output from the first encoder at an information transmission rate greater than that of the second encoder.

**49.** A decoder according to any of claims 33 to 48, wherein the first decoder is an MPEG2 decoder.

**50.** A decoder according to any of claims 33 to 49, further comprising a receiver for receiving the measure of noise introduced by encoding.

**51.** A decoder according to any of claims 33 to 50, further comprising memory for storing the measure of noise introduced by encoding.

**52.** A method of encoding a signal carrying a representation of an image, the method comprising:

encoding a signal carrying a representation of an image at a first quality level;
mixing a factor of a signal carrying a representation of a prediction of the image at the first quality level and a factor of a signal carrying a representation of a prediction of the image at the second quality level to produce a mixed signal;
encoding the signal carrying a representation of the image at a second quality level based on the mixed signal; and
selecting the factors based on a measure of noise introduced by the first encoder and the second encoder when producing the predictions.

53. A method of encoding according to claim 52, wherein the first quality level is a first spatial resolution and the second quality level is a second spatial resolution greater than the first spatial resolution.

54. A method of encoding according to claim 52 or 53, comprising mixing a factor of a signal carrying a representation of a prediction of the image at the first quality level and a factor of a signal carrying a representation of a prediction of the image at the second quality level in the frequency domain.

55. A method of encoding according to any of claims 52 to 54, wherein encoding a signal carrying a representation of an image at a first quality level comprises quantising the coefficients of each subband of a signal representing the frequency domain of the image at a first quality level into bins, and outputting the numbers of coefficients which lie within a range of coefficient values included in each bin.

56. A method of encoding according to claim 55, wherein the size of the bins is proportional to a first encoder quantisation factor.

57. A method of encoding according to claim 56, wherein the measure of noise introduced by the first encoder is derived from the first encoder quantisation factor.

58. A method of encoding according to any of claims 52 to 57, wherein encoding a signal carrying a representation of an image at a second quality level comprises quantising the coefficients of each subband of a signal representing the frequency domain of the image at a second quality level into bins, and outputting the numbers of coefficients which lie within a range of coefficient values included in each bin.

59. A method of encoding according to claim 58, wherein the size of the bins is proportional to a second encoder quantisation factor.

60. A method of encoding according to claims 59, wherein the measure of noise introduced by the second encoder is derived from the second encoder quantisation factor.

61. A method of encoding according to any of claims 52 to 60, wherein the mixing produces a weighted sum output $\alpha X + (1-\alpha)Y$ where $\alpha$ is a weighting factor, X is the prediction of the image at the first quality level, and Y is the prediction of the image at the second quality level.

62. A method of encoding according to claim 61, wherein $\alpha$ depends on the first encoder quantisation factor and the second encoder quantisation factor.

63. A method of encoding according to claim 62, wherein the weighting factor

$$\alpha = \frac{1}{1 + \dfrac{\sigma_x^2}{\sigma_y^2}}$$

where $\sigma_x^2$ is the error between the signal carrying a representation of an image at a first quality level and a signal carrying a spatial domain representation of a prediction of the image at the first quality level and $\sigma_y^2$ is the error between the signal carrying a representation of an image at second quality level and a signal carrying a spatial domain representation of a prediction of the image at the second quality level.

64. A method of encoding according to claim 63, wherein $\sigma_x^2$ depends on the first encoder quantisation factor.

65. A method of encoding according to claim 63 or 64, wherein $\sigma_y^2$ depends on the second encoder quantisation factor.

**66.** A method of encoding according to any of claims 63 to 65, wherein $\alpha$ depends on the difference between the logarithm of the first encoder quantisation factor and the second encoder quantisation factor.

**67.** A method of encoding according to claim 66, comprising outputting a signal representing $\alpha$ from a look-up table when a signal representing the difference between the first encoder quantisation factor and the second encoder quantisation factor is input to the look-up table.

**68.** A method of encoding according to claim 62, wherein the weighting factor

$$\alpha = \frac{1}{1 + \dfrac{q_{base}^2}{q_{enhancement}^2}}$$

where $q_{base}$ is the first encoder quantisation factor and $q_{enhancement}$ is the second encoder quantisation factor.

**69.** A method of encoding according to any of claims 59 to 68, wherein the first encoder quantisation factor is different to the second encoder quantisation factor.

**70.** A method of encoding according to claim 60, wherein the first encoder quantisation factor is greater than the second encoder quantisation factor.

**71.** A method of encoding according to any of claims 52 to 70, wherein encoding comprises transforming the signal carrying a representation of an image into the frequency domain.

**72.** A method of encoding according to claim 71, wherein the transforming is a wavelet transforming.

**73.** A method of encoding according to claim 71 or 72, wherein encoding comprises reducing the magnitude of a portion of the frequency components of the signal carrying a representation of an image at a first quality level.

**74.** A method of encoding according to claim 73, wherein encoding comprises reducing the magnitude of a portion of the frequency components of the signal carrying a representation of an image at a first quality level to substantially zero.

**75.** A method of encoding according to claim 74, wherein encoding comprises reducing the magnitude of all of the portion of the frequency components of the signal carrying a representation of an image at a first quality level to substantially zero.

**76.** A method of encoding according to any of claims 52 to 75, further comprising outputting an encoded signal carrying a representation of the image at a second quality level before outputting an encoded signal carrying a representation of the image at a first quality level.

**77.** A method of encoding according to any of claims 52 to 76, further comprising transmitting an encoded signal carrying a representation of an image at a first quality level at an information transmission rate greater than that of the encoded signal carrying a representation of an image at a second quality level.

**78.** A method of encoding according to any of claims 52 to 77, wherein encoding a signal carrying a representation of the image at a second quality level comprises encoding signals carrying a representation of an image at a second quality level in the frequency domain.

**79.** A method of encoding according to any of claims 52 to 78, wherein encoding a signal carrying a representation of the image at a first quality level comprises encoding signals carrying a representation of an image at a first quality level in the spatial domain.

**80.** A method of encoding according to any of claims 52 to 78, wherein encoding a signal carrying a representation of the image at a first quality level comprises encoding signals carrying a representation of an image at a first quality level in the frequency domain.

**81.** A method of encoding according to claim 79, wherein encoding a signal carrying a representation of the image at a first quality level comprises encoding signals carrying a representation of an image at a first quality level in the spatial domain using the MPEG2 standard.

**82.** A method of encoding according to any of claims 52 to 81, comprising storing the measure of noise introduced by the first encoder and the second encoder when producing the predictions.

**83.** A method of encoding according to any of claims 52 to 82, comprising transmitting the measure of noise introduced by the first encoder and the second encoder when producing the predictions to a decoder.

**84.** A method of decoding a signal carrying an encoded representation of an image, the method comprising:

decoding a signal carrying an encoded representation of an image at a first quality level;
mixing a factor of a signal carrying a representation of a prediction of the image at the first quality level and a factor of a signal carrying a representation of a prediction of the image at a second quality level greater quality than the first quality level to produce a mixed signal;
decoding a signal carrying an encoded representation of the image at a second quality level based on the mixed signal; and
selecting the factors based on a measure of noise introduced when producing the predictions during encoding and which are available to the decoder.

**85.** A method of decoding according to claim 84, wherein the first quality level is a first spatial resolution and the second quality level is a second spatial resolution greater than the first spatial resolution.

**86.** A method of decoding according to claim 84 or 85, comprising mixing a factor of a signal carrying a representation of a prediction of the image at the first quality level and a factor of a signal carrying a representation of a prediction of the image at a second quality level in the frequency domain.

**87.** A method of decoding according to any of claims 84 to 86, wherein the measure of noise introduced when producing the predictions is derived from encoder quantisation factors.

**88.** A method of decoding according to any of claims 84 to 87, wherein the mixing produces a weighted sum output $\alpha X$ + $(1-\alpha)Y$ where $\alpha$ is a weighting factor, X is the prediction of the image at the first quality level, and Y is the prediction of the image at the second quality level.

**89.** A method of decoding according to claim 88, wherein $\alpha$ depends on a first encoder quantisation factor and a second encoder quantisation factor.

**90.** A method of decoding according to claim 89, wherein the weighting factor

$$\alpha = \frac{1}{1 + \dfrac{\sigma_x^2}{\sigma_y^2}}$$

where $\sigma_x^2$ is the error between the signal carrying a representation of an image at a first quality level and a signal carrying a spatial domain representation of a prediction of the image at the first quality level and $\sigma_y^2$ is the error between the signal carrying a representation of an image at second quality level and a signal carrying a spatial domain representation of a prediction of the image at the second quality level.

**91.** A method of decoding according to claim 90, wherein $\sigma_x^2$ depends on the first encoder quantisation factor.

**92.** A method of decoding according to claim 90 or 91, wherein $\sigma_y^2$ depends on the second encoder quantisation factor.

**93.** A method of decoding according to any of claims 88 to 92, wherein $\alpha$ depends on the difference between the logarithm of the first encoder quantisation factor and the second encoder quantisation factor.

**94.** A method of decoding according to claim 93, comprising outputting a signal representing $\alpha$ from a look-up table when a signal representing the difference between the first encoder quantisation factor and the second encoder quantisation factor is input to the look-up table.

**95.** A method of decoding according to claim 89, wherein the weighting factor

$$\alpha = \frac{1}{1 + \frac{q_{base}^2}{q_{enhancement}^2}}$$

where $q_{base}$ is the first encoder quantisation factor and $q_{enhancement}$ is the second encoder quantisation factor.

**96.** A method of decoding according to any of claims 84 to 95, wherein the first encoder quantisation factor is different to the second encoder quantisation factor.

**97.** A method of decoding according to claim 96, wherein the first encoder quantisation factor is greater than the second encoder quantisation factor.

**98.** A method of decoding according to any of claims 84 to 97, further comprising receiving a signal carrying an encoded representation of the image at a second quality level before receiving a signal carrying an encoded representation of an image at a first quality level.

**99.** A method of decoding according to any of claims 84 to 98, further comprising receiving a signal carrying an encoded representation of an image at a first quality level at an information transmission rate greater than that of the second encoder.

**100.** A method of decoding according to any of claims 84 to 99, wherein decoding a signal carrying an encoded representation of an image at a first quality level comprises decoding signals carrying an encoded representation of an image at a first quality level in the spatial domain using the MPEG2 standard.

**101.** A method of decoding according to any of claims 84 to 100, further comprising receiving the measure of noise introduced by encoding.

**102.** A method of decoding according to any of claims 84 to 101, further comprising storing the measure of noise introduced by encoding.

**103.** A system comprising the encoder of any of claims 1 to 32 and the decoder of any of claims 33 to 51.

**104.** A method of encoding and decoding comprising the method of encoding of any of claims 52 to 83 and the method of decoding of any of claims 84 to 102.

**105.** An encoder for encoding a signal carrying a representation of an image, the encoder comprising:

a first encoder for encoding a signal carrying a representation of an image at a first quality level;
a second encoder for encoding a signal carrying a representation of the image at a second quality level at greater quality than the first quality level; and
a mixer for producing a weighted sum output $\alpha X + (1-\alpha)Y$ where $\alpha$ is a weighting factor, X is a prediction of the image in the frequency domain at the first quality level, and Y is a prediction of the image in the frequency domain at the second quality level;

wherein the encoder is arranged such that:

the second encoder encodes the signal carrying a representation of the image at a second quality level based on the weighted sum output; and

$$\alpha = \frac{1}{1 + \dfrac{q^2_{base}}{q^2_{enhancement}}}$$

where $q_{base}$ is a first encoder quantisation factor and $q_{enhancement}$ is a second encoder quantisation factor.

106. A decoder for decoding signals carrying an encoded representation of an image, the decoder comprising:

a first decoder for decoding a signal carrying an encoded representation of an image at a first quality level;
a second decoder for decoding a signal carrying an encoded representation of the image at a second quality level at greater quality than the first quality level; and
a mixer for producing a weighted sum output $\alpha X + (1-\alpha)Y$ where $\alpha$ is a weighting factor, X is a prediction of the image in the frequency domain at the first quality level, and Y is a prediction of the image in the frequency domain at the second quality level;

wherein the decoder is arranged such that:

the second decoder decodes the signal carrying an encoded representation of the image at a second quality level based on the weighted sum output; and

$$\alpha = \frac{1}{1 + \dfrac{q^2_{base}}{q^2_{enhancement}}}$$

where $q_{base}$ is a first encoder quantisation factor and $q_{enhancement}$ is a second encoder quantisation factor.

107. A method of encoding a signal carrying a representation of an image, the method comprising:

encoding a signal carrying a representation of an image at a first quality level;
producing a weighted sum output $\alpha X + (1-\alpha)Y$ where $\alpha$ is a weighting factor, X is a prediction of the image in the frequency domain at a first quality level, and Y is a prediction of the image in the frequency domain at the second quality level; and
encoding a signal carrying a representation of an image at a second quality level at a greater quality than the first quality level based on the weighted sum output; wherein

$$\alpha = \frac{1}{1 + \dfrac{q^2_{base}}{q^2_{enhancement}}}$$

where $q_{base}$ is a first encoder quantisation factor and $q_{enhancement}$ is a second encoder quantisation factor.

108. A method of decoding a signal carrying an encoded representation of an image, the method comprising:

decoding a signal carrying an encoded representation of an image at a first quality level;

producing a weighted sum output αX + (1-α)Y where α is a weighting factor, X is a prediction of the image in the frequency domain at a first quality level, and Y is a prediction of the image in the frequency domain at the second quality level; and

decoding a signal carrying a representation of an image at a second quality level at a greater quality than the first quality level based on the weighted sum output; wherein

$$\alpha = \frac{1}{1 + \dfrac{q_{base}^{2}}{q_{enhancement}^{2}}}$$

where $q_{base}$ is a first encoder quantisation factor and $q_{enhancement}$ is a second encoder quantisation factor.

109. An encoder for encoding a signal carrying a representation of an image, the encoder comprising:

a first encoder for encoding a signal carrying a representation of an image at a first quality level; and
a second encoder for encoding a signal carrying a representation of the image at a second quality level at greater quality than the first quality level;
the encoder being arranged such that the second encoder encodes the signal carrying a representation of the image at a second quality level based on a signal carrying a frequency domain representation of a prediction of the image at both the first quality level and at the second quality level.

110. A decoder for decoding signals carrying an encoded representation of an image, the decoder comprising:

a first decoder for decoding a signal carrying an encoded representation of an image at a first quality level; and
a second decoder for decoding a signal carrying an encoded representation of the image at a second quality level at greater quality than the first quality level;
the decoder being arranged such that the second decoder decodes the signal carrying an encoded representation of the image at a second quality level based on a signal carrying a frequency domain representation of a prediction of the image at both the first quality level and at the second quality level.

111. A method of encoding a signal carrying a representation of an image, the method comprising:

encoding a signal carrying a representation of an image at a first quality level; and
encoding a signal carrying a representation of the image at a second quality level at greater quality than the first quality level;

wherein the signal carrying a representation of the image at a second quality level is encoded based on a signal carrying a frequency domain representation of a prediction of the image at both the first quality level and at the second quality level.

112. A method of decoding signals carrying an encoded representation of an image, the method comprising:

decoding a signal carrying an encoded representation of an image at a first quality level; and
decoding a signal carrying an encoded representation of the image at a second quality level at greater quality than the first quality level;

wherein the signal carrying an encoded representation of the image at a second quality level is decoded based on a signal carrying a frequency domain representation of a prediction of the image at both the first quality level and at the second quality level.

EP 1 806 931 A2

PRIOR ART

FIGURE 1

PRIOR ART                    FIGURE 2

FIGURE 3

FIGURE 4

EP 1 806 931 A2

Figure 9

Figure 31

Figure 5

Figure 6

**Figure 7**

**Figure 8**

FIGURE 10

PRIOR ART

Figure 11

PRIOR ART

Figure 12

FIGURE 13

-3Δ  -2Δ  -Δ  0  Δ  2Δ  3Δ

a) Uniform quantiser with QF Δ

-7Δ/2  -5Δ/2  -3Δ/2  0  3Δ/2  5Δ/2  7Δ/2

b) Dead-zone quantiser with QF Δ

FIGURE 20

X signal component

FIGURE 14

Y signal component

FIGURE 15

Rate-distortion curve

FIGURE 16

FIGURE 17

Subband coding

Wavelet transform → RDO quantisation → Entropy coding

Subband coding

RDO quantisation → Entropy coding

FIGURE 18

FIGURE 19

FIGURE 21

```
        U(0)    =    1
        U(1)    =    0    1
        U(2)    =    0    0    1
        U(3)    =    0    0    0    1
        U(4)    =    0    0    0    0    1
        U(5)    =    0    0    0    0    0    1
        U(6)    =    0    0    0    0    0    0    1
    Bins:            1    2    3    4    5    6    7
```

FIGURE 22

FIGURE 23

FIGURE 24

MB_SPLIT=0    MB_SPLIT=1    MB_SPLIT=2

FIGURE 25

FIGURE 26

MB_SPLIT=0          MB_SPLIT=1

FIGURE 27

FIGURE 28

MB_SPLIT=0      MB_SPLIT=1,
                MB_CBMODE=0

FIGURE 29

FIGURE 30

**Figure 32**

FIGURE 33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.N. TUDOR.** MPEG-2 Video Compression. *IEE Electronics & Communications Engineering Journal,* December 1995, 257-264
- Digital Television. John Wiley and Sons Ltd, 30 April 1990, 287-374
- Television Standards Conversion. Ph.D. Thesis for Department of Electronic and Electrical Engineering, 1992, 46-98